(19) Europäisches Patentamt
European Patent Office
Office européen des brevets

(11) **EP 3 710 194 B1**

(12) **EUROPÄISCHE PATENTSCHRIFT**

(45) Veröffentlichungstag und Bekanntmachung des Hinweises auf die Patenterteilung:
**03.01.2024 Patentblatt 2024/01**

(21) Anmeldenummer: **19736966.3**

(22) Anmeldetag: **14.06.2019**

(51) Internationale Patentklassifikation (IPC):
**B23G 5/20** *(2006.01)*

(52) Gemeinsame Patentklassifikation (CPC):
**B23G 5/20**

(86) Internationale Anmeldenummer:
**PCT/DE2019/100549**

(87) Internationale Veröffentlichungsnummer:
**WO 2020/007400 (09.01.2020 Gazette 2020/02)**

(54) **WERKZEUG UND VERFAHREN ZUM ERZEUGEN EINES GEWINDES, INSBESONDERE EINES INNENGEWINDES**

TOOL AND METHOD FOR FORMING A THREAD, IN PARTICULAR AN INTERNAL THREAD

OUTIL ET PROCÉDÉ PERMETTANT DE PRODUIRE UN FILETAGE, EN PARTICULIER UN FILETAGE INTÉRIEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.07.2018 DE 102018115986**

(43) Veröffentlichungstag der Anmeldung:
**23.09.2020 Patentblatt 2020/39**

(73) Patentinhaber: **EMUGE-Werk Richard Glimpel GmbH & Co.KG Fabrik für Präzisionswerkzeuge**
**91207 Lauf (DE)**

(72) Erfinder:
• **GLIMPEL, Helmut**
**91207 Lauf (DE)**

• **HECHTLE, Dietmar**
**91257 Pegnitz (DE)**
• **FUNK, Thomas**
**91257 Pegnitz (DE)**

(74) Vertreter: **Schröer, Gernot H.**
**Meissner Bolte Patentanwälte**
**Rechtsanwälte Partnerschaft mbB**
**Bankgasse 3**
**90402 Nürnberg (DE)**

(56) Entgegenhaltungen:
**DE-A1-102016 008 478    US-A1- 2010 221 077**
**US-A1- 2011 076 107    US-A1- 2014 212 234**

**EP 3 710 194 B1**

**Beschreibung**

Die Erfindung betrifft ein Werkzeug und Verfahren jeweils zum Erzeugen eines Gewindes, insbesondere eines Innengewindes.

Ein Gewinde weist einen schraubenlinien- oder helixförmigen Gewindegang mit konstanter Gewindesteigung auf und kann als Innengewinde oder als Außengewinde erzeugt werden. Zum Erzeugen eines Innengewindes wird in aller Regel zunächst ein Kernloch (oder: eine Kernbohrung) im Werkstück erzeugt, das ein Sackloch oder auch ein Durchgangsloch sein kann, und dann in der Innenwandung des Kernloches der Gewindegang erzeugt. Das Kernloch mit darin erzeugtem Gewinde wird auch als Gewindeloch bezeichnet.

Zur Gewindeerzeugung oder Gewindenachbearbeitung sind sowohl spanabhebende als auch spanlose Verfahren und Gewindewerkzeuge bekannt. Spanabhebende Gewindeerzeugung beruht auf Materialabtrag des Materials des Werkstücks im Bereich des Gewindeganges. Spanlose Gewindeerzeugung beruht auf einer Umformung des Werkstücks und Erzeugung des Gewindeganges in dem Werkstück durch Druck. Einen Überblick über im Einsatz befindliche Gewindeerzeugungswerkzeuge und Arbeitsverfahren gibt das Handbuch der Gewindetechnik und Frästechnik, Herausgeber: EMUGE-FRANKEN, Verlag: Publicis Corporate Publishing, Erscheinungsjahr: 2004 (ISBN 3-89578-232-7), im Folgenden nur als "EMUGE-Handbuch" bezeichnet.

Unter die spanabhebende oder spanende Gewindeerzeugung fallen die Gewindebohrer (vgl. EMUGE-Handbuch, Kapitel 8, Seiten 181 bis 298) und die Gewindefräser (vgl. EMUGE-Handbuch, Kapitel 10, Seiten 325 bis 372) sowie, nur für Außengewinde, die Schneideisen (vgl. EMUGE-Handbuch, Kapitel 11, Seiten 373 bis 404).

Ein Gewindebohrer ist ein Gewindeschneidwerkzeug, dessen Schneiden oder Gewindeschneidzähne entlang eines Außengewindes unter der Gewindesteigung des zu erzeugenden Gewindes angeordnet sind. Beim Erzeugen des Gewindes wird der Gewindebohrer mit zur Werkzeugachse axialem Vorschub und unter Drehung um seine Werkzeugachse mit von der axialen Vorschubgeschwindigkeit entsprechend der Gewindesteigung abhängiger Drehgeschwindigkeit in ein zylindrisches Kernloch in einem Werkstück bewegt, wobei die Werkzeugachse des Gewindebohrers koaxial zur Mittelachse des Kernloches ausgerichtet wird und seine Schneiden permanent mit dem Werkstück an der Kernlochwandung in Eingriff sind (kontinuierlicher Schnitt), so dass ein durchgehender Gewindegang an der Kernlochwandung entsteht. Typische Geometrien eines Gewindebohrers mit dem üblichen Anschnittsbereich sind im EMUGE-Handbuch, Kapitel 8, Seiten 250 und 251 und 284 und 285, beschrieben. Die Gewindeschneidzähne weisen in der Schneidrichtung im Querschnitt senkrecht zur Helix am Außenrand ein Schneidprofil oder Wirkprofil und nach innen anschließend eine Spanfläche auf und am entgegengesetzt zur Schneidrichtung anschließenden Zahnrücken Freiflächen oder Freiwinkel auf, so dass dort keine Berührung und damit keine Reibung mit dem Werkstück stattfindet. Eine typische Verteilung der einzelnen Gewindewirkprofile der im Anschnittsbereich schräg angeschliffenen Gewindeschneidzähne mit der entsprechenden Spanaufteilung ist im EMUGE-Handbuch, Kapitel 9, Seite 322, gezeigt.

Der Gewindeschneidvorgang mit einem Gewindebohrer ist zusammen mit einem typischen Drehmomentverlauf im EMUGE-Handbuch, Kapitel 8, Seite 255, erläutert. Nach dem Schneidprozess des Gewindebohrers bis zum Eingriff aller Anschnittzähne wird die Maschinenspindel abgebremst bis zum Stillstand. Nun wird der Rücklauf oder die Reversierbewegung gestartet und der Zahnrücken des beim Gewindeschneiden vorausgehenden Gewindeschneidzahnes schert den noch in der Bohrung stehenden Span an seiner freien Rückseite ab und quetscht die Spanwurzel zwischen der Freifläche und der Lochwandung zurück.

Unter die spanlosen Gewindeerzeugungswerkzeuge fallen die sogenannten Gewindefurcher (vgl. EMUGE-Handbuch, Kapitel 9, Seiten 299 bis 324) und, nur für Außengewinde, die Gewindewalzwerkzeuge (vgl. EMUGE-Handbuch, Kapitel 11, Seiten 373 bis 404)

Gewindefurcher sind Gewindewerkzeuge mit einem annähernd spiral- oder schraubenförmig umlaufenden Gewindeprofil, entlang dem mehrere Drückstollen (auch als Formzähne, Furchzähne oder Formkeile bezeichnet) angeordnet sind, die durch zueinander versetzte weiter nach außen ragende und im Allgemeinen abgerundete Polygon-Eckbereiche eines annähernd polygonalen Querschnittes des Gewindefurchers gebildet sind. Beim Erzeugen des Gewindes wird der Gewindefurcher ähnlich wie der Gewindebohrer mit zur Werkzeugachse axialem Vorschub und unter Drehung um seine Werkzeugachse in ein zylindrisches Kernloch in einem Werkstück bewegt, wobei die Werkzeugachse des Gewindebohrers koaxial zur Mittelachse des Kernloches ausgerichtet wird. Die Drehgeschwindigkeit und die axiale Vorschubgeschwindigkeit werden entsprechend der Gewindesteigung aufeinander abgestimmt. Die Drückstollen des Gewindefurchers sind permanent mit dem Werkstück an der Kernlochwandung in Eingriff und drücken den Gewindegang durch plastische Verformung in die Kernlochwandung, so dass ein durchgehender Gewindegang an der Kernlochwandung entsteht. Typische Geometrien eines Gewindefurchers mit dem üblichen Anfurchbereich sind im EMUGE-Handbuch, Kapitel 9, Seiten 308 und 309 beschrieben. Eine typische Verteilung der einzelnen Gewindewirkprofile der im Anfurchbereich ansteigenden Gewindefurchzähne ist im EMUGE-Handbuch, Kapitel 9, Seite 322, gezeigt. Der Gewindefurchvorgang mit einem Gewindefurcher ist zusammen mit einem typischen Drehmomentverlauf im EMUGE-Handbuch, Kapitel 9, Seite 310, erläutert.

Gewindebohrer und Gewindefurcher arbeiten mit einer ausschließlich axialen Voschub- oder Arbeitsbewegung mit gemäß der Gewindesteigung synchronisierter Drehbewegung um die eigene Werkzeugachse. Der Drehsinn von Gewindebohrer und Gewindefurcher beim Erzeugen des Gewindes entspricht dem Windungssinn des zu erzeugende Gewindes. Wenn der Gewindegang erzeugt ist oder am Ende der Erzeugung des Gewindeganges wird das Werkzeug abgebremst und an einem Umkehrpunkt zum Stillstand gebracht. Die Abbremsung vor dem Erreichen des Reversier- oder Umkehrpunkts wird normalerweise durch gemäß der konstanten Gewindesteigung synchronisierte Reduzierung von axialer Vorschubgeschwindigkeit und Drehzahl bis auf jeweils einen Wert 0 bewirkt. Nun wird zum Zurückholen des Werkzeugs aus dem Werkstück eine Rückwärts- oder Reversierbewegung eingeleitet, bei der die axiale Vorschubrichtung und die Drehrichtung genau entgegengesetzt zur Arbeitsbewegung sind und die axialen Vorschubbewegung und Drehbewegung wieder gemäß der Gewindesteigung synchronisiert sind, um das Gewinde nicht zu beschädigen.

Grundlagen zu dem Programmaufbau für CNC-Maschinen hinsichtlich Gewindeerzeugung sind in EMUGE-Handbuch, Kapitel 8, Seite 281, *und* Kapitel 10, Seiten 357 bis 359 angegeben.

Das Kernlochbohren wird im EMUGE-Handbuch, Kapitel 7, Seiten 161 bis 179 beschrieben.

Ferner sind in verschiedenen Ausführungen Kombinationswerkzeuge bekannt, mit denen mit demselben Werkzeug in einem Arbeitsschritt ein Gewindeloch im Vollmaterial des Werkstückes, also ohne vorherige Bohrung eines Kernloches, erzeugt wird.

Hierunter zählen die ausschließlich spanabhebend arbeitenden Bohrgewindefräser (BGF) (vgl. EMUGE-Handbuch, Kapitel 10, Seite 354) und der sogenannte Zirkularbohrgewindefräser (ZBGF) ((vgl. EMUGE-Handbuch, Kapitel 10, Seite 355).

Unterschiedliche Kombinationen von Bohrbereich und Gewindeerzeugungsbereich in einem Kombinationswerkzeug zur Erzeugung eines Gewindeloches sind auch aus der DE 10 2005 022 503 A1 bekannt, unter anderem auch die Kombination eines axial arbeitenden Bohrbereichs und eines axial arbeitenden Gewindefurchbereiches in einem Werkzeug.

Aus der DE 10 2016 008 478 A1 ist ein weiteres Kombinationswerkzeug bekannt, mit dem in einem Arbeitsschritt ein Gewindeloch in einem Werkstück allein durch eine axiale Arbeitsbewegung erzeugt wird. Mit diesem Kombinationswerkzeug, das als Einschuss-Gewindebohr-Werkzeug bezeichnet wird, werden die Kernlochbohrung und das Innengewinde-Schneiden in einem gemeinsamen Werkzeughub durchgeführt. Das Einschuss-Gewindebohr-Werkzeug weist an seiner Bohrerspitze eine Hauptschneide und ein in einer Gewindebohr-Richtung nacheilendes Gewindeprofil mit zumindest einem Gewinde-Schneidzahn auf.

In diesem bekannten Verfahren erfolgt ein Gewindebohr-Hub und anschließend ein gegenläufiger Reversier-Hub. Im Gewindebohr-Hub erzeugt einerseits die Hauptschneide die Kernlochbohrung und andererseits das Gewindeprofil das Innengewinde an der Innenwandung der Kernlochbohrung bis zum Erreichen einer nutzbaren Soll-Gewindetiefe. Der Gewindebohr-Hub wird bei einem Gewindebohr-Vorschub mit dazu synchronisierter Drehzahl des Gewindebohr-Werkzeugs durchgeführt. In einem nachfolgenden gegenläufigen Reversier-Hub wird das Gewindebohr-Werkzeug in einer Reversier-Richtung aus der Gewindebohrung herausgeführt, und zwar mit entgegengesetztem Reversier-Vorschub und damit synchronisierter Reversier-Drehzahl. Dadurch wird gewährleistet, dass das Gewindeprofil des Gewindebohr-Werkzeugs im Gewindegang des Innengewindes belastungsfrei bewegt wird.

In einer in DE 10 2016 008 478 A1 als Stand der Technik bezeichneten Variante wird zum Ende des Gewindebohr-Hubes der Gewindebohr-Prozess verlangsamt, das heißt der Gewindebohr-Vorschub mit damit (gemäß der gleich bleibenden Gewindesteigung) synchronisierter Gewindebohr-Drehzahl bis auf 0 reduziert. Diese Verzögerung des Gewindeschneid-Prozesses bis auf eine Gewindebohr-Drehzahl von Null führe jedoch im Stand der Technik zu einer übermäßig großen Schneidbelastung des Gewindeprofils, die zu einem Ausbruch der Schneidzähne oder zu einem Werkzeugbruch führen könne.

Um die Werkzeug-Belastung zu reduzieren, wird nun stattdessen in DE 10 2016 008 478 A1 vorgeschlagen, dass nach dem Gewindebohr-Hub nicht unmittelbar der Reversier-Hub folgt, sondern vielmehr zuvor ein Nutformschritt oder Nutform-Hub erfolgt, bei dem eine an das Innengewinde anschließende Umlaufnut ohne Gewindesteigung gebildet wird, in der das Gewindeprofil des Gewindebohr-Werkzeuges belastungsfrei drehen kann. Das Gewindebohr-Werkzeug wird über die Soll-Gewindetiefe für den Gewindebohr-Hub hinaus bis zum Erreichen einer Soll-Bohrungstiefe bewegt, und zwar mit einem Nutform-Vorschub sowie einer Nutform-Drehzahl, die zueinander nicht synchronisiert sind und unterschiedlich zum Gewindebohr-Vorschub und zur Gewindebohr-Drehzahl sind. Auf diese Weise könne die Gewindebohr-Drehzahl bis auf 0 reduziert werden, ohne dass es aufgrund von übermäßig großer Schneidenbelastung zu einem Werkzeugbruch oder zu einem Ausbrechen des Gewindeprofils kommt. Die Umlaufnut wird während des Nutform-Hubes mit Hilfe der Hauptschneide sowie des Gewinde-Schneidzahns (oder allgemeiner Gewindezahn) des Gewindeprofils am Gewindebohr-Werkzeug erzeugt. Bei Erreichen der Soll-Bohrungstiefe wird der Nutform-Vorschub auf 0 reduziert. Gleichzeitig wird auch die Nutform-Drehzahl auf 0 reduziert, um die für den Reversier-Hub erforderliche Drehrichtungsumkehr zu ermöglichen.

Beim Start des Reversier-Hubes wird das bekannte Gewindebohr-Werkzeug so angesteuert, dass der Gewinde-Schneidzahn belastungsfrei in den Gewindegang-Auslauf eingefahren werden kann, der in die Umlaufnut einmündet. Wie das allerdings geschehen soll, ist in DE 10 2016 008 478 A1 nicht offenbart.

Anschließend wird das Gewindebohr-Werkzeug in einer zur Gewindebohr-Richtung gegenläufigen Reversier-Richtung aus der Gewindebohrung herausgeführt, und zwar mit einem Reversier-Vorschub sowie damit synchronisierter Reversier-Drehzahl, wodurch der Gewinde-Schneidzahn ohne Materialabtrag aus der Gewindebohrung herausgedreht werden kann.

Während der Durchführung des Gewindebohr-Hubes, des Nutform-Hubes und des Reversier-Hubes bleiben die Kernbohrungs-Längsachse und die Rotationsachse des Gewindebohr-Werkzeuges durchgängig koaxial zueinander ausgerichtet.

Das Gewindebohr-Werkzeug gemäß DE 10 2016 008 478 A1 weist einen Spannschaft und einen daran anschließenden Gewindebohr-Körper auf, entlang dessen Längsachse sich zumindest eine Spannut bis zu einer stirnseitigen Hauptschneide an der Bohrerspitze erstreckt. An der stirnseitigen Hauptschneide laufen eine die Spannut begrenzende Spanfläche und eine stirnseitige Freifläche der Bohrerspitze zusammen. In der Werkzeug-Umfangrichtung betrachtet kann die Spannut durch zumindest einen Bohrersteg begrenzt sein. Die Spanfläche der Spannut kann unter Bildung einer Nebenschneide in eine außenumfangsseitige Rückenfläche des Bohrerstegs übergehen.

An der außenumfangsseitigen Rückenfläche des Bohrersteges kann das Gewindeprofil mit zumindest einem Gewinde-Schneidzahn ausgebildet sein. Die Zahnhöhe des Schneidzahns ist in der Radialrichtung so bemessen, dass der Schneidzahn die Hauptschneide in der Radialrichtung nach außen um einen Radialversatz überragt. Gegebenenfalls kann der Schneidzahn in der Radialrichtung nach außen flächenbündig die Hauptschneide verlängern. Alternativ und/oder zusätzlich kann der Schneidzahn in der Axialrichtung betrachtet um einen Axialversatz hinter der Hauptschneide angeordnet sein.

In einer bevorzugten Ausführungsvariante kann das Gewindebohr-Werkzeug gemäß DE 10 2016 008 478 A1 drei Bohrerstege aufweisen. Jeder dieser Bohrerstege ist zumindest mit einem Gewinde-Schneidzahn ausgebildet. Es können in der Bohrer-Umfangsrichtung hintereinander ein Vorschneidzahn, ein Mittelschneidzahn und ein Fertigbearbeitungszahn unterschiedlicher Schneidengeometrie am Bohrer ausgebildet sein. Die Schneidzähne sind in der Axialrichtung zueinander versetzt am Gewindebohr-Werkzeug ausgebildet. Deren Versatzmaße sind so mit der Gewindebohr-Drehzahl und mit dem Gewindebohr-Vorschub abgestimmt, dass ein einwandfreies Gewindeschneiden gewährleistet ist.

Die Erfindung beruht nun zunächst auf der überraschenden Erkenntnis, dass bei dem bekannten Verfahren und Werkzeug gemäß der DE 10 2016 008 478 A1 während der Abbremsung des Werkzeugs in dem Nutform-Hub dennoch noch axiale Kräfte auf die Gewindeschneidzähne entstehen, welche zu einer Werkzeugbelastung und entsprechenden Verkürzung der Standzeit führen.

Der Erfindung liegt nun die Aufgabe zugrunde, ein Werkzeug zum Erzeugen eines Gewindes, insbesondere Innengewindes, insbesondere zum Erzeugen eines Gewindeloches im Vollmaterial in einem Werkstück anzugeben, bei dem solche Belastungen reduziert werden können.

Insbesondere soll bei dem bekannten Werkzeug gemäß DE 10 2016 008 478 A1 die Belastung auf das Werkzeug durch axiale Kräfte während des Nutformschrittes, bei dem die Umlaufnut gebildet wird, weiter verringert werden.

Dokument US 2010/0221077 A offenbart ein Werkzeug gemäß dem Oberbegriff des Anspruchs 1.

Zur Lösung dieser Aufgabe geeignete Ausführungsformen und Gegenstände gemäß der Erfindung sind insbesondere in den Patentansprüchen angegeben, die auf ein Werkzeug zum Erzeugen eines Gewindes, insbesondere eines Innengewindes, insbesondere mit den Merkmalen des unabhängigen Patentanspruchs 1 und ein Verfahren zum Erzeugen eines Gewindes, insbesondere eines Innengewindes, unter Verwendung eines solchen Werkzeuges, insbesondere mit den Merkmalen der Patentansprüche 12 oder 14, gerichtet sind.

Weitere Ausgestaltungen und Weiterbildungen gemäß der Erfindung ergeben sich aus den jeweils abhängigen Patentansprüchen.

Die beanspruchbaren Merkmalskombinationen und Gegenstände gemäß der Erfindung sind nicht auf die gewählte Fassung und die gewählten Rückbeziehungen der Patentansprüche beschränkt. Vielmehr kann jedes Merkmal einer Anspruchskategorie, beispielsweise eines Werkzeugs, kann auch in einer anderen Anspruchskategorie, beispielsweise einem Verfahren beansprucht werden. Ferner kann jedes Merkmal in den Patentansprüchen, auch unabhängig von deren Rückbeziehungen, in einer beliebigen Kombination mit einem oder mehreren anderen Merkmal(en) in den Patentansprüchen beansprucht werden. Außerdem kann jedes Merkmal, das in der Beschreibung oder Zeichnung beschrieben oder offenbart ist, für sich, unabhängig oder losgelöst von dem Zusammenhang, in dem es steht, allein oder in jeglicher Kombination mit einem oder mehreren anderen Merkmalen, das oder die in den Patentansprüchen oder in der Beschreibung oder Zeichnung beschrieben oder offenbart ist oder sind, beansprucht werden.

In Ausführungsformen gemäß der Erfindung ist ein Werkzeug zum Erzeugen (oder: Herstellen) eines Gewindes vorgesehen, wobei das Werkzeug um eine durch das Werkzeug verlaufende Werkzeugachse drehbar und axial zur Werkzeugachse bewegbar ist. Das Werkzeug umfasst wenigstens einen Gewindeerzeugungsbereich, wobei der Gewindeerzeugungsbereich entlang einer Schraubenlinie (oder Helix) mit einem vorgegebenen Gewindesteigungswinkel und einem vorgegebenen Windungssinn des zu erzeugenden Gewindes (also Rechts- oder Linksgewinde) verläuft und ein Wirkprofil aufweist, das dem Gewindeprofil des zu erzeugenden Gewindes entspricht.

In einer Ausführungsform, insbesondere umfassend die Merkmale des Patentanspruchs 1, weist der Gewindeerzeugungsbereich wenigstens einen Gewindezahn auf, der ein Gewindezahnprofil mit einer vorderen Gewindezahnprofilflanke und einer hinteren Gewindezahnprofilflanke aufweist sowie eine sich unmittelbar an die vordere Gewindezahnprofilflanke anschließende vordere Flankenfreifläche an einer vorderen Gewindezahnflanke und eine sich unmittelbar an die hintere Gewindezahnprofilflanke F2) anschließende hintere Flankenfreifläche 72) an einer hinteren Gewindezahnflanke aufweist.

Die vordere Flankenfreifläche ist gegenüber einer vorderen Gewindezahnflankeneinhüllenden, die entlang der oder parallel zur Schraubenlinie und durch die vordere Gewindezahnprofilflanke verläuft, nach hinten freigestellt oder zurückversetzt. Gemäß der Erfindung ist nun die hintere Flankenfreifläche gegenüber einer hinteren Transversalebene, die senkrecht zur Werkzeugachse gerichtet ist und durch den hintersten Punkt des Gewindezahnprofils oder der hinteren Gewindezahnprofilflanke verläuft, nach vorne versetzt oder freigestellt. Die Schraubenlinie ist gegenüber der hinteren Transversalebene um den Gewindesteigungswinkel nach hinten geneigt.

Dabei sind hier und im Folgenden "vorne" oder "vordere" als in Richtung der Vorwärtsbewegung VB oder dem Windungssinn W des Gewindeerzeugungsbereiches 4 folgend zu verstehen und "hinten" oder "hintere" als in entgegengesetzter Richtung, also entgegengesetzt zur Richtung der Vorwärtsbewegung oder in Richtung der Rückwärtsbewegung RB oder entgegengesetzt zum Windungssinn W des Gewindeerzeugungsbereiches 4 zu verstehen.

In Ausführungsformen ist die vordere Flankenfreifläche gegenüber der vorderen Gewindezahnflankeneinhüllenden um einen vorderen Flankenfreiwinkel $\alpha$1) geneigt oder zurückversetzt ist, der im Allgemeinen in einem Intervall zwischen 0° und 10°, insbesondere zwischen 0° und 2°, liegt.

In vorteilhaften Ausführungsformen ist die hintere Flankenfreifläche gegenüber der hinteren Transversalebene um einen Winkel geneigt oder zurückversetzt, der im Allgemeinen in einem Intervall zwischen 0° und 6°, insbesondere zwischen 2° und 5° liegt.

Die Flankenfreiflächen können helikal, d.h. in der Abwicklung linear, verlaufen oder auch (anders) gekrümmte Formen annehmen, insbesondere sich zumindest abschnittsweise noch stärker aufeinander zu verjüngen oder auch weniger stark aufeinander zu verjüngen. In einer solchen Ausführungsform kann der entsprechende Flankenfreiwinkel eine Begrenzungslinie oder -fläche festlegen, die von der Flankenfreifläche nicht (nach außen) überschritten wird.

Das Gewindezahnprofil des Gewindezahnes kann ein Zwischen- oder Vorprofil, beispielsweise ein Anschnitt- oder Anfurchprofil, sein, das sich insbesondere mit weiteren Gewindezahnprofilen weiterer Gewindezähne zu einem Gesamtwirkprofil überlagert.

Ferner kann der Gewindezahn auf seinem Zahnrücken an einen Gewindezahnprofilkopf des Gewindezahnprofils entgegengesetzt zum Windungssinn anschließend eine Freifläche aufweisen, die sich vorzugsweise bis zu einem im Wesentlichen linienförmigen Zahnsteg verjüngt.

Bevorzugt weist der der Gewindezahn wenigstens eine Gewindeschneide auf und optional auch eine der Gewindeschneide nachgeordnete Gewindefurchfläche.

In einer weiteren Ausführungsform, insbesondere umfassend die Merkmale des Patentanspruchs 7, die auch mit der Ausführungsform mit dem Gewindezahn kombiniert werden kann, weist der Gewindeerzeugungsbereich wenigstens einen Gewinde- und Räumzahn auf.

Dieser Gewinde- und Räumzahn weist in einem im Windungssinn gesehen vorderseitigen Bereich ein Gewindezahnelement mit einem Gewindezahnprofil als Wirkprofil zum Erzeugen oder Nachbearbeiten des Gewindes auf.

Ferner weist der Gewinde- und Räumzahn in einem im Windungssinn gesehen rückwärtigen Bereich ein Räumelement zum Räumen des erzeugten Gewindes bei einer Reversierbewegung auf, wobei das Räumelement ein Räumprofil als Wirkprofil aufweist, das vorzugsweise dem Gewindeprofil des erzeugten Gewindes entspricht und/oder dem Gewindezahnprofil an seinem vorderseitigen Bereich entspricht.

Das Räumelement weist vorzugsweise eine Räumschneide auf, die ein Räumprofil aufweist, das zum Gewindezahnprofil des Gewindezahnelements korrespondiert, insbesondere ein gleiches oder zumindest an Räumprofilflanken des Räumprofils gleiches Wirkprofil aufweist wie das Gewindezahnprofil.

Ferner weist das Räumelement in einer vorteilhaften Ausführungsform eine entgegengesetzt zum Windungssinn gesehen der Räumschneide nachgeordnete furchend arbeitende Räumfläche auf, wobei sich die Wirkprofile der Räumschneide und der Räumfläche zu dem gesamten Räumprofil des Räumelements überlagern. Die Räumfläche steigt vorzugsweise radial nach außen im Windungssinn gesehen an und kann in einen Zahnsteg, der insbesondere ein konstantes Profil oder keine Freiflächen aufweist, übergehen, wobei insbesondere ein Räumprofilkopf der Räumfläche und/oder des Zahnsteges kleiner als ein Räumprofilkopf der Räumschneide ist.

In einer weiteren Ausführungsform weist der Gewinde- und Räumzahn in seinem im Windungssinn vorderseitigen Bereich oder im Gewindezahnelement eine im Windungssinn gesehen der Gewindeschneide nachgeordnete Gewindefurchfläche zum Erzeugen einer Oberfläche mit guter Oberflächengüte, wobei sich die Wirkprofile der Gewindeschneide und der Gewindefurchfläche zu dem, vorzugsweise dem Gewindeprofil entsprechenden, Gewindezahnprofil an dem vorderseitigen Bereich überlagern.

Die Gewindefurchfläche kann radial nach außen entgegengesetzt zum Windungssinn ansteigen und vorzugsweise in einen oder in den Zahnsteg, der insbesondere als Kalibrierbereich dient und/oder ein konstantes Profil oder keine Freiflächen aufweist, übergehen. Ein Gewindezahnprofilkopf der Gewindefurchfläche und/oder des Zahnsteges kann nun kleiner sein als der Gewindezahnprofilkopf der Gewindeschneide.

Die Zahnflanken des Gewinde- und Räumzahnes können zumindest überwiegend oder vollständig entlang zugehöriger vorderer Gewindezahnflankeneinhüllenden bzw. hinterer Gewindezahnflankeneinhüllenden oder ohne Freiflächen verlaufen.

In einer besonders vorteilhaften Ausführungsform des Werkzeugs weist der Gewindeerzeugungsbereich sowohl wenigstens einen Gewindezahn wie beschrieben als auch wenigstens einen Gewinde- und Räumzahn auf, wobei der Gewinde- und Räumzahn im Windungssinn gesehen der letzte Zahn des Gewindeerzeugungsbereiches ist und damit der erste Zahn bei der Reversierbewegung.

In einer vorteilhaften Ausführungsform umfasst das Werkzeug ferner wenigstens einen Bohrbereich zum Erzeugen eines Kernloches. Der Bohrbereich ist in einem weiter vorne, insbesondere an einem vorderen oder freien Ende, liegenden Bereich angeordnet als der Gewindeerzeugungsbereich. Bohrbereich und Gewindeerzeugungsbereich sind miteinander starr bewegungsgekoppelt und/oder auf einem gemeinsamen Werkzeugträger oder Werkzeugschaft befestigt oder ausgebildet. Bevorzugt erzeugt während der Arbeitsbewegung der Bohrbereich des Werkzeugs ein Kernloch in dem Werkstück und der Gewindeerzeugungsbereich einen unter der vorgegebenen Gewindesteigung verlaufenden Gewindegang in der Oberfläche dieses Kernloches. Der Gewindeerzeugungsbereich ragt radial zur Werkzeugachse weiter nach außen als der Bohrbereich. Dadurch kann das Gewinde ohne radiale Zustellung des Werkzeugs erzeugt werden und der Bohrbereich beim Reversieren ohne Zerstörung des Gewindes durch das Kernloch wieder herausbewegt werden.

Ein Verfahren zum Erzeugen eines Gewindes mit einer vorgegebenen Gewindesteigung und mit einem vorgegebenen Gewindeprofil in einem Werkstück umfasst in Ausführungsformen gemäß der Erfindung, umfassend die Merkmale des Patentanspruchs 12 oder 14, zunächst die folgenden Schritte:

a) Verwenden eines Werkzeuges gemäß der Erfindung,

c) Bewegen des Werkzeugs in einer Arbeitsbewegung während einer ersten Arbeitsphase in das Werkstück,

d) wobei die Arbeitsbewegung eine Drehbewegung mit einem vorgegebenen Drehsinn um die Werkzeugachse des Werkzeugs und eine gemäß der Gewindesteigung mit der Drehbewegung synchronisierte axiale Vorschubbewegung des Werkzeugs in einer axialen Vorwärtsrichtung axial zur Werkzeugachse umfasst, derart, dass einer vollen Umdrehung des Werkzeugs um die Werkzeugachse ein axialer Vorschub des Werkzeugs um die vorgegebene Gewindesteigung entspricht,

e) Erzeugen des Gewindes mit dem Gewindeerzeugungsbereich des Werkzeuges während der Arbeitsbewegung,

f) Bewegen des Werkzeuges in einer an die Arbeitsbewegung anschließenden Abbremsbewegung während einer zweiten Arbeitsphase weiter in das Werkstück in derselben Vorwärtsrichtung wie bei der Arbeitsbewegung bis zu einem Umkehrpunkt.

In einer Ausführungsform wird nach Erreichen des Umkehrpunktes eine Reversierbewegung des Werkzeuges eingeleitet, mit der das Werkzeug aus dem Werkstück bewegt wird, wobei die Reversierbewegung zunächst eine erste Reversierphase, mit der der Gewindeerzeugungsbereich des Werkzeugs zurück in den Gewindegang des erzeugten Gewindes geführt wird, und im Anschluss eine zweite Reversierphase, während der der Gewindeerzeugungsbereich durch den Gewindegang aus dem Werkstück nach außen geführt wird, umfasst.

Der Gewinde- und Räumzahn des Werkzeugs räumt nun während der Reversierbewegung mit seinem Räumelement Fremdkörper, insbesondere Späne oder Spanwurzeln, vor oder aus dem Gewinde aus und kann insbesondere auch die Werkstückoberfläche, insbesondere im Gewinde, glätten und/oder insbesondere keine Zwischenspalte bei dem Räumvorgang zur Gewindeganginnenwand entstehen lassen, in denen sich Späne festsetzen könnten.

In einer Ausführungsform ist nun der axiale Vorschub des Werkzeugs bezogen auf eine volle Umdrehung zumindest während eines Teils der Abbremsbewegung betragsmäßig kleiner als die Gewindesteigung und beim Umkehrpunkt Null.

Der Gewindezahn und/oder der Gewinde- und Räumzahn erzeugt dadurch während der Abbremsbewegung wenigstens eine, insbesondere geschlossene oder ringförmige, Umlauf- oder Umfangsnut in dem Werkstück.

Während der Abbremsbewegung in der zweiten Arbeitsphase wird also im Allgemeinen eine Umlauf- oder Umfangsnut oder ein Freistich in dem Werkstück erzeugt, weshalb der Vorgang in der zweiten Arbeitsphase außer als Abbremsvorgang oder -bewegung auch als Umfangsnuterzeugung oder Umlaufnuterzeugung oder Freistichbewegung, bei rein schneidendem Werkzeug auch als Freischneidbewegung bezeichnet werden kann.

Aufgrund der besonderen Ausgestaltung des Gewindezahnes ist eine Reibung an der Werkstückoberfläche sowohl an seiner vorderen Gewindezahnfreifläche als auch an seiner hinteren Gewindezahnfreifläche während der Arbeitsbewegung und auch während der Abbremsbewegung und auch während der Reversierbewegung vermieden oder zumindest stark reduziert.

Die Abbremsbewegung umfasst bevorzugt eine Drehbewegung mit gleichbleibendem Drehsinn wie bei der Arbeitsbewegung.

In einer bevorzugten Ausführungsform wird während der Abbremsbewegung die axiale Vorschubbewegung abhängig vom Drehwinkel der Drehbewegung des Werkzeugs gemäß einer vorab gespeicherten eindeutigen Beziehung, insbesondere einer Funktion oder einer Abfolge von Funktionen, zwischen dem axialen Vorschub des Werkzeugs und dem Drehwinkel gesteuert.

In der Regel beginnt der Abbremsvorgang oder die zweite Arbeitsphase bei einem axialen Vorschub, der der Gewindesteigung der ersten Arbeitsphase entspricht. Der Abbremsvorgang ist als Abbremsung von der anfänglichen Gewindesteigung bis auf Null am Ende oder an einem Umkehrpunkt zu verstehen und muss nicht über das gesamte Drehwinkelintervall eine Verringerung des axialen Vorschubs abhängig vom Drehwinkel (Abbremsbeschleunigung), insbesondere auf Werte unterhalb der Gewindesteigung beinhalten. Vielmehr sind auch Drehwinkelintervalle möglich, in denen der axiale Vorschub bezogen auf den Drehwinkel Null ist oder sogar vorübergehend negativ ist, also seine Richtung umkehrt.

Eine Funktion, die die Beziehung zwischen axialem Vorschub (oder: der axialen Eindringtiefe) und dem Drehwinkel definiert, kann einen kontinuierlichen Definitionsbereich und Wertebereich oder auch einen diskreten Definitionsbereich und Wertebereich mit diskreten vorab gespeicherten oder vorab ermittelten Wertepaaren oder Wertetabellen aufweisen.

In einer Ausführungsform ist auch die Drehgeschwindigkeit der Drehbewegung beim Umkehrpunkt Null.

In einer Ausführungsform ist der gesamte oder aufsummierte axiale Vorschub des Werkzeuges während der Abbremsbewegung zwischen dem 0,1-fachen bis 2-fachen der Gewindesteigung gewählt oder eingestellt.

In einer bevorzugten Ausführungsform werden während der Abbremsbewegung in mehreren aufeinanderfolgenden Abbremsschritten zueinander unterschiedliche Beziehungen, insbesondere Funktionen, zwischen dem axialen Vorschub des Werkzeugs und dem Drehwinkel gewählt oder eingestellt.

In einer besonders vorteilhaften Ausführungsform ist während mehreren, insbesondere auch allen, Abbremsschritten die axiale Eindringtiefe oder der axiale Vorschub eine lineare Funktion des Drehwinkels und/oder bei ist die Steigung, d.h. die Ableitung der axialen Eindringtiefe oder des axialen Vorschubs nach dem Drehwinkel, in jedem dieser Abbremsschritte konstant und nimmt betragsmäßig von einem Abbremsschritt zu einem darauffolgenden Abbremsschritt ab.

Diese Ausführungsform kann besonders einfach implementiert werden, indem für die Arbeitsbewegung eine NC-Steuerung für einen Gewindeprozess, beispielsweise eine G33 Wegbedingung, mit der Gewindesteigung des Gewindes verwendet wird und in den mehreren Abbremsschritten ebenfalls eine, vorzugsweise die gleiche, NC-Steuerung für einen Gewindeprozess, beispielsweise eine G33 Wegbedingung, mit der jeweiligen konstanten Steigung als Gewindesteigungsparameter verwendet wird.

In einer Ausführungsform ist während mehreren, insbesondere allen, Abbremsschritten die axiale Eindringtiefe oder der axiale Vorschub eine, insbesondere kubische, Spline-Funktion des Drehwinkels.

In einer Ausführungsform sind die unterschiedlichen Funktionen aufeinanderfolgender Abbremsschritte stetig und im Fall differenzierbarer Funktionen vorzugsweise stetig differenzierbar aneinander gesetzt.

In einer Ausführungsform ist, insbesondere während eines Egalisierungsschrittes, der axiale Vorschub während der Abbremsbewegung in einem Drehwinkel-Teilintervall Null und/oder erfolgt in einem Drehwinkel-Teilintervall in zur Vorwärtsrichtung der Arbeitsbewegung entgegengesetzter Rückwärtsrichtung.

In einer Ausführungsform wird nach Erreichen des Umkehrpunktes eine Reversierbewegung des Werkzeuges eingeleitet, mit der das Werkzeug aus dem Werkstück bewegt wird, wobei die Reversierbewegung zunächst eine erste Reversierphase, mit der der Gewindeerzeugungsbereich des Werkzeugs zurück in den Gewindegang des erzeugten Gewindes geführt wird, und im Anschluss eine zweite Reversierphase, während der der Gewindeerzeugungsbereich durch den Gewindegang aus dem Werkstück nach außen geführt wird, umfasst.

In einer vorteilhaften Ausführungsform wird die Reversierbewegung in der ersten Reversierphase mit der betragsmäßig gleichen, nur in der Drehrichtung und Vorschubrichtung invertierten vorab gespeicherten eindeutigen Beziehung, insbesondere einer Funktion oder einer Abfolge von Funktionen, zwischen dem axialen Vorschub des Werkzeugs und dem Drehwinkel gesteuert wie in der Abbremsbewegung während der zweiten Arbeitsphase, ggf. unter Auslassung oder Verkürzung des Egalisisierungsschrittes, sofern vorhanden.

Die Erfindung wird im Folgenden anhand von Ausführungsbeispielen weiter erläutert. Dabei wird auch auf die Zeichnung Bezug genommen, in deren

FIG 1       ein kombiniertes Bohr- und Gewindeerzeugungswerkzeug bei der Erzeugung eines Gewindeloches,

FIG 2       ein mit dem Verfahren oder dem Werkzeug gemäß FIG 1 hergestelltes Gewindeloch in einem Längsschnitt,

FIG 3      einen Gewindezahn mit erfindungsgemäß verjüngten Zahnflanken in einer teilweise perspektivischen Abwicklungsdarstellung,

FIG 4      einen Gewindezahn mit erfindungsgemäß verjüngten Zahnflanken an dem Werkzeug in einer perspektivischen Darstellung,

FIG 5      einen Gewindezahn mit Räumstruktur für die Rückwärtsbewegung in einer teilweise perspektivischen Abwicklungsdarstellung,

FIG 6      einen Gewindezahn mit Räumstruktur für die Rückwärtsbewegung an dem Werkzeug in einer perspektivischen Ansicht von vorne,

FIG 7      den Gewindezahn gemäß FIG 6 in einer perspektivischen Ansicht von hinten,

FIG 8      ein Werkzeug mit einem vorderen Gewindezahn nach FIG 4 und einem hinteren Gewindezahn nach FIG 6 und 7 in einer perspektivischen Seitenansicht,

FIG 9      den vorderen Bereich des Werkzeugs nach FIG 8 in einer perspektivischen Seitenansicht

FIG 10      den vorderen Bereich des Werkzeugs nach FIG 8 in einer gegenüber FIG 9 gedrehten perspektivischen Seitenansicht,

FIG 11      ein Ausführungsbeispiel einer Aufteilung der Gewindewirkprofile der beiden Gewindezähne nach FIG 4 und 6 und 7 in einem Querschnitt,

FIG 12 bis 17      weitere Ausführungsbeispiele für Aufteilungen der Gewindewirkprofile der beiden Gewindezähne nach FIG 4 und 6 und 7 jeweils in einem Querschnitt,

FIG 18      in einem Diagramm der Graph der axialen Eindringtiefe als Funktion des Drehwinkels für einen gesamten Gewindelocherzeugungszyklus,

FIG 19      der Endabschnitt des in FIG 18 dargestellten Graphen in der Vorwärtsbewegung als Abbremsvorgang und

FIG 20      der Endabschnitt des in FIG 18 dargestellten Graphen in der Rückwärtsbewegung als Beschleunigungsvorgang,

FIG 21      ein Egalisierungsschritt in einer ersten Ausführung,

FIG 22      ein Egalisierungsschritt in einer zweiten Ausführung,

FIG 23      drei Ausführungsbeispiele von Steuerungskurven,

FIG 24      drei weitere Ausführungsbeispiele von Steuerungskurven,

FIG 25      zwei weitere Ausführungsbeispiele von Steuerungskurven und

FIG 26      ein Ausführungsbeispiel für die Abhängigkeit des Drehwinkels und der Eindringtiefe von der Zeit

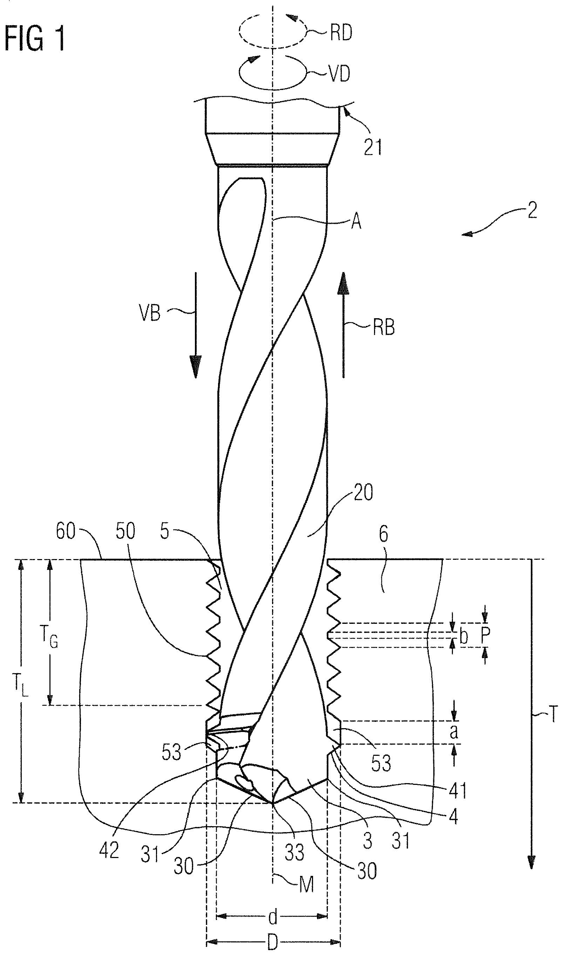

jeweils schematisch dargestellt sind. Einander entsprechende Teile und Größen sind in den FIG 1 bis 26 mit denselben Bezugszeichen versehen.

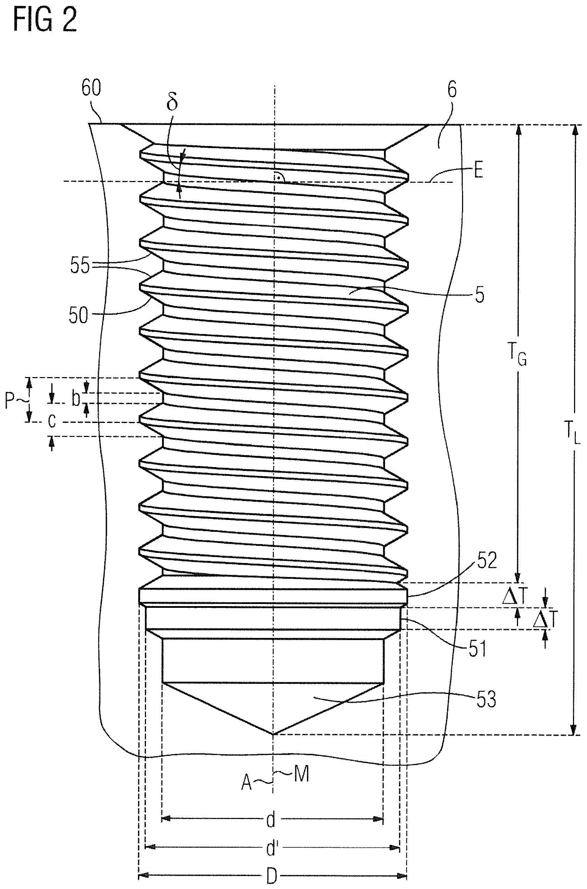

Erste Ausführungsbeispiele des Werkzeugs und Verfahrens gemäß der Erfindung werden im Folgenden anhand von FIG 1 und FIG 2 erläutert.

Das in FIG 1 gezeigte Werkzeug 2 wird zum Erzeugen eines Gewindeloches 5 in einem Werkstück 6 eingesetzt. Das Werkzeug 2 ist ein kombiniertes Werkzeug und erzeugt sowohl das Kernloch in dem Werkstück mit dem vorgegebenen Kernlochdurchmesser des Gewindes als auch das Innengewinde in dem Kernloch, d.h. den Gewindegang 50 des Innengewindes in der Mantelwandung oder Innenwandung des Kernloches. Dazu wird das Werkzeug in einer Arbeitsbewegung oder einem Arbeitshub oder einer Gewindeerzeugungsbewegung, die aus einer Drehbewegung um die Werkzeugachse einerseits und einer axialen Vorschubbewegung entlang der Werkzeugachse zusammengesetzt ist, in das Werkstück 6 bewegt.

Die FIG 2 zeigt ein Ausführungsbeispiel eines Gewindeloches 5 mit einem Gewindegang 50 und einem Gewindeprofil 55, das mit einem Verfahren oder einem Werkzeug gemäß der Erfindung, beispielsweise einem Werkzeug nach FIG 1, hergestellt werden kann.

Der Gewindesteigungswinkel $\delta$ des Gewindeganges 50 mit der Gewindesteigung P und dem Durchmesser D wird bezüglich einer Transversalebene E, die senkrecht zur Werkzeugachse A gerichtet ist, gemessen und ist aus der folgenden Beziehung

$$P = \pi \cdot D \tan \cdot \delta$$

berechenbar. Typische Werte für den Gewindesteigungswinkel δ liegen beispielsweise zwischen 1° und 5°.

Das Werkzeug 2 ist, wie z.B. in FIG 1 dargestellt, einerseits um eine durch das Werkzeug 2 verlaufende Werkzeugachse A drehbar oder rotatorisch bewegbar und andererseits entlang oder axial zur Werkzeugachse A axial oder translatorisch bewegbar. Diese beiden Bewegungen werden, vorzugsweise durch eine Kontrolleinheit, insbesondere Maschinensteuerung, aufeinander abgestimmt oder synchronisiert, während das Werkzeug 2 an einer Oberfläche 60 des Werkstücks 6 und bis auf eine Lochtiefe $T_L$ in das Werkstück 6 eindringt. Die Werkzeugachse A bleibt während der Erzeugung des Gewindeloches 5 relativ zum Werkstück 6 ortsfest oder lagekonstant. Die Gewindemittelachse M des Gewindeloches 5 ist während des Prozesses koaxial zur Werkzeugachse A oder fällt mit dieser zusammen.

Das Werkzeug 2 ist vorzugsweise mittels eines Koppelbereichs an einem axial zur Werkzeugachse A verlaufenden oder ausgebildeten Werkzeugschaft 21 mittels eines nicht dargestellten Drehantriebs, insbesondere einer Werkzeugmaschine und/oder Antriebs- oder Werkzeugmaschinenspindel, rotatorisch oder in einer Drehbewegung um seine Werkzeugachse A in einem Vorwärtsdrehsinn VD und in einem entgegengesetzten Rückwärtsdrehsinn RD antreibbar. Ferner ist das Werkzeug 2 axial in einer axialen Vorwärtsbewegung VB oder einer axialen Rückwärtsbewegung RB axial zur Werkzeugachse A bewegbar, insbesondere mittels eines Axialantriebs, der wiederum in der Werkzeugmaschine und/oder Antriebs- oder Werkzeugmaschinenspindel vorgesehen sein kann.

An einem vom Koppelbereich des Schaftes 21 abgewandten freien Endbereich des Werkzeuges 2 ist ein Arbeitsbereich 20 vorgesehen. Der Arbeitsbereich 20 umfasst einen Bohrbereich 3 am stirnseitigen Ende des Werkzeuges 2 und einen axial bezüglich der Werkzeugachse A zum Bohrbereich 3 nach hinten oder zum Schaft 21 hin versetzten Gewindeerzeugungsbereich 4.

Der Bohrbereich 3 umfasst stirnseitige Bohr(haupt)schneiden 30, die schräg, insbesondere konisch, axial nach vorne verlaufend angeordnet sein können und in einer Bohrerspitze 33 zulaufen können, insbesondere in einem sich zur Bohrerspitze 33 verjüngenden Konus. Diese stirnseitigen Bohrschneiden 30 sind in dem Vorwärtsdrehsinn VD schneidend, im dargestellten Ausführungsbeispiel rechtschneidend, ausgebildet und tragen bei der Vorwärtsbewegung VB bei gleichzeitiger Drehbewegung in Vorwärtsdrehsinn VD Material des Werkstücks 6, das axial vor dem Werkzeug 2 liegt, spanabhebend ab.

Außerdem umfasst der Bohrbereich 3 vorzugsweise auch Führungsbereiche 31 an seiner Außenwandung, die zur Eigenführung des Werkzeugs 2 in der erzeugten Bohrung dienen können und dazu an der Kernlochwandung anliegen oder nur wenig davon beabstandet sind. Anstelle oder zusätzlich zu den Führungsbereichen können auch Umfangsschneiden oder Mantelschneiden vorgesehen sein, die die Mantelwandung des Kernloches spanend bearbeiten oder vorbereiten, indem sie sich radial zur Werkzeugachse A nach außen anschließende Bereiche des Werkstücks 6 spanabhebend abtragen. Diese Mantelschneiden können dazu dienen, eine ausreichende Oberflächengüte auch der Mantelwandung oder Kernlochinnenwandung zu erreichen und verlaufen insbesondere vorwiegend parallel oder leicht nach hinten geneigt (zur Reibungsreduzierung) zur Werkzeugachse A auf einem radialen Abstand d/2 von der Werkzeugachse A, der dem halben Kernlochinnendurchmesser entspricht. Die Führungsbereiche 31 oder Umfangs- oder Mantelschneiden können unmittelbar an die stirnseitigen Bohrschneiden 30 anschließend ausgebildet und/oder angeordnet sein oder auch axial von diesen etwas versetzt sein.

Der Bohrbereich 3 hat somit einen Außendurchmesser oder Bohrdurchmesser d und erzeugt folglich eine Bohrung oder ein Kernloch mit diesem Innendurchmesser d im Werkstück 6. Die Bohrschneiden 30 und 31 kann man auch als Kernlochschneiden bezeichnen, da sie das Kernloch des Gewindeloches 5 erzeugen. Die äußerste zur Werkzeugachse A radiale Abmessung der Bohr- oder Kernlochschneiden 30 und 31 bestimmen dabei den Kernlochinnendurchmesser d.

Hinter dem Bohrbereich 3 oder den Bohr- oder Kernlochschneiden 30 und 31 nachgelagert oder in zur axialen Vorwärtsbewegung VB entgegengesetzter Richtung axial versetzt angeordnet umfasst das Werkzeug 2 einen Gewindeerzeugungsbereich 4, der entlang einer Schraubenlinie (oder: Helix, Gewindegang), deren Steigung der Gewindesteigung P und deren Windungssinn dem Windungssinn des zu erzeugenden Innengewindes oder Gewindeganges 50 entspricht, verläuft oder ausgebildet ist. Die Schraubenlinie ist in diesem Sinne technisch und nicht als rein mathematische eindimensionale Linie zu verstehen, sondern hat auch quer zur mathematischen Linie eine gewisse Ausdehnung, die der entsprechenden Abmessung des Gewindeerzeugungsbereiches 4 entspricht. Mathematisch müsste man sonst von einer Schar von zueinander parallel verlaufenden Schraubenlinien oder eventuell von einem Schraubenband oder Helixband sprechen.

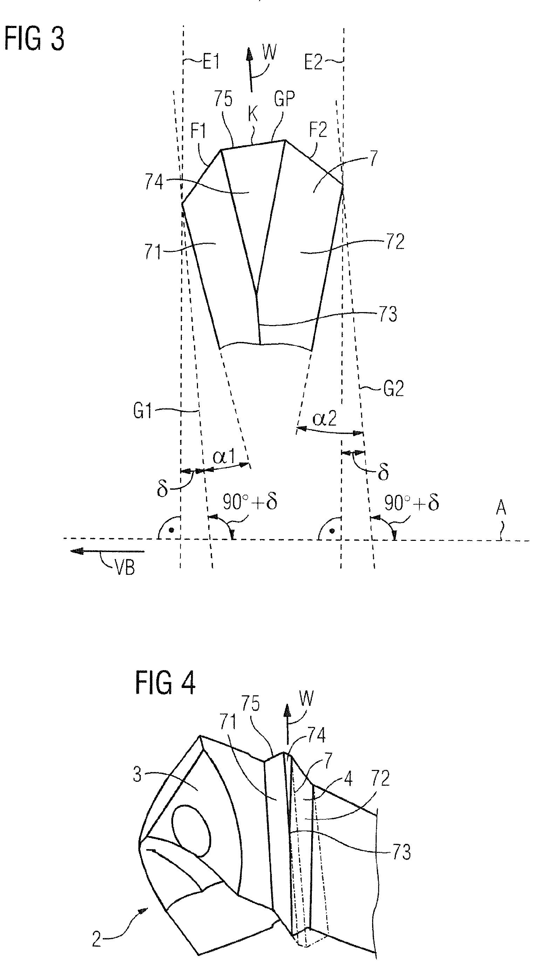

Der Windungssinn des Gewindeerzeugungsbereiches 4 als Rechtsgewinde oder Linksgewinde entspricht der Überlagerung aus axialer Vorwärtsbewegung VB und Vorwärtsdrehbewegung VD. Eingezeichnet ist der Windungssinn W beispielhaft in den FIG 3 bis 7, auf die später noch eingegangen wird.

Der Gewindeerzeugungsbereich 4 ragt im Allgemeinen radial zur Werkzeugachse A weiter nach außen oder hat einen größeren radialen Außenabstand zur Werkzeugachse A als der Bohrbereich 3 oder hat einen größeren Außendurchmesser D als der Außendurchmesser d des Bohrbereiches 3.

Der Gewindeerzeugungsbereich 4 umfasst einen oder mehrere, d.h. eine Anzahl n größer oder gleich 1, Gewindezähne, die schneidend und/oder formend ausgebildet sind. Jeder Gewindezahn ist entlang der Schraubenlinie verlaufend ausgebildet oder ausgerichtet oder angeordnet. Jeder Gewindezahn weist ein Gewindezahnprofil als Wirkprofil auf, das sich im Allgemeinen als äußerste Abmessung oder Außenprofil des Gewindezahnes in einer Projektion entlang der Schraubenlinie ergibt oder darstellt und sich in das Werkstück bei der Gewindeerzeugungsbewegung abbildet, sei es durch Schneiden oder durch Formen oder Eindrücken.

Wenn mehrere (n > 1) Gewindezähne vom Gewindeerzeugungsbereich 4 umfasst sind, so sind diese Gewindezähne wenigstens annähernd entlang der Schraubenlinie (oder in axialer Richtung) versetzt zueinander angeordnet. Unter eine solche Anordnung entlang der Schraubenlinie fallen auch Ausführungsformen, bei denen Gewindezähne leicht seitlich zu einer Ideallinie versetzt sind, beispielsweise um Gewindewirkprofile auch mit unterschiedlicher Bearbeitung an den Gewindeflanken oder eine unterschiedliche Aufteilung oder Überlagerung der Gewindewirkprofile auf das bzw. zu dem Gesamtgewindeprofil zu realisieren. Wichtig ist hinsichtlich dieser Anordnung der Gewindezähne lediglich, dass sich ihre Anordnung bei der Arbeitsbewegung auf einen Gewindegang im Werkstück mit derselben Gewindesteigung P abbildet.

Im in FIG 1 dargestellten Ausführungsbeispiel sind zwei oder mehrere Gewindezähne 41 und 42 vorgesehen, die beispielsweise um eine halbe Gewindesteigung P zueinander axial versetzt sind, in Winkelrichtung also entsprechend einer halben Umdrehung oder um 180° versetzt sind. Die Gewindezähne, insbesondere 41 und 42, ragen radial von der Werkzeugachse A weiter nach außen als die Bohr- oder Kernlochschneiden 30 und 31, Der Außendurchmesser des Gewindeerzeugungsbereichs 4 und des Gewindeganges 50 und damit des Gewindelochs 5 ist mit D bezeichnet. Die radiale Differenz zwischen der äußersten Abmessung der Gewindeerzeugungszähne und der äußersten radialen Abmessung der Kernlochschneiden entspricht insbesondere der Profiltiefe des Gewindeprofils des zu erzeugenden Innengewindes oder, mit anderen Worten, der Differenz zwischen dem Radius D/2 des Gewindegrundes und dem Radius des Kernloches d/2.

Das Gewindeprofil des Innengewindes, also der Querschnitt durch den Gewindegang 50, wird erzeugt durch das aus den einzelnen Wirkprofilen der Gewindezähne, z.B. 41 und 42, bei vollständigem Durchlauf durch das Werkstück zusammengesetzte oder überlagerte Gewindewirkprofil.

Die in axialer Projektion auf die Werkzeugachse A gemessene Gewindeprofilbreite des Gewindewirkprofils ist (in FIG 2) mit c bezeichnet und entspricht dem maximalen Abstand der Gewindeprofilflanken. Der in axialer Projektion auf die Werkzeugachse A gemessene axiale Abstand zwischen zwei aufeinanderfolgenden Gewindeprofilen des Gewindeganges 50 ist die Gewindelücke b. Die Summe aus der Gewindelücke b und der Gewindebreite c entspricht hier der Gewindesteigung P.

In einer vorteilhaften Ausführungsform wird mit dem Werkzeug 2 oder einem anderen Werkzeug gemäß der Erfindung folgendes Verfahren durchgeführt: Während einer ersten Arbeitsphase oder Gewindeerzeugungsphase wird mit dem Werkzeug 2 das Kernloch mittels des Bohrbereichs 3 erzeugt und gleich axial dahinter und zumindest teilweise gleichzeitig der Gewindegang 50 in der Kernlochwandung mittels des Gewindeerzeugungsbereichs 4 erzeugt. In dieser ersten Arbeitsphase wird die axiale Vorschubgeschwindigkeit entlang der Werkzeugachse A auf die Drehgeschwindigkeit für die Drehbewegung um die Werkzeugachse A so abgestimmt und synchronisiert, dass bei einer vollen Umdrehung der axiale Vorschub der Gewindesteigung P entspricht. Die axiale Eindringtiefe (oder: der axiale Vorschub) T in Richtung der Werkzeugachse A gemessen von der Werkstückoberfläche 60 in dieser ersten Arbeitsphase entspricht der Gewindetiefe $T_G$.

Nun wird in einer an die erste Arbeitsphase unmittelbar anschließenden zweiten Arbeitsphase in einem Abbremsvorgang (oder: in einer Abbremsbewegung) das Werkzeug 2 in einem Drehwinkelintervall derart abgebremst, dass der axiale Vorschub V bei einem Drehwinkel von 360°, d.h. bei einer vollen Umdrehung, des Werkzeugs 2 kleiner als die Gewindesteigung P ist und bis auf Null abnimmt. In der Regel beginnt der Abbremsvorgang oder die zweite Arbeitsphase bei einem auf einen Drehwinkel von 360° bezogenen axialen Vorschub, der der Gewindesteigung P der ersten Arbeitsphase entspricht, also V = P, und reduziert dann den axialen Vorschub pro 360° Drehwinkel auf Werte unterhalb der Gewindesteigung P, also V < P. Der Abbremsvorgang ist als Abbremsung von der anfänglichen Gewindesteigung V = P bis auf Null am Ende oder an einem Umkehrpunkt, also V = 0, zu verstehen und muss nicht über das gesamte Drehwinkelintervall eine Verringerung des axialen Vorschubs V abhängig vom Drehwinkel (Abbremsbeschleunigung) beinhalten. Vielmehr sind auch Drehwinkelintervalle möglich, in denen der axiale Vorschub bezogen auf den Drehwinkel Null ist oder sogar vorübergehend negativ ist, also seine Richtung umkehrt.

Dieser Abbremsvorgang erfolgt in einer bevorzugten Ausführungsform in definierten Teilschritten wie nachfolgend noch näher erläutert wird.

Diese Abbremsbewegung in der zweiten Arbeitsphase führt dazu, dass der Gewindeerzeugungsbereich 4 nun - in eigentlich atypischer oder funktionsfremder Weise - wenigstens eine umlaufende Nut oder Umlaufnut oder Umfangsnut in der Kernlochwandung erzeugt. Der Vorgang in der zweiten Arbeitsphase kann deshalb außer als Abbremsvorgang auch als Umfangsnuterzeugung oder Umlaufnuterzeugung oder Freistichbewegung, bei rein schneidendem Werkzeug auch als Freischneidbewegung bezeichnet werden.

In FIG 1 sind die Gewindeerzeugungszähne 41 und 42 mit gleichem Außenradius D/2 und vorzugsweise gleichem Gewindewirkprofil, das schon dem Endprofil des Gewindeganges 50 entspricht, dargestellt. Die Gewindeerzeugungszähne 41 und 42 des Werkzeugs gemäß FIG 1 erzeugen in der zweiten Arbeitsphase eine Umfangsnut 53 mit dem durchgehenden Außendurchmesser D und der axialen Länge a, die sich aus dem gesamten axialen Vorschub der Abbremsbewegung in der zweiten Arbeitsphase bis zum Umkehrpunkt ergibt, erzeugen.

In FIG 2 sind dagegen zwei Umfangsnuten 51 und 52 dargestellt, wobei die erste Umfangsnut 51 einen zwischen dem Kernlochdurchmesser d und dem Gewindeaußendurchmesser D liegenden Außendurchmesser d' aufweist und die zweite Umfangsnut 52 einen Außendurchmesser hat, der dem Gewindeaußendurchmesser D entspricht.

Solche Umfangsnuten 51 und 52 können während der zweiten Arbeitsphase beispielsweise mit zwei um P/2 versetzten Gewindeerzeugungszähnen 41 und 42 wie beispielsweise in FIG 1 dargestellt, erzeugt werden, die wie folgt modifiziert werden: Es kann der erste Gewindeerzeugungszahn 41 in FIG 1 nur einen Außenradius d'/2 aufweisen und somit ein Anschnitt- oder Anfurchzahn sein, der den Gewindegang 50 nicht bis zur vollen Profiltiefe oder bis zum finalen Gewindegrund erzeugt, während der der zweite Gewindeerzeugungszahn 42 bereits den vollen Außendurchmeesser D aufweist, also die volle Gewindeprofiltiefe erzeugt (Vollzahn).

Die Umfangsnut setzt sich somit aus zwei Teilnuten zusammen, nämlich der ersten im Durchmesser kleineren Umfangsnut 51, die vom ersten Gewindeerzeugungszahn 41 erzeugt wird, und der mit dem vollen Durchmesser D ausgebildeten zweiten Umfangsnut 52, die vom zweiten Gewindeerzeugungszahn 42 erzeugt wird.

Diese Ausführungen sind nur beispielhaft. Bei einer nicht dargestellten anderen Anzahl oder Verteilung von Gewindeerzeugungszähnen ergeben sich entsprechend andere Umfangsnuten.

Wenn man die Umfangsnut(en), beispielsweise die Umfangsnuten 51 und 52 in FIG 2 oder die Umfangsnut 53 in FIG 1, in axialer Richtung kontinuierlich oder ununterbrochen erzeugen will sind, wird der axiale Vorschub V bei voller Umdrehung oder 360° insbesondere um mindestens b/n gegenüber P reduziert, um die Gewindelücke b zu schließen oder nicht mehr zu erzeugen, wobei n die Zahl der Gewinderzeugungszähne im Gewindeerzeugungsbereich 4 ist.

Man könnte die Freistichbewegung oder Abbremsbewegung, bespielsweise durch geeignete Wahl der Bewegungsparameter oder auch durch zusätzliche axiale Egalisierbewegungen, auch so ausführen, dass die Außenbreite am Gewindeprofil, insbesondere die Flanken, in der Umfangsnut nicht mehr sichtbar sind oder verschwinden und/oder die Umfangsnut nur noch eine zylindrische Gestalt hat. Damit könnte die Durchschraubbarkeit des erzeugten Werkstückgewindes verbessert oder ermöglicht werden.

In den in FIG 1 und FIG 2 dargestellten Ausführungsbeispielen ist n = 2 mit den beiden Gewindeerzeugungszähne 41 und 42 bzw. Umlaufnuten 51 und 52, so dass also der axiale Vorschub V beim Abbremsvorgang vorzugsweise kleiner als P - b/2 eingestellt wird. Das Gewindewirkprofil der Gewindeerzeugungszähne, hier 41 und 42, erzeugt dann in der Überlagerung bei der Bewegung kein Gewinde mehr, sondern wenigstens eine durchgehende Umfangsnut, die durchgehend den Außendurchmesser hat, der dem des zugehörigen Gewindeerzeugungszahnes auf seiner jeweiligen Bahn bei der Abbremsbewegung in der zweiten Arbeitsphase entspricht.

Die Gesamttiefe oder Lochtiefe oder gesamte axiale Abmessung des Gewindeloches 5 nach der zweiten Arbeitsphase ist mit $T_L$ bezeichnet und entspricht im Wesentlichen der Summe $T_G$ + a aus der Gewindetiefe $T_G$ als axialem Vorschub aus der ersten Arbeitsphase und der axialen Nutlänge a als axialem Vorschub aus der zweiten Arbeitsphase.

Wenn die Gesamttiefe oder Lochtiefe $T_L$ des Gewindeloches 5 erreicht ist, kommt das Werkzeug 2 zum Stillstand und erreicht einen Umkehrpunkt.

Es wird nun am Umkehrpunkt unmittelbar eine Reversier- oder Rückwärtsbewegung RB eingeleitet, mit der das Werkzeug 2 zunächst in einer ersten Reversierphase durch die Umlaufnut(en) 51, 52, 53 bis zum Gewindegang 50 zurückbewegt wird und dann in einer zweiten Reversierphase durch das Gewinde bzw. den Gewindegang 50 nach außen aus dem Gewindeloch 5 und dann dem Werkstück 6 herausbewegt wird oder ausgefädelt wird. Wegen des kleineren Durchmessers wird auch bei der Reversierbewegung das Gewinde nicht durch den Bohrbereich 3 verletzt.

Zu einer bevorzugten Ausbildung der ersten Reversierphase wird später noch mehr ausgeführt.

In der zweiten Reversierphase der Rückwärtsbewegung RB werden wieder der axiale Vorschub und die Drehbewegung des Werkzeugs 2 aufeinander gemäß der Gewindesteigung P synchronisiert, um das Gewinde nicht zu beschädigen, nur dass jeweils die Richtung des axialen Vorschubs in der Pfeilrichtung der Rückwärtsbewegung RB gegenüber der Pfeilrichtung der Vorwärts- oder Arbeitsbewegung VB vertauscht oder entgegengesetzt ist und die Drehrichtung der Drehbewegung ebenfalls umgekehrt wird, also statt dem Vorwärtsdrehsinn VD nun der Rückwärtsdrehsinn RD eingestellt wird.

Die Gewindeachse oder Mittelachse des Gewindes mit dem Gewindegang 50 ist mit M bezeichnet und fällt während der gesamten Arbeitsbewegung, also sowohl in der ersten Arbeitsphase als auch in der zweiten Arbeitsphase, und auch während der Reversierbewegung, also sowohl in der ersten Reversierphase als auch in der zweiten Reversierphase, mit der Werkzeugachse A des Werkzeugs 2 zusammen oder ist koaxial zu dieser.

Weitere Werkzeuge und Teilbereiche davon werden in verschiedenen Ausführungsformen gemäß der Erfindung anhand der FIG 3 bis 17 beschrieben.

FIG 3 zeigt, in einer zweidimensionalen Darstellung als Abwicklung der im Wesentlichen helikalen Struktur bzw. der Zylinderfläche einen Gewindezahn 7 eines Werkzeugs, insbesondere eines Werkzeugs zum Erzeugen eines Gewindelochs gemäß einer ersten Ausführungsform. In FIG 4 ist derselbe oder ein ähnlicher Gewindezahn 7 perspektivisch in seiner Lage am Werkzeug 2 gezeigt.

Der Gewindezahn 7 umfasst eine Gewindeschneide 75, die ein Gewindezahnprofil GP bildet mit einem Gewindezahnprofilkopf K und zwei seitlich anschließenden Gewindezahnprofilflanken, einer vorderen Gewindezahnprofilflanke F1 und einer hinteren Gewindezahnprofilflanke F2.

Dabei sind hier und im Folgenden "vorne" oder "vordere" als in Richtung der Vorwärtsbewegung VB oder dem Windungssinn W des Gewindeerzeugungsbereiches 4 folgend zu verstehen und "hinten" oder "hintere" als in entgegengesetzter Richtung, also entgegengesetzt zur Richtung der Vorwärtsbewegung oder in Richtung der Rückwärtsbewegung RB oder entgegengesetzt zum Windungssinn W des Gewindeerzeugungsbereiches 4 zu verstehen.

In einer in FIG 3 und 4 nicht dargestellten formenden oder spanlosen Variante kann in allen Ausführungsformen anstelle einer Gewindeschneide 75 auch ein Gewindedrücksteg vorgesehen sein, der das Gewindezahnprofil GP darstellt, oder auch eine Kombination aus Schneide(n) und Drücksteg(en).

Das Gewindezahnprofil GP des Gewindezahnes 7 kann bereits das endgültige Gewindeprofil des erzeugten Gewindeganges sein oder auch ein Zwischen- oder Vorprofil, beispielsweise ein Anschnitt- oder Anfurchprofil, das sich mit weiteren Gewindezahnprofilen weiterer Gewindezähne zu einem Gesamtgewindewirkprofil überlagert.

Der Gewindezahn 7 folgt im Allgemeinen einer Schraubenlinie, die unter dem Gewindesteigungswinkel $\delta$ zu einer Transversalebene, beispielsweise E1 oder E2, die senkrecht oder orthogonal zur Werkzeugachse A gerichtet ist, verläuft. Dabei liegt der Gewindezahn 7 im Allgemeinen innerhalb eines helikalen Bereiches, der nach vorne von einer vorderen Gewindezahnflankeneinhüllenden G1 und nach hinten von einer hinteren Gewindezahnflankeneinhüllenden G2 begrenzt wird.

Die vordere Gewindezahnflankeneinhüllende G1 als geometrische Fläche beginnt an der oder umfasst die vordere Gewindezahnprofilflanke F1 des Gewindezahnprofils GP und verläuft relativ zu einer vorderen Transversalebene E1, die durch den äußersten oder vordersten Punkt oder Rand der vorderen Gewindezahnprofilflanke F1 verläuft, unter dem Gewindesteigungswinkel $\delta$ nach hinten geneigt. Mit anderen Worten, man kann die vordere Gewindezahnflankeneinhüllende G1 geometrisch bilden, indem man die vordere Gewindezahnprofilflanke F1 entlang der Schraubenlinie mit dem Gewindesteigungswinkel $\delta$ rückwärts oder entgegengesetzt zum Windungssinn W oder zur Vorwärtsrichtung VB bewegt.

Die hintere Gewindezahnflankeneinhüllende G2 als geometrische Fläche beginnt an der oder umfasst die hintere Gewindezahnprofilflanke F2 der Gewindeschneide 75 und verläuft relativ zu einer hinteren Transversalebene E2, die durch den äußersten oder hintersten Rand oder Punkt der hinteren Gewindezahnprofilflanke F2 verläuft, unter dem Gewindesteigungswinkel $\delta$ nach hinten geneigt. Mit anderen Worten, man kann die hintere Gewindezahnflankeneinhüllende G2 geometrisch bilden, indem man die hintere Gewindezahnprofilflanke F1 entlang der Schraubenlinie mit dem Gewindesteigungswinkel $\delta$ rückwärts oder entgegengesetzt zum Windungssinn W oder zur Vorwärtsrichtung VB bewegt.

Der Gewindezahn 7 weist nun eine vordere Flankenfreifläche (Freifläche an der Gewindezahnflanke) 71 an seiner vorderen Gewindezahnflanke auf, die sich unmittelbar hinter der vorderen Gewindezahnprofilflanke F1 des Gewindezahnprofils GP anschließt. Die vordere Flankenfreifläche 71 des Gewindezahns 7 ist gegenüber der vorderen Gewindezahnflankeneinhüllenden G1 nach innen oder nach hinten oder entgegengesetzt zur Vorwärtsrichtung VB oder dem Windungssinn W freigestellt oder zurückversetzt, insbesondere um einen Flankenfreiwinkel $\alpha1$ geneigt. Dies kann durch Freischleifen, beispielsweise mit einer Schleifscheibe, erfolgen. Diese Maßnahme ist bei der Gewindeerzeugungsbewegung zum Vermeiden oder Vermindern der Reibung wichtig.

Der vordere Flankenfreiwinkel $\alpha1$ der vorderen Flankenfreifläche 71 beträgt typischerweise $0° < \alpha1 < 10°$, insbesondere $0° < \alpha1 < 2°$, ist somit bevorzugt in der Größenordnung einiger Grad.

Ferner weist der Gewindezahn 7 eine hintere Flankenfreifläche (Freifläche an der Gewindezahnflanke) 72 an seiner hinteren Gewindezahnflanke auf, welche sich unmittelbar hinter der hinteren Gewindezahnprofilflanke F1 des Gewindezahnprofils GP anschließt.

Die hintere Flankenfreifläche 72 des Gewindezahns 7 ist gegenüber der hinteren Gewindezahnflankeneinhüllenden G2 nach innen oder nach vorne oder in der Vorwärtsrichtung VB oder in dem Windungssinn W freigestellt oder zurückversetzt, insbesondere um einen Flankenfreiwinkel $\alpha2$ geneigt. Dies kann wiederum durch Freischleifen, beispielsweise mit einer Schleifscheibe, erfolgen.

Für den hinteren Flankenfreiwinkel $\alpha2$ gilt $\delta < \alpha2$ und insbesondere $\alpha2 < 2\delta$ oder $\delta < \alpha2 < 6°$, beispielsweise $\delta < 4° < \alpha2 < 5°$. Der Flankenfreiwinkel $\alpha2$ der hinteren Flankenfreifläche 72 ist also zumindest größer als der Gewindesteigungswinkel $\delta$, bevorzugt auch um einige Grad.

In dieser aber auch in anderen Ausführungsformen ist gemäß der Erfindung die hintere Flankenfreifläche 72 des Gewindezahns 7 (auch) gegenüber der hinteren Transversalebene E2 nach innen oder nach vorne oder in Vorwärtsrichtung VB oder im Windungssinn W freigestellt oder zurückversetzt, insbesondere um den (Frei)Winkel $\alpha2 - \delta$ geneigt. Diese Maßnahme ist nun bei der Freistich- oder Abbremsbewegung zum Vermeiden oder Vermindern der Reibung von großem Vorteil.

Anstelle der dargestellten, in der Abwicklung linear und im realen Raum helikal verlaufenden Flankenfreiflächen 71 und 72 können auch nicht-lineare oder gekrümmte Formen gewählt werden, insbesondere sich zumindest abschnittsweise noch stärker aufeinander zu verjüngende oder auch weniger stark aufeinander zu verjüngende Flankenfreifläche 71 und 72 bzw. Gewindezahnflankenformen. In einer solchen Ausführungsform kann der entsprechende Flankenfreiwinkel eine Begrenzungslinie oder -fläche festlegen, die von der Flankenfreifläche nicht (nach außen) überschritten wird.

Es soll nur gewährleistet sein, dass der Gewindezahn 7 an seinen Flanken in Vorschubrichtung oder auch Vorwärtsrichtung VB gesehen hinter den Gewindezahnprofilflanken F1 und F2 jeweils eine Flankenfreifläche 71 bzw. 72 aufweist oder ausbildet, wobei die vordere Flankenfreifläche 71 des Gewindezahnes 7 gegenüber der vordere Gewindezahnflankeneinhüllende G1 nach innen oder hinten zurückversetzt oder freigestellt ist und damit auch gegenüber der vorderen Transversalebene E1, und wobei gemäß der Erfindung die hintere Flankenfreifläche 72 gegenüber der hinteren Transversalebene E2 nach innen oder vorne zurückversetzt oder freigestellt ist ist und damit auch gegenüber der hinteren Gewindezahnflankeneinhüllende G2. Durch die Maßnahmen gemäß diesen Ausführungsformen laufen die Flankenfreiflächen 71 und 72 während des gesamten Arbeitsprozesses frei und sind nicht in reibendem Kontakt oder Eingriff mit oder in der Werkstückoberfläche.

Das Versetzen der Flankenfreiflächen 71 und 72 nach innen relativ zu den Gewindezahnflankeneinhüllende G1 und G2 sichert das Freilaufen der Flankenfreiflächen 71 und 72 des Gewindezahns 7 bei dem Gewindeerzeugungsprozess in der ersten Arbeitsphase des Werkzeugs 2 und auch während des Ausfädelns aus dem Gewindegang in der zweiten Reversierphase jeweils ohne Reibung an dem Werkstück 2. Dies entspricht im Prinzip an sich dem Stand der Technik.

Das zusätzlich gemäß der Erfindung vorgesehene Versetzen der Flankenfreiflächen 71 und 72 nach innen auch relativ zu beiden Transversalebenen E1 und E2 sichert nun auch das Freilaufen der Flankenfreiflächen 71 und 72 des Gewindezahns 7 bei dem Erzeugen der Umlaufnut(en) in der zweiten Arbeitsphase des Werkzeugs 2 und auch während der Beschleunigung in der ersten Reversierphase jeweils ohne Reibung an dem Werkstück 6. Der Gewindezahn 7 arbeitet während der zweiten Arbeitsphase in einer Vorschubrichtung in dem Winkelbereich zwischen der Gewindezahnflankeneinhüllenden G1 und der Transversalebene E1 und zwischen der Gewindezahnflankeneinhüllenden G2 und der Transversalebene E2, also innerhalb des Gewindesteigungswinkels δ in FIG 3. In diesem Winkelbereich befindet sich aber keine der Flankenfreiflächen 71 und 72. Dadurch wird die aufgrund des vergleichsweise hohen Materialabtrags in dieser zweiten Arbeitsphase entstehenden Belastungen auf den Gewindezahn 7 deutlich reduziert. Mit anderen Worten, der Gewindezahn kommt an seinen Freiflächen nicht nur während der Gewindeerzeugungsphase oder ersten Arbeitsphase nicht in Kontakt mit dem Werkstück, sondern es erfolgt auch während der Abbremsphase oder zweiten Arbeitsphase zur Erzeugung der Umlaufnut(en), also bei einer Bewegung mit geringerer Steigung als der Gewindesteigung bis hin zu Steigung 0, kein Kontakt des Gewindezahns an seinen Freiflächen mit dem Werkstück, und störende Reibungskräfte werden somit auch in dieser zweiten Arbeitsphase vermieden oder zumindest stark reduziert.

Dies ist aus dem Stand der Technik nicht bekannt. Bei dem aus der DE 10 2016 008 478 A1 bekannten Werkzeug läuft der Gewindezahn während der ersten Arbeitsphase, also dem Gewindeschneiden, wohl frei, jedoch während der zweiten Arbeitsphase, der Erzeugung der Umlaufnut, nicht vollständig frei, sondern es erfolgt noch ein teilweiser Eingriff in das Werkstück und reibender Kontakt an der hinteren Zahnflanke.

In dem in FIG 3 dargestellten Ausführungsbeispiel kann der Gewindezahn 7 zusätzlich als Anschnittzahn ausgebildet sein. Das Gewindezahnprofil GP entspricht somit noch nicht dem endgültigen Gewindeprofil des Gewindeganges, sondern ist kleiner als dieses. Dazu weist der Gewindezahn 7 auf seinem Zahnrücken einen Anschnitt oder eine Fase oder eine Freifläche 74 auf, die an der Gewindeschneide 75 einen flachen Zahnkopf K ausbildet, so dass ein trapezförmiges Gewindezahnprofil GP entsteht, und dann nach hinten abfällt und sich bis zu einem im Wesentlichen linienförmigen Zahnsteg 73 verjüngt. Dadurch ist der Gewindezahn 7 auch an seinem Zahnrücken mit einer Freifläche oder einem nicht dargestellten Freiwinkel versehen und reibt auch dort nicht an dem Werkstück.

In FIG 4 ist ein Gewindezahn 7, der gleich oder ähnlich zu dem Gewindezahn 7 gemäß FIG 3 ausgebildet ist, in einer perspektivischen Ansicht auf einem Werkzeug 2 gemäß einer Ausführungsform der Erfindung gezeigt, beispielsweise einem Werkzeug 2 mit Bohrbereich 3 und Gewindeerzeugungsbereich 4 wie hier beschrieben und z.B. in FIG 1 dargestellt ist. Der Gewindezahn 7 kann dabei insbesondere der in Vorwärtsrichtung VB gesehen vorderste oder erste Gewindezahn des Gewindeerzeugungsbereichs 4 sein, beispielsweise der Gewindezahn 41 in FIG 1, oder auch ein Gewindezahn an einer bestimmten Stelle in einem Anschnittbereich mit mehreren Anschnittzähnen. In einer Ausführungsform mit einem formenden Gewindezahn wäre es entsprechend ein Anfurchbereich.

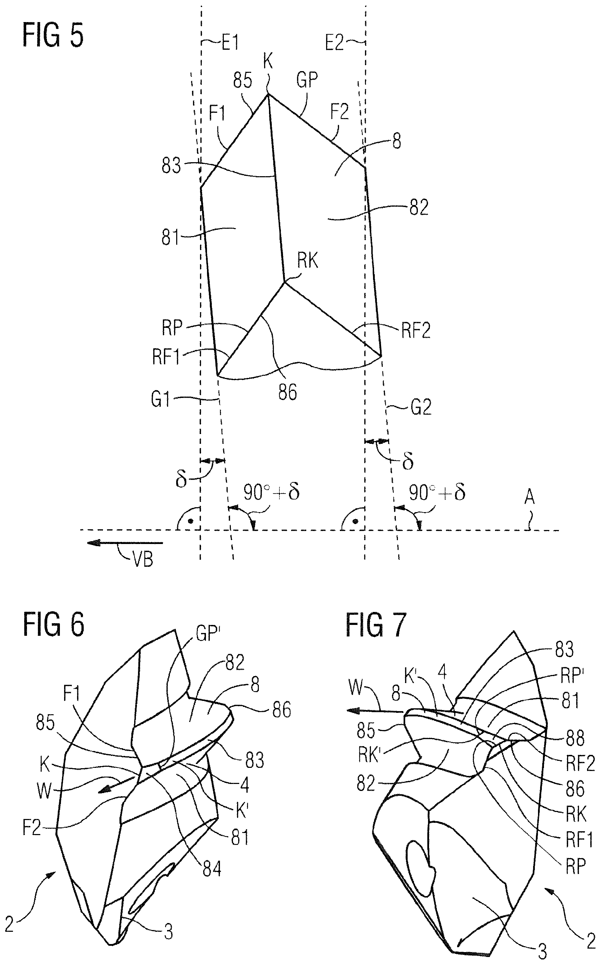

Die FIG 5 zeigt nun ein Ausführungsbeispiel eines Gewinde- und Räumzahnes 8 für ein Werkzeug gemäß der Erfindung in einer schematischen Darstellung gemäß einer Abwicklung. FIG 6 und 7 zeigen ein konkretes Beispiel eines ähnlichen Gewinde- und Räumzahnes 8 in einer 3-D-Ansicht.

Der Gewinde- und Räumzahn 8 ist in einer ersten Funktion oder Hauptfunktion zum vollständigen Erzeugen oder Fertigstellen oder Nachbearbeiten des Gewindeganges oder des Gewindeprofils des Gewindeganges vorgesehen.

Dazu umfasst der Gewinde- und Räumzahn 8 an seinem in Vorschubrichtung oder Vorwärtsrichtung VB oder im Windungssinn W gesehen vorne angeordneten vorderseitigen Bereich eine Gewindeschneide 85 mit einem Gewindezahnprofil GP, das einen Gewindezahnprofilkopf K, eine vordere Gewindezahnprofilflanke F1 und eine hintere Gewindezahnprofilflanke F2 aufweist. Im dargestellten Ausführungsbeispiel der FIG 5 ist das Gewindezahnprofil GP dreieckig, in FIG 6 trapezförmig. Es sind aber mit dem Werkzeug in allen Ausführungsformen beliebige, insbesondere alle bekannten, Gewindeprofile darstellbar und erzeugbar.

In Ausführungsformen, beispielsweise wie in FIG 5 gezeigt, wird das gesamte Gewindezahnprofil GP schneidend erzeugt, bildet die Gewindeschneide 85 also das gesamte Gewindeprofil ab.

In Ausführungsformen, beispielsweise wie in FIG 6 gezeigt, wird ein in der Regel unterer Teil GP des Gewindeprofils schneidend erzeugt, bildet die Gewindeschneide 85 also diesen Teil des Gewindeprofils ab, und wird das restliche Gewindeprofil spanlos durch Eindrücken oder Furchen erzeugt. Dazu umfasst der Gewinde- und Räumzahn 8 in solchen Ausführungsformen hinter der Gewindeschneide 85 am Zahnrücken einen Furchbereich, der von der Gewindeschneide 85 ausgehend nach außen zunimmt, beispielsweise in Form einer insbesondere flachen, Furchfläche 84, die unter einer Furchsteigung ansteigt bis zu einem, insbesondere flachen oder auf einer Zylinderfläche liegenden, Zahnsteg 83. Dieser Zahnsteg 83 bildet einen Kalibrierbereich für diesen Gewindefurchbereich und bildet vorzugsweise den endgültigen Gewindezahnprofilkopf K' oder bildet den endgültigen Gewindegrund des Gewindeganges im Werkstück ab. Die Breite des Gewindezahnprofilkopfes K' des Zahnsteges 83 ist kleiner als die des Gewindezahnprofilkopfes K der Gewindeschneide 85, die Gewindezahnprofilflanken F1 und F2 setzen sich über die Anfurchfläche bis zum Gewindezahnprofilkopf K' fort. Das resultierende Gewindezahnprofil GP' ist am Ende der Gewindefurchfläche 84 oder an dem Übergangsbereich zwischen Gewindefurchfläche 84 und Zahnsteg 83 erreicht.

In einer nicht dargestellten Ausführungsform kann der Gewinde- und Räumzahn 8 auch ausschließlich formend oder spanlos allein mit wenigstens einem Furchelement beim Gewindeerzeugen arbeiten.

In jedem Fall ist im vorderseitigen Bereich des Gewinde- und Räumzahnes 8 ein Gewindezahnelement vorgesehen, das das Gewindezahnprofil GP abbildet, sei es allein durch eine Gewindeschneide 85, durch Kombination einer Gewindeschneide 85 mit einer Gewindefurchfläche 84 oder auch allein durch ein Furchelement.

Ferner ist der Gewinde- und Räumzahn 8 auch, in einer zweiten Funktion, als Räumzahn oder zum Räumen des bereits erzeugten Gewindeganges oder auch der Umlaufnut von darin befindlichen Spänen oder Spanwurzeln oder sonstigen Rückständen während der Rückwärtsbewegung RB in der zweiten Reversierphase und auch in der ersten Reversierphase vorgesehen.

Zu diesem Zweck weist der Gewinde- und Räumzahn 8 an seinem in Vorschubrichtung oder Vorwärtsrichtung VB oder im Windungssinn W gesehen hinten angeordneten rückseitigen Bereich eine Räumschneide 86 auf mit einem Räumprofil RP, das einen Räumprofilkopf K, eine vordere Räumprofilflanke F1 und eine hintere Räumprofilflanke F2 aufweist. Das Räumprofil RP kann insbesondere zum Gewindezahnprofil GP korrespondieren oder gleich oder zumindest ähnlich sein, also z.B. im dargestellten Ausführungsbeispiel der FIG 5 ebenfalls dreieckig und im dargestellten Ausführungsbeispiel der FIG 7 ebenfalls trapezförmig. Mit der Räumschneide 86 werden die im Gewindegang oder in der Umlaufnut befindlichen Fremdkörper, insbesondere Späne oder Spanwurzeln, zertrennt oder abgetrennt.

Die Räumfunktion wird, beispielsweise gemäß FIG 7, ergänzend erfüllt durch eine Räumfläche 88, die von der Räumschneide 86 von deren Räumprofilkopf RK zu dem Zahnsteg 83 ansteigt analog zur Anfurchfläche 74, die von der Gewindeschneide 75 zum Zahnsteg 83 ansteigt. Die Räumfläche 88 drückt noch verbleibende Reste von Spanwurzeln oder dergleichen in die Werkstückoberfläche und/oder glättet die Werkstückoberfläche, insbesondere im Gewindegang, und kann auch zur Stabilisierung des Werkzeuges bei seiner Bewegung dienen.

Die Räumschneide 86 allein oder auch in Kombination mit der Räumfläche 88 bildet bzw. bilden ein Räumelement an der Rückseite oder im rückwärtigen Bereich des Gewinde- und Räumzahnes 8, also dem Bereich, der bei der Reversierbewegung den zuerst eintretenden Bereich im Gewindegang bildet.

Das Räumelement 86 oder 86 und 88 bildet als gemeinsames Wirkprofil ein Räumprofil RP, das vorzugsweise dem Gewindeprofil des erzeugten Gewindes entspricht, so dass keine Zwischenspalte bei dem Räumvorgang entstehen.

Die Zahnflanken 81 und 82 des Gewinde- und Räumzahnes 8 sind nun insbesondere so gestaltet, insbesondere mit einer Schleifscheibe geschliffen, dass sie zumindest überwiegend oder vollständig oder über ihre gesamte Länge entlang der zugehörigen vorderen Gewindezahnflankeneinhüllenden G1 bzw. hinteren Gewindezahnflankeneinhüllenden G2 oder ohne Freiflächen oder Freiwinkel verlaufen.

Auch der Zahnsteg 83 weist vorzugsweise keine Freiflächen auf. Dadurch läuft der Gewinde- und Räumzahn 8 bei der Reversier- oder Rückwärtsbewegung ohne Zwischenspalt durch den erzeugten Gewindegang und die Räumfunktion wird optimiert, da sich keine Späne oder Rückstände in einen solchen Zwischenspalt klemmen können und Rückstände wie Spanwurzeln an der Werkstückoberfläche vollständig in diese eingedrückt werden können.

Die Ausgestaltung des Gewinde- und Räumzahnes 8 mit einem vollen Gewindezahnprofil und einem vollen Räumprofil ermöglicht auch eine Trennung der beiden Funktionen, so dass das Räumelement bei der Vorwärtsbewegung möglichst nicht arbeitet.

Die formenden Fasen auf der vorderen und hinteren Seite, d.h. die Furchfläche 84 und die Räumfläche 88, stabilisieren auch die Schneidenecken und die Schneidkante gegen Bruch bei Spanklemmern und auch gegenüber dem Druck auf die hintere Flanke, der sich im Bereich des Abbremsens durch den kleineren programmierten Vorschub in z-Richtung ergibt, gegen Ausbrüche.

Grundsätzlich genügt für ein derartiges "vollständiges" Räumen auch nur ein abschnittsweises Vollprofil ohne Freiflächen und können abschnittsweise dennoch Freiflächen oder Freischliffe an den Zahnflanken 81 und 82 vorgesehen sein, um die Reibung des Gewinde- und Räumzahnes 8 zu reduzieren.

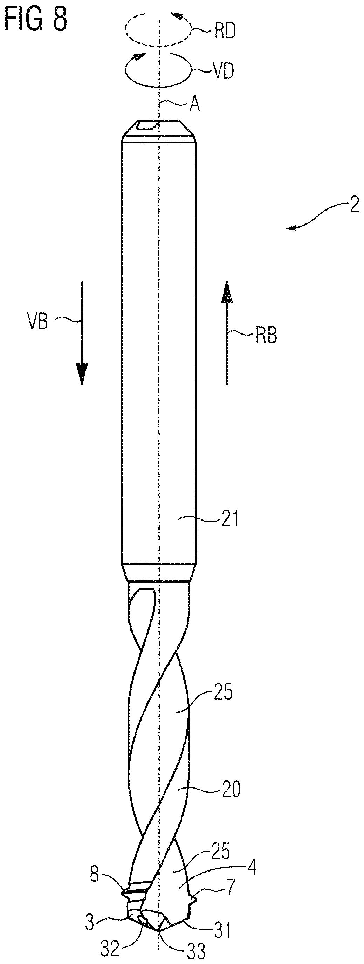

In den FIG 8 bis 10 ist nun ein Ausführungsbeispiel eines Werkzeug 2 zum Erzeugen eines Gewindeloches in einem Werkstück gezeigt, Das Werkzeug 2 ist wieder ein kombiniertes Werkzeug und erzeugt sowohl das Kernloch in dem Werkstück mit dem vorgegebenen Kernlochdurchmesser des Gewindes mittels des Bohrbereichs 3 als auch das Innengewinde in dem Kernloch, d.h. den Gewindegang des Innengewindes in der Mantelwandung oder Innenwandung des Kernloches, mittels des Gewindeerzeugungsbereichs 4.

Der Gewindeerzeugungsbereich 4 umfasst nun sowohl einen Gewindezahn 7 nach einer Ausführungsform gemäß FIG 3 oder 4 als auch einen Gewindezahn 8 nach einer Ausführungsform gemäß FIG 5, 6 oder 7 aufweist, beispielsweise ausgehend von einem Werkzeug 2 gemäß FIG 1 durch Ersatz des Gewindezahnes 41 durch den Gewindezahn 7 und des Gewindezahnes 42 durch den Gewindezahn 8.

Der Gewindezahn 7 bildet, insbesondere als Anschnittzahn, den vordersten Gewindezahn des Gewindeerzeugungsbereichs 4 und der Gewindezahn 8, insbesondere als Nachschnitt- und Nachfurch- und Kalibrierzahn sowie als Räumzahn, den hintersten Gewindezahn. Es können vor dem Gewindezahn 7 oder zwischen dem Gewindezahn 7 und dem Gewindezahn 8 auch weitere Gewindezähne vorgesehen sein. Der Gewindezahn 7 und der Gewindezahn 8 sind beispielsweise um P/2 oder 180° zueinander versetzt, um eine symmetrische Teilung und Kraftverteilung zu erreichen, bei n Gewindezähnen entsprechend P/n bzw. 360°/n. Es kann aber auch eine andere asymmetrische oder ungleiche Teilung vorgesehen sein.

Die beiden Gewindezähne 7 und 8 sind durch Trennnuten 25, die insbesondere Spannuten oder auch Kühl- und/oder Schmiermittelnuten bilden, voneinander getrennt. Die Trennnuten 25 beginnen im Bohrbereich 3 und setzen sich durch den Gewindeerzeugungsbereich 4 hindurch insbesondere bis in den Schaftbereich fort und verlaufen vorzugsweis gedrallt unter einem konstanten oder variablen Drallwinkel, der typischerweise in einem Intervall von 0° bis 50°, insbesondere 20° bis 35° liegt.

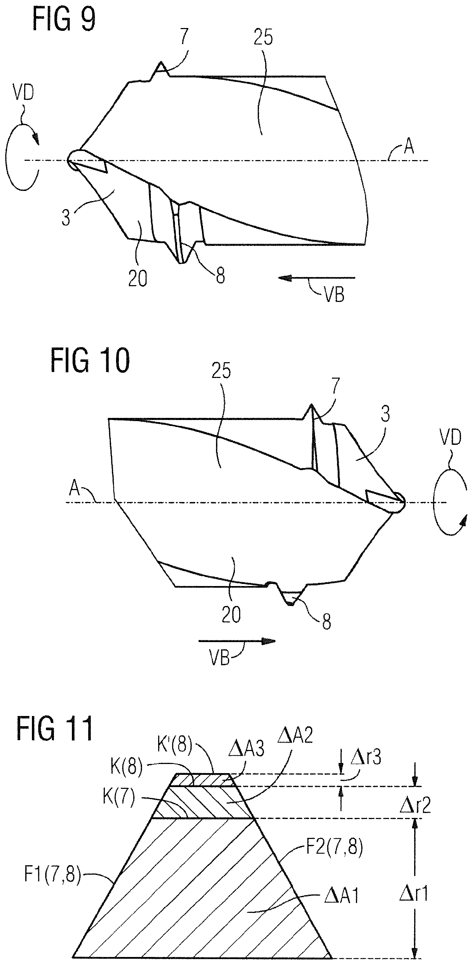

Die FIG 11 bis 17 zeigen Ausführungsbeispiele einer Aufteilung der Gewindewirkprofile, beispielsweise bei dem Werkzeug 2 gemäß FIG 8 bis 10. Das Gewindeprofil wird sukzessive durch Überlagerung einzelner Wirkprofile erzeugt.

In FIG 11 und 12 und 13 sowie 15 erzeugt die Gewindeschneide 75 mit dem Gewindezahnprofil GP des Gewindezahnes 7 den unteren schraffierten Bereich mit der Gewindezahnprofilfläche $\Delta A1$ und der Gewindezahnprofiltiefe $\Delta r1$ mit dem Gewindezahnprofilkopf K und den Gewindezahnprofilflanken F1 und F2 des Gewindezahnes 7. Der Gewindezahn 8 erzeugt nun im Anschluss zunächst mit seiner Gewindeschneide 85 den zusätzlichen anders schraffierten Bereich mit der zusätzlichen Gewindezahnprofilfläche $\Delta A2$ und zusätzlichen Gewindezahnprofiltiefe $\Delta r2$ und dem Gewindezahnprofilkopf K der Gewindeschneide 85 des Gewindezahnes 8 und dann unmittelbar anschließend mittels seiner Furchfläche 84 den dritten wieder anders schraffierten Bereich mit der zusätzlichen Gewindezahnprofilfläche $\Delta A3$ und der zusätzlichen Gewindezahnprofiltiefe $\Delta r3$ mit dem finalen Gewindezahnprofilkopf K' des Zahnsteges 83 des Gewindezahnes 8.

In FIG 11 ist beispielhaft $\Delta A1 > \Delta A2 > \Delta A3$ und $\Delta r1 > \Delta r2 > \Delta r3$ gewählt.

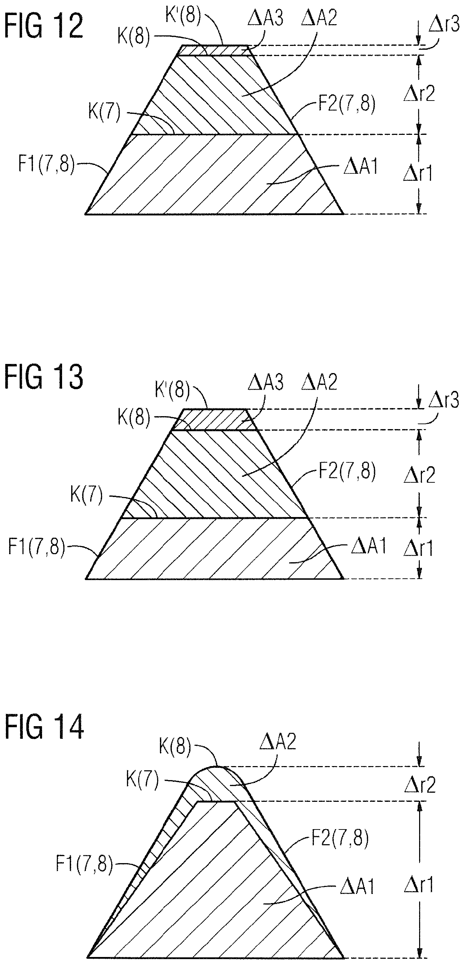

In FIG 12 ist beispielhaft $\Delta A1 > \Delta A2 > \Delta A3$ und $\Delta r1 = \Delta r2$ und $\Delta r2 > \Delta r3$ gewählt.

In FIG 13 ist beispielhaft $\Delta A1 = \Delta A2$ und $\Delta A2 > \Delta A3$ und $\Delta r3 < \Delta r1 < \Delta r2$ gewählt.

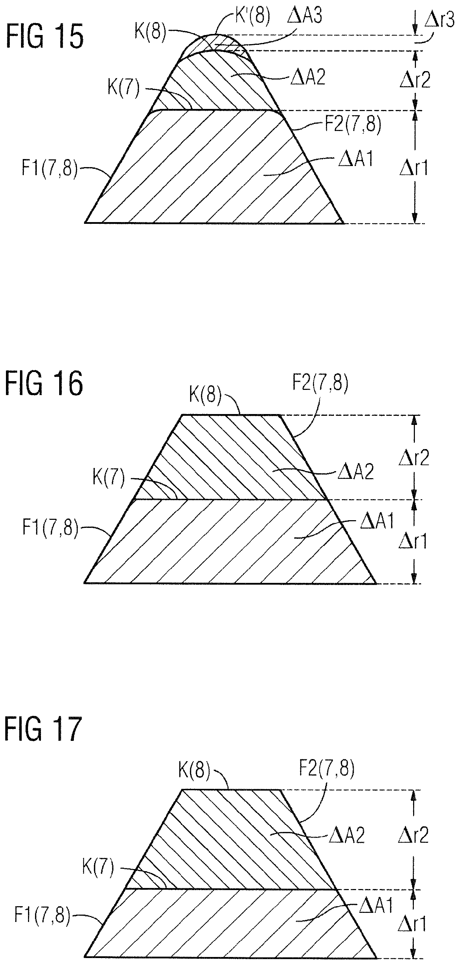

In FIG 15 ist beispielhaft $\Delta A1 > \Delta A2 > \Delta A3$ und $\Delta r1 > \Delta r2 > \Delta r3$ gewählt.

Die Flanken F1 und F2 setzen sich bei allen Gewindewirkprofilen in FIG 11, 12 und 13 sowie FIG 15 bis 17 nach oben fort oder behalten den Flankenwinkel bei, können also bei den Gewindezähnen 7 und 8 in ihrer Ausrichtung übereinstimmen.

In FIG 14 ist dagegen ein Ausführungsbeispiel gezeigt, bei dem sich die Flanken der Gewindewirkprofile, insbesondere in ihrem Flankenabstand, unterscheiden, also auch die Flanken sukzessive weiter nach außen in das Werkstück gearbeitet werden. Der Gewindezahnprofilkopf K(7) mit den Flanken des ersten Wirkprofils kann noch trapezförmig oder mit Ecken versehen sein und der Gewindezahnprofilkopf K(8) des zweiten Wirkprofils kann auch abgerundet oder rund ausgebildet sein. Auch hier sind viele weitere Ausführungsformen möglich.

Im Ausführungsbeispiel der FIG 15 sind die Gewindezahnprofilköpfe K(7) und K(8) sowie K'(8) ganz oder zumindest an den Ecken oder Übergangsbereichen zu den Flanken abgerundet oder konvex gekrümmt. Dies verringert die Kräfte oder Gefahr einer Rissbildung an den Eckbereichen.

In Ausführungsformen, beispielsweise wie in FIG 14 und 16 und 17 dargestellt, wird das Gewindeprofil durch nur zwei Gewindewirkprofile erzeugt, einerseits dem, beispielsweise wieder mit dem Gewindezahn 7 erzeugten, unteren (inneren) schraffierten Bereich mit der Gewindezahnprofilfläche ΔA1 und der Gewindezahnprofiltiefe Δr1, insbesondere mit dem Gewindezahnprofilkopf K und den Gewindezahnprofilflanken F1 und F2 des Gewindezahnes 7, und dem, insbesondere mit dem Gewindezahn 8 erzeugten, oberen (äußeren) anders schraffierten Bereich mit der zusätzlichen Gewindezahnprofilfläche ΔA2 und zusätzlichen Gewindezahnprofiltiefe Δr2, insbesondere mit dem Gewindezahnprofilkopf K der Gewindeschneide 85 des Gewindezahnes 8.

In FIG 14 ist beispielhaft ΔA1 > ΔA2 und Δr1 > Δr2 gewählt.

In FIG 16 ist beispielhaft ΔA1 > ΔA2 und Δr1 = Δr2 gewählt.

In FIG 17 ist beispielhaft ΔA1 = ΔA2 und Δr1 < Δr2 gewählt.

Gleiche Gewindezahnprofilflächen, insbesondere ΔA1 = ΔA2 wie z.B. in FIG 13 und FIG 17, bedeuten in der Regel gleiche Volumina des geschnittenen oder geformten Gewindegangteilprofils des Gewindeganges 50. Gleiche Gewindezahnprofiltiefen, insbesondere Δr1 = Δr2 wie z.B. in FIG 12 und FIG 16, bedeuten in der Regel gleiche Spandicken beim Schneiden oder Eindrücktiefen beim Formen der entsprechenden Gewindegangteilprofile des Gewindeganges 50.

Bei anders gestalteten und/oder mehr als zwei Gewindezähnen 7 und 8 oder 41 und 42 kann die Aufteilung im mehr Wirkprofile und mit noch mehr Kombinationen und Freiheitsgraden gestaltet werden.

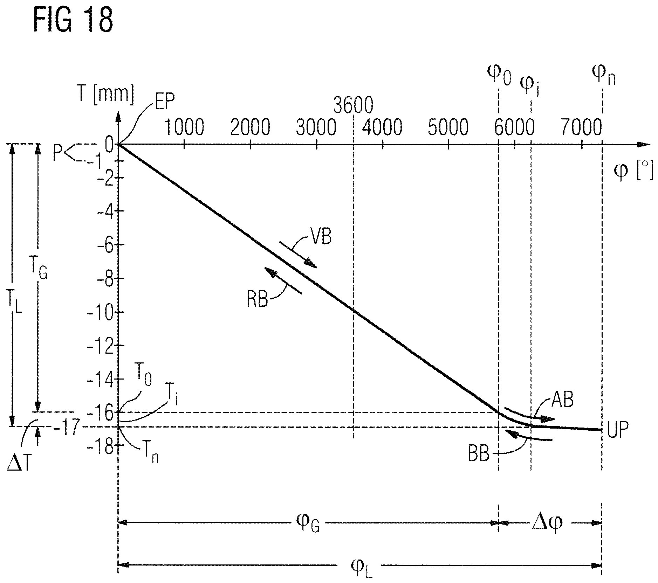

Die FIG 18 bis 20 zeigen anhand jeweils eines Diagramms ein Ausführungsbeispiel eines Prozesses (oder: Verfahrens) oder eines Steuerungsablaufs, der sowohl zur Erzeugung eines Gewindes in einem vorab erzeugten Kernloch im Werkstück oder zur Erzeugung eines Gewindeloches im Werkstück, also im Vollmaterial des Werkstücks ohne vorherige Kernbohrung, beispielsweise eines Gewindeloches gemäß FIG 2, verwendet werden kann.

Zur Erzeugung eines Gewindes in einem vorerzeugten Kernloch kann ein Gewindebohrer oder Gewindefurcher gemäß dem eingangs erwähnten Stand der Technik verwendet werden.

Zur Erzeugung eines Gewindeloches kann ein kombiniertes Bohr- und Gewindebohr-werkzeug, wie aus der eingangs erwähnten DE 10 2016 008 478 A1 bekannt, oder ein kombiniertes Bohr- und Gewindefurchwerkzeug, wie aus der eingangs erwähnten DE 10 2005 022 503 A1 bekannt, oder auch ein Werkzeug gemäß der Erfindung, beispielsweise gemäß FIG 1, verwendet werden.

In dem Diagramm der FIG 18 ist auf der vertikalen Achse oder Ordinate die Eindringtiefe (oder: vertikale oder axiale Koordinate) T als in axialer Richtung, d.h. entlang der Werkzeugachse A und der zur Werkzeugachse A koaxialen Gewindemittelachse M, verlaufende und gemessene Koordinate für den axialen Vorschub in mm aufgetragen. Die Werte für die Eindringtiefe T nehmen von dem ganz oben dargestellten Wert T = 0 mm, der insbesondere der axialen Eintrittsposition an der Werkstückoberfläche 60 des Werkstücks 6 entspricht (wie man in FIG 1 erkennen kann) nach unten ab, sind also als negative Werte nach unten aufgetragen. Der Zahlenbereich geht in dem Beispiel der FIG 1 bespielhaft von T = 0 mm bis T = - 18 mm.

Auf der horizontalen Achse oder Abszisse ist der (aufsummierte) Drehwinkel φ der Drehbewegung des Werkzeugs 2 um dessen Werkzeugachse A in Grad [°] aufgetragen. Der Drehwinkel φ geht aus von dem Eintrittsdrehwinkel oder anfänglichen Drehwinkel φ = 0° bei der axialen Eintrittsposition T = 0 mm bei einem Eintrittspunkt EP = (0, 0) und nimmt nach rechts zu positiven Werten hin bis zu dem auf der Abszisse als letzten Wert eingetragenen Wert von φ = 8000° zu. Der Drehwinkel φ nimmt bei der Vorwärtsdrehbewegung VD oder in einem Vorwärtsdrehsinn hin zu positiven Werten zu und bei der Rückwärtsdrehbewegung RD oder einem dem Vorwärtsdrehsinn entgegengesetzten Rückwärtsdrehsinn ab. Dabei entspricht ± 360° einer vollständigen Umdrehung des Werkzeugs 2 um seine Werkzeugachse A.

In dem Graphen der Funktion T (φ) gemäß FIG 18 ist, ohne Beschränkung der Allgemeinheit, insbesondere die Erzeugung eines Gewindeloches, also ein vollständiger Gewindelocherzeugungszyklus gemäß der Erfindung in einem Ausführungsbeispiel veranschaulicht, insbesondere ein Gewindelocherzeugungszyklus mit erster Arbeitsphase, zweiter Arbeitsphase, Umkehrpunkt, erster Reversierphase und zweiter Reversierphase, beispielsweise wie anhand FIG 1 und 2 bereits beschrieben.

Die Funktion T (φ) beschreibt die Abhängigkeit oder Synchronisierung der axialen Vorschubbewegung in der axialen Koordinate (oder: Tiefe im Werkstück 6) T von oder mit der Drehbewegung in der Koordinate φ und wird typischerweise in einer Steuerung wie einer numerischen Steuerung oder CC-Steuerung der Werkzeugmaschine, insbesondere in Form einer vorab ermittelten und gespeicherten Wertetabelle oder auch als Funktion zur jeweiligen Berechnung, hinterlegt. Nach der in der CNC-Technik üblichen Nomenklatur entspräche die T-Koordinate der Z-Achse (Spindelachse), wobei die positive Richtung konventionell vom Werkstück zum Werkzeug verläuft, wie beispielsweise in FIG 1 bei der Koordinate T eingezeichnet.

Der Graph (cp; T (cp)) der Funktion T (cp) verläuft gemäß FIG 18 zunächst einen für einen Gewindebohrer oder Gewindefurcher typischen und der Erzeugung des Gewindeganges entsprechenden linearen Abschnitt, d.h. in Form einer Geraden, von dem Ausgangspunkt φ = 0° und T = 0 mm bis zu einem Gewindeendpunkt bei φ₀ und T(φ₀) = - 16 mm, bei dem der Gewindegang oder die eigentliche Gewindeerzeugung endet.

Es gilt also die Darstellung der linearen Funktion T (cp) in diesem Abschnitt von φ = 0 bis φ = φ₀ und T = 0 bis T = - 16 mm:

$$|T(\varphi)| = (P/360°) \varphi$$

mit der Gewindesteigung P.

Die Steigung oder Ableitung $dT/d\varphi$ in diesem Bereich ist konstant und entspricht dem Betrage nach $P / 360°$. Das bedeutet also für die Gewindesteigung

$$P = 360° |dT/d\varphi|$$

Da bei dem gewählten Beispiel der FIG 18 der zum eingetragenen Winkelwert $\varphi = 3600°$ entsprechende Wert für die Gewindetiefe T = - 10 mm ist, ist die Steigung der Geraden - 1 mm / 360° und damit die Gewindesteigung P = 1 mm.

Aufgrund des zur Drehung synchronisierten axialen Vorschubs entlang der Eindringtiefe T bzw. Gewindemittelachse M sind bei einer vollständigen Umdrehung um 360° alle Komponenten des Werkzeugs 2 um die Gewindesteigung P weitergewandert.

Der lineare Abschnitt der Funktion T ($\varphi$) entspricht der üblichen synchronisierten Gewindebohreroder Gewindefurcher-Kinematik und kann in einer CNC-Steuerung beispielsweise als schon fest programmierte Wegbedingung (Adressbuchstabe G oder G-Funktion) hinterlegt sein, z.B. als G33, insbesondere G331 und G332, wobei die Gewindesteigung P als Interpolationsparameter parallel zur Z-Achse eingegeben wird, typischerweise unter dem Adressbuchstaben K in der CNC-Nomenklatur.

In diesem linearen Abschnitt erfolgt der Gewindeerzeugungsprozess, insbesondere zur Erzeugung des Gewindeganges 50 in der ersten Arbeitsphase gemäß FIG 1 und 2, und wird ein Gewinde der Gewindetiefe $T_G$ als Intervalllänge der Eindringtiefe T, insbesondere von T = 0 bis $T_0$, über die Intervalllänge oder den Drehwinkelbereich $\varphi_G$ des Drehwinkels $\varphi$, insbesondere von $\varphi = 0°$ bis $\varphi = \varphi_0$ erzeugt. Im Beispiel der FIG 18 findet der Gewindeerzeugungsprozess (erste Arbeitsphase) von $\varphi = 0°$ bis $\varphi = \varphi_0$ und von der entsprechenden Eindringtiefe T = 0 mm bis T = - 16 mm statt.

Die Steigung der Geraden in FIG 18 zwischen $\varphi = 0$ und $\varphi = \varphi_0$ entspricht der axialen Vorschubgeschwindigkeit des Werkzeugs 2, die gemäß der Gewindesteigung P auf den Drehwinkel $\varphi$ synchronisiert ist.

Die zeitliche Abhängigkeit des Drehwinkels $\varphi(t)$ als Funktion der Zeit t und damit Eindringtiefe T(t) als Funktion der Zeit t kann während des Gewindeerzeugungsprozesses prinzipiell - auch in weiten Bereichen - variiert werden. Vorzugsweise sind aber die Drehgeschwindigkeit $dφ/dt$ und die axiale Vorschubgeschwindigkeit dT/dt während der Arbeitsbewegung VB jeweils konstant. Wenn die Drehgeschwindigkeit $dφ/dt$ verändert wird, muss also entsprechend auch die axiale Vorschubgeschwindigkeit dT/dt, also die Ableitung der Eindringtiefe T nach der Zeit t entsprechend angepasst werden, damit die Synchronisierung des axialen Vorschubs Z gemäß der Beziehung Z = P/360° erhalten bleibt.

Dies ist die bekannte und in Werkzeugmaschinensteuerungen oder CNC-Steuerungen implementierte Kinematik bei der Gewindeerzeugung mittels eines axial arbeitenden Gewindewerkzeugs wie eines Gewindebohrers oder Gewindeformers.

Im Anschluss an den Gewindeerzeugungsprozess (erste Arbeitsphase) erfolgt nun, insbesondere in der zweiten Arbeitsphase, ein Abbremsvorgang oder eine Abbremsbewegung AB in einem Drehwinkelbereich $\Delta\varphi$ zwischen den Drehwinkelwerten $\varphi_0$ und $\varphi_n$ und einem zugehörigen Eindringtiefenbereich $\Delta T$, der im Beispiel der FIG 18 von $T(\varphi_0) = - 16$ mm bis $T(\varphi_n) = - 17$ mm reicht. Am Ende der Abbremsbewegung AB ist ein Umkehrpunkt UP erreicht, bei dem das Werkzeug 2 sowohl hinsichtlich der Drehbewegung als auch hinsichtlich der axialen Vorschubbewegung kurzzeitig zu Stillstand kommt. Beim Umkehrpunkt UP ist der maximale Drehwinkelbereich $\varphi_L$ für die Erzeugung des Gewindeloches erreicht, wobei $\varphi_L = \varphi_G + \Delta\varphi$, und die maximale Eindringtiefe $T_L$ für das Gewindeloch, wobei $T_L = T_G + \Delta T$.

Während des Abbremsvorganges oder der Abbremsbewegung AB wird die axiale Vorschubgeschwindigkeit abhängig vom Drehwinkel, die der Steigung des dargestellten Graphen für die Funktion $T(\varphi)$ entspricht, verringert gemäß einer Abhängigkeit oder Funktion, die vorzugsweise streng monoton (Steigung immer fallend) oder monoton (Steigung fallend und ggf. abschnittsweise auch Null) ist, jedoch ggf. auch in Teilabschnitten auch wieder leicht ansteigen kann. Vorzugsweise wird die Steigung in einer vorgegebenen Anzahl n von einzelnen definierten programmierten oder eingespeicherten Teilschritten oder Abbremsschritten $S_i$ sukzessive verringert, wobei die Gesamtzahl oder Anzahl n eine natürliche Zahl mit n > 1 ist, im Allgemeinen 200 > n > 2, insbesondere 20 > n > 5 gewählt ist und wobei i der Zählindex für den Abbremsschritt $S_i$ ist und zwischen 1 und n liegt, also $1 \leq i \leq n$ gilt.

In jedem Teilschritt oder Abbremsschritt $S_i$ ist eine der Steuerung eines Gewindeprozesses entsprechende Synchronisierung von axialem Vorschub T (oder von der Vorschubgeschwindigkeit dT/dt) und dem Drehwinkel $\varphi$ (oder der Drehgeschwindigkeit d(p/dt) eingestellt oder programmiert, indem jedem Abbremsschritt $S_i$ mit $1 \leq i \leq n$ eine zugehörige vorgegebene Funktion $T_i(\varphi)$ mit einem zugehörigen Werteintervall $[T_{i-1}, T_i]$ über dem zugehörigen Drehwinkelintervall $[\varphi_{i-1}, \varphi_i]$ zugeordnet oder programmiert wird.

Die Funktion $T_i(\varphi)$ ist vorzugsweise linear, der Graph also (idealisiert) eine Gerade.

Dabei nimmt die programmierte oder eingespeicherte Steigung von jedem Abbremsschritt $S_i$ zum nächsten Abbremsschritt $S_{i+1}$ stufenweise oder sukzessive ab, d.h. 1 $dT_i/d\varphi | > | dT_{i+1}/d\varphi |$. Die Steigung entspricht jeweils einem Steigungsparameter.

In einer vorteilhaften Ausführungsform wird dieser Steigungsparameter als Gewindesteigung in der CNC-Steuerung programmiert, also insbesondere als Interpolationsparameter entlang der z-Achse oder der Gewindeachse M in einer G33, insbesondere G331 und G332, Wegbedingung. Dadurch können die bereits in der Steuerprogrammierung vorgegebenen Wegbedingungen oder G-Funktionen genutzt werden und es muss nur der Eingabeparameter der Gewindesteigung sukzessive geändert oder neu programmiert werden.

Somit wird also in jedem Abbremsschritt $S_i$ der zugehörige Steigungsparameter

$$P_i = |\, dT_i/d\varphi \,|$$

programmiert oder eingestellt, wobei

$$P_{i+1} < P_i$$

für alle i mit $1 \leq i \leq n$. Ferner ist

$$P_i < P$$

d.h. die Steigung in der zweiten Arbeitsphase oder während der Abbremsbewegung AB kleiner ist als die Gewindesteigung P während der ersten Arbeitsphase. Insbesondere aber ohne Beschränkung der Allgemeinheit kann $P_i = P\,(n - i)/n$ sein. Im Allgemeinen ist der letzte Wert $P_n$ immer noch größer als 0, wenn auch der kleinste Wert der Werte $P_i$.

Die Werte von $P_i$ können beispielsweise so gewählt werden, dass aus der Gewindesteigungsbewegung heraus eine stetig fortgeführte Bewegung in den Freischneidbereich möglich ist. Es soll insbesondere möglichst die Geschwindigkeit des Werkzeugs beibehalten werden. Daraus folgend können beispielsweise verschiedene Bedingungen formuliert werden, die in Näherungsfunktionen abgebildet werden können.

Dabei gilt in jedem Abbremsschritt $S_i$ für alle i mit $1 \leq i \leq n$ die Beziehung:

$$T(\varphi) = T_{i-1} - (P_i\, /\, 360°)\,(\varphi - \varphi_{i-1})$$

für $\varphi \in [\varphi_{i-1}, \varphi_i]$ mit den Randbedingungen $T(\varphi_{i-1}) = T_{i-1}$ und $T(\varphi_i) = T_i$.

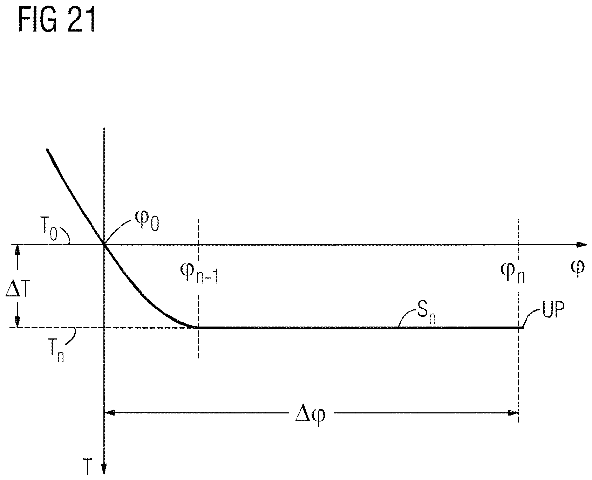

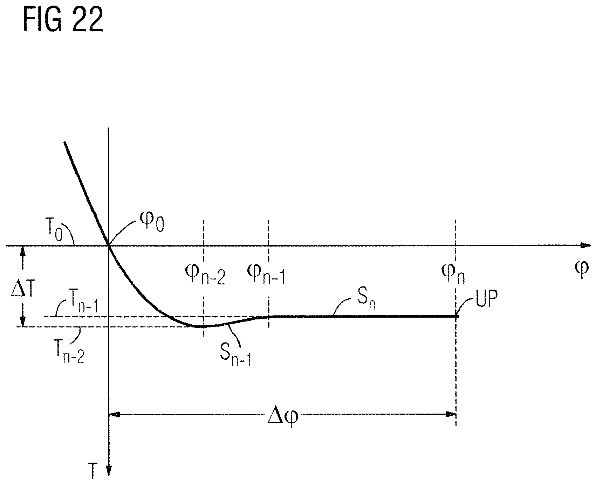

Der Drehwinkelbereich $\Delta\varphi$ für die Abbremsbewegung AB in der zweiten Arbeitsphase ist im Allgemeinen kleiner gewählt als der Drehwinkelbereich $\varphi_G$ für die Gewindeerzeugung in der ersten Arbeitsphase, insbesondere ist $\Delta\varphi < 0,5\; \varphi_G$ und vorzugsweise $\Delta\varphi < 0,2\; \varphi_G$ gewählt. Das kann insbesondere davon abhängen, wie groß die nutzbare Gewindelänge ist. Ein anderer Einflussfaktor ist die beabsichtigte Funktion im Freistich. Falls man neben dem reinen Abbremsen zusätzlich noch weitere Drehungen zum Freischneiden der Späne machen möchte, können wieder Umdrehungen hinzukommen (siehe weiter unten zu FIG 21 und 22).

Der Eindringtiefenbereich (oder: die maximale Eindringtiefe) $\Delta T$ für die Abbremsbewegung AB in der zweiten Arbeitsphase ist im Allgemeinen kleiner gewählt als der Eindringtiefenbereich oder die Gewindelänge $T_G$ für die Gewindeerzeugung in der ersten Arbeitsphase, insbesondere ist $\Delta T < 0,5\; T_G$, vorzugsweise $\Delta T < 0,2\; T_G$ gewählt.

Der Eindringtiefenbereich $\Delta T$ für die Abbremsbewegung AB kann insbesondere gleich P gewählt werden. Ebenso ist ein Eindringtiefenbereich $\Delta T$ kleiner P möglich, um die Gewindelochtiefe kleiner zu halten, z.B. 0,5 P oder auch 0,25 P. Aus Gründen der Zerspanung kann es eventuell auch günstig sein, größere Freistichhöhen oder einen größeren Eindringtiefenbereich $\Delta T$ zu wählen, insbesondere bis zu 2 P und in Ausnahmefällen auch größer.

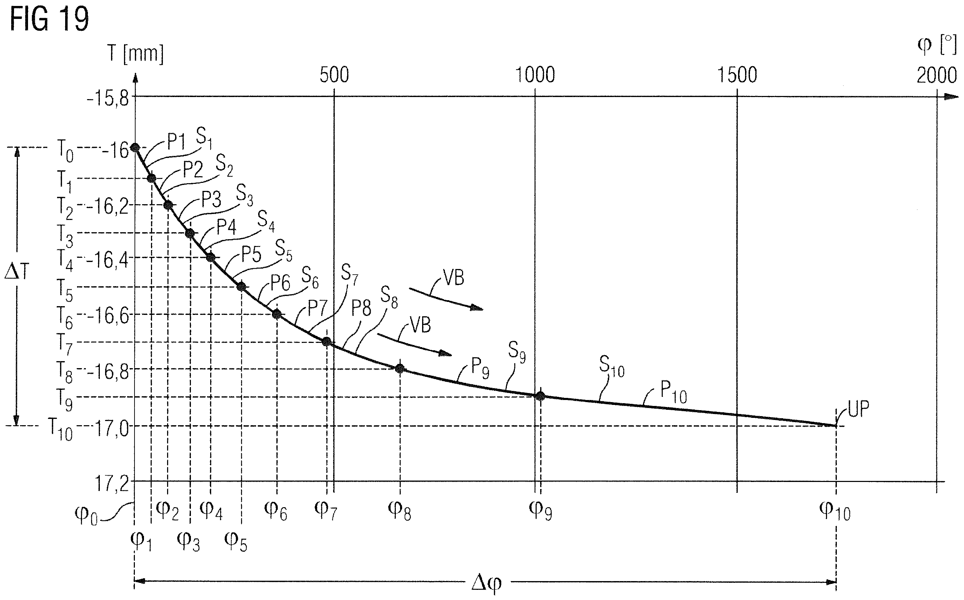

Die FIG 19 zeigt nun ein Ausführungsbeispiel einer Abbremsbewegung AB in einer vergrößerten Ansicht des rechten unteren Bereichs des Diagramms der FIG 3 in einem Drehwinkelbereich $\Delta\varphi$ und einem zugehörigen Eindringtiefenbereich $\Delta T$.

In FIG 19 ist beispielhaft und ohne Beschränkung der Allgemeinheit n = 10 gewählt und es sind somit zehn Abbremsschritte $S_1$ bis $S_{10}$ mit den zugehörigen Steigungsparametern $P_1$ bis $P_{10}$ eingezeichnet.

Der Drehwinkelbereich $\Delta\varphi$ ist entsprechend aufgeteilt in die n = 10 Drehwinkelintervalle $[\varphi_0, \varphi_1]$, $[\varphi_1, \varphi_2]$,..., $[\varphi_{i-1}, \varphi_i]$, $[\varphi_i, \varphi_{i+1}]$,... $[\varphi_9, \varphi_{10}]$ und diesen Intervallen zugehörig sind die entsprechenden Eindringtiefenintervalle $[T_0, T_1]$, $[T_1, T_2]$, ..., $[T_{i-1}, T_i]$, $[T_i, T_{i+1}]$,..., $[T_9, T_{10}]$, in die der Eindringtiefenbereich $\Delta T$ aufgeteilt ist, der im Beispiel der FIG 19 von $T(\varphi_0)$ = -16 mm bis $T(\varphi_{10})$ = - 17 mm reicht und/oder der Gewindesteigung - P = - 1 mm entspricht. Jedem Intervall entspricht ein Teilschritt $S_i$.

In FIG 19 ist, anders als in FIG 18, der Differenzdrehwinkel ausgehend von $\varphi_0$ aufgezeichnet. Wenn man in FIG 19 die gleichen Werte auf der Drehwinkelachse für $\varphi$ wie in FIG 18 eintragen will, so sind alle Werte auf der horizontalen Achse mit dem Wert von $\varphi_0$, der in FIG 18 beispielsweise 5800° beträgt, zu addieren. Die Abbremsbewegung AB beginnt bei dem Drehwinkelwert $\varphi_0$ und dem zugehörigen Eindringtiefenwert $T_0$ und endet bei dem Enddrehwinkelwert $\varphi_{10}$ und dem zugehörigen Eindringtiefenwert $T_{10}$.

Es wird nun jedem dieser Intervalle jedes Abbremsschrittes $S_i$ ein zugehöriger Steigungsparameter $P_i$, insbesondere als Gewindesteigung oder Interpolationsparameter der CNC-Steuerung, zugeordnet, also den beiden Intervallen $[\varphi_0, \varphi_1]$ und $[T_0, T_1]$ die Steigung $P_1$, dem Intervallpaar $[\varphi_1, \varphi_2]$ und $[T_1, T_2]$ die Steigung $P_2$ und so weiter bis zur Steigung $P_{10}$ für das letzte Intervallpaar $[\varphi_9, \varphi_{10}]$ und $[T_9, T_{10}]$.

Die Steigungswerte $P_1$ bis $P_{10}$ werden so gewählt, dass $P_{i+1} < P_i$ ist für i = 1 bis i = 10 in FIG 19 oder n in FIG 18. In jedem Teilabschnitt oder Abbremsschritt $S_i$ bleibt die Gewindesteigung $P_1$ bis $P_{10}$ konstant, so dass sich im Wesentlichen gerade Teilabschnitte des Graphen der Funktion T ($\varphi$) ergeben, in denen eine synchronisierte "Gewindebewegung" stattfindet, also die axiale Vorschubgeschwindigkeit dem Quotienten aus $P_i/360°$ entspricht.

Im dargestellten Ausführungsbeispiel der FIG 19 wurden die Eindringtiefeintervalle in den Abbremsschritten $S_i$ für alle i mit $1 \leq i \leq n$ (hier z.B. n = 10) gleich groß gewählt, so dass die Länge der Intervalle $T_1 - T_0 = T_2 - T_1 = T_i - T_{i-1} = T_{i+1} - T_i = T_n - T_{n-1}$ gleich oder äquidistant gewählt ist, also

$$T_i - T_{i-1} = \Delta T / n$$

im dargestellten Ausführungsbeispiel der FIG 19 als - 1 mm/10 = - 0,1 mm gewählt ist.

Da der axiale Vorschub in jedem Teilabschnitt oder Teilintervall im Ausführungsbeispiel der FIG 19 konstant gewählt ist, da $T_{i+1} - T_i$ für alle i gleich oder äquidistant gewählt ist, ergeben sich bei geringer werdender Steigung $P_i$ und damit abnehmender axialer Vorschubgeschwindigkeit größer werdende Drehwinkelintervalle $\varphi_{i+1} - \varphi_i$

$$\varphi_{i+1} - \varphi_i > \varphi_i - \varphi_{i-1}$$

in dem Drehwinkelbereich $\Delta\varphi$ in den Abbremsschritten $S_i$. D.h. der Drehwinkelabstand $\varphi_2 - \varphi_1$ ist kleiner als der Drehwinkelabstand $\varphi_3 - \varphi_2$ und der Drehwinkelabstand $\varphi_{i+1} - \varphi_i$ ist größer als der Winkelabstand $\varphi_i - \varphi_{i-1}$. Den größten Winkelabstand oder Winkelbereich deckt der letzte Teilabschnitt ab zwischen den Drehwinkelwerten $\varphi_{10} - \varphi_9$. Dies entspricht einem kontinuierlichen und in jedem Teilabschnitt oder Abbremsschritt $S_i$ verlangsamten Abbremsvorgang.

Während der Abbremsbewegung AB wird die zeitliche Abhängigkeit der Drehgeschwindigkeit dcp/dt und die axiale Vorschubgeschwindigkeit dT/dt so gewählt oder gesteuert oder programmiert, dass das Werkzeug 2 am Umkehrpunkt UP = $(\varphi_n, T_n)$ bzw. $(\varphi_{10}, T_{10})$ zur Ruhe kommt, also dcp/dt = 0 und dT/dt = 0 bei $\varphi = \varphi_n$ bzw. $T = T_n$ oder bei $\varphi = \varphi_{10}$ bzw. $T = T_{10}$.

Die Reduzierung der Drehgeschwindigkeit dcp/dt und der axialen Vorschubgeschwindigkeit dT/dt auf 0 abhängig von der Zeit t kann z.B. kontinuierlich während der Abbremsbewegung AB erfolgen oder auch beispielsweise erst in dem letzten Abbremsschritt $S_n$ oder $S_{10}$.

Die real nicht exakt linearen, sondern etwas abgerundeten Verläufe der Graphen in den Abbremsschritte $S_1$ bis $S_{10}$ der FIG 19 folgen physikalisch aus den Trägheiten des Antriebssystems, insbesondere der Steuerung und der Maschinenantriebe und der Massenträgheit der bewegten Komponenten.

Idealisiert dargestellt oder in der Programmierung der Abbremsbewegung selbst hinterlegt ergibt sich jedoch die beschriebene Abfolge von linearen Funktionen oder aneinandergereihten linearen Abschnitten mit stufenweise abnehmender Steigung, d.h. stufenweise abnehmender jeweils konstanter Vorschubgeschwindigkeit, in den einzelnen Abbremsschritten $S_i$ beispielsweise $S_1$ bis $S_{10}$.

Vor Einleitung einer Ausfahr- oder Reversierbewegung kann man ggf. noch einen Zwischenschritt durchführen, etwa einen Säuberungsprozess. Hier kann man beispielsweise Spanwurzelreste durch weitere Drehung des Werkzeugs entfernen oder die Umfangsnut von Resten der Gewindespitzen säubern, um einen saubereren zylindrischen Bereich zu bekommen. Dann ließe sich eine Schraube noch besser eindrehen.

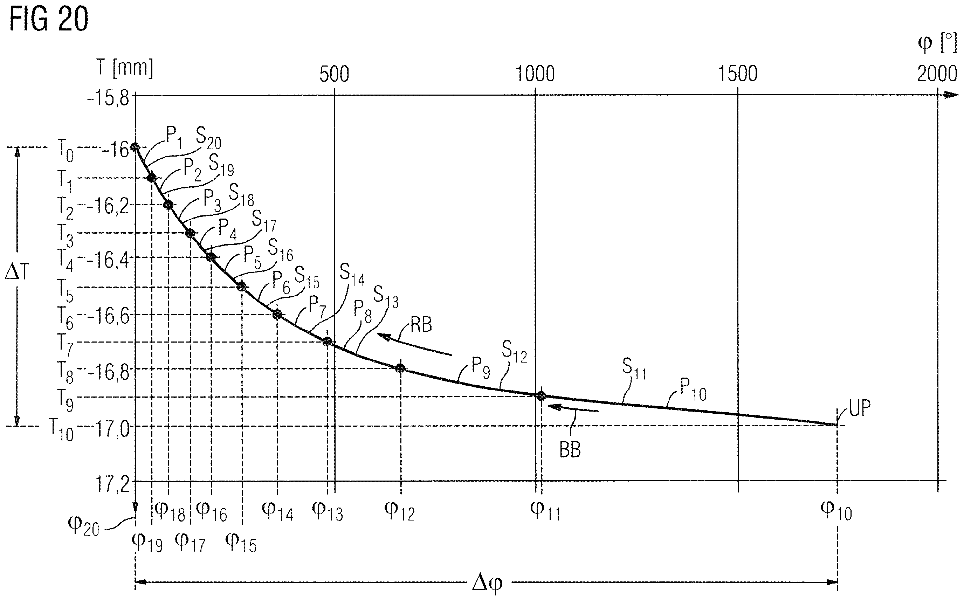

Nach Erreichen des Umkehrpunktes UP wird nun in einer Ausführungsform, wie insbesondere in FIG 18 und FIG 20 dargestellt, eine Reversierbewegung oder Rückwärtsbewegung RB eingeleitet, die zunächst in einer ersten Reversierphase eine Beschleunigungsbewegung BB umfasst bis zum Einfädeln in den Gewindegang 50 und in einer zweiten Reversierphase eine Rückwärtsbewegung RB, in der das Werkzeug 2 durch den Gewindegang 50 synchronisiert nach außen ausgefädelt wird.

In einer vorteilhaften Ausführungsform kann die Steuerkurve oder Funktion gemäß FIG 18 in umgekehrter Reihenfolge verwendet oder durchlaufen werden.

Die Drehbewegung wird für die Rückwärtsbewegung RB bzw. BB vom Vorwärtsdrehsinn VD in den Rückwärtsdrehsinn RD umgekehrt, d.h. der Drehwinkel $\varphi$ ausgehend von $\varphi = \varphi_n$ bzw. $\varphi = \varphi_{10}$ vorzugsweise beim Umkehrpunkt UP reduziert oder in negativer Richtung zurückgedreht, bis schließlich wieder der Ausgangswert $\varphi = 0$ erreicht ist und das Werkzeug 2 aus dem Werkstück 6 austritt. Die vorzugsweise unverändert übernommene Abhängigkeit oder Funktion $T(\varphi)$ führt nun dazu, dass die Eindringtiefe T mit abnehmendem Drehwinkel betragsmäßig kleiner wird, also von $T = T_n$ bzw. $T = T_{10}$ beim Umkehrpunkt UP wieder bis auf $T = 0$ beim Eintrittspunkt EP bei $\varphi = 0$ abnimmt, der somit also zugleich auch der Austrittspunkt ist. Insbesondere entspricht die erste Reversierphase der zweiten Arbeitsphase und die zweite Reversierphase der ersten Arbeitsphase.

Insbesondere kann auch eine Ausführungsform für die zweite Arbeitsphase wie z.B. gemäß FIG 19 in reversierter Reihenfolge für die erste Reversierphase verwendet werden.

In FIG 20 ist ein Ausführungsbeispiel gezeigt, wie in der ersten Reversierphase ausgehend vom Umkehrpunkt UP die gleiche Abhängigkeit oder Funktion $T(\varphi)$ in entgegengesetzter Reihenfolge für die Beschleunigungsbewegung BB in Umkehrung der Abbremsbewegung AB z.B. gemäß FIG 3 und 4 verwendet werden kann.

Es können aber auch andere Funktionen $T(\varphi)$ und Teilschritte als in FIG 20 verwendet werden, die vorzugsweise zu dem Punkt $(\varphi_0, T_0,)$ zurückführen, an dem auch die Abbremsbewegung AB begann bzw. die erste Arbeitsphase endete, so dass der richtige Einfädelpunkt für das Werkzeug für das Zurückfahren durch den Gewindegang 50 erreicht werden kann.

Vorzugsweise wird ausgehend von dem Endwinkelwert $\varphi_n$ oder $\varphi_{10}$ in umgekehrter Reihenfolge zunächst eine Beschleunigungsphase als erste Reversierphase mit einer Beschleunigungsbewegung BB durchgeführt mit den gleichen Inkrementalschritten. Diese Schritte sind nunmehr jedoch Beschleunigungsschritte $S_j$ mit $n+1 \leq j \leq 2n$ sind, in FIG 20 beginnend mit $S_{11}$ bis $S_{20}$ für $n = 10$.

Zugeordnet ist jedem dieser Beschleunigungsschritte $S_j$ ein zugehöriges Drehwinkelintervall $[\varphi_{10}, \varphi_{11}]$, $[\varphi_{11}, \varphi_{12}],..., [\varphi_{j-1}, \varphi_j], [\varphi_j, \varphi_{i+1}],... [\varphi_{19}, \varphi_{20}]$, wobei $\varphi_j$ aus der ersten Reversierphase einfach $\varphi_i$ aus der zweiten Arbeitsphase entspricht, wenn man $i + j = n$ setzt. Die Steigungsparameter bleiben ebenfalls gleich, nur in umgekehrter Reihenfolge, also in FIG 20 werden sie von $P_{10}$ über $P_9$, $P_8$ bis zu $P_1$ für die Teilabschnitte der Steuerkurve gemäß FIG 19 von rechts nach links durchlaufen, bis der Tiefenwert $T_0$ erreicht wird. Gemäß FIG 20 wird der neue Winkelwert $\varphi_{11}$ zeitlich nach dem Winkelwert $\varphi_{10}$ angenommen und entspricht das Intervall $[\varphi_{10}, \varphi_{11}]$ dem Intervall $[T_{10}, T_9]$, mit der Gewindesteigung $P_{10}$ und das anschließende Winkelintervall $[\varphi_{11}, \varphi_{12}]$ dem Eindringtiefenintervall $[T_9, T_8]$ mit der entsprechenden Gewindesteigung $P_9$ usw. bis zum letzten Teilabschnitt von $[\varphi_{19}, \varphi_{20}]$ entsprechend $[T_1, T_0]$ mit der Gewindesteigung $P_1$.

Im Anschluss wird dann in umgekehrter Richtung der FIG 18 der lineare Abschnitt der Kurve von $\varphi_0$ bis $\varphi = 0$ entsprechend der Eindringtiefe T von $T_0$ bis zu $T = 0$ durchlaufen. Die der Steigung der Geraden in FIG 18 entsprechende axiale Vorschubgeschwindigkeit bei der Rückwärtsbewegung ist nun wieder P/360° mit umgekehrter Richtung. Dadurch wird das Werkzeug gerade umgekehrt durch das in der Vorwärtsbewegung erzeugte Gewinde geführt, ohne dass in dem Gewinde eine Beschädigung des erzeugten Gewindeganges stattfindet. Die Rückwärtsbewegung ist also genau so synchronisiert wie die Vorwärtsbewegung , nur mit umgekehrter Drehrichtung, so dass sich der Winkel $\varphi$ von dem Winkel $\varphi_n$ gerade wieder rückwärts in seinem Wert abnimmt bis auf $\varphi = 0$ und auch bei umgekehrter axialer Vorschubgeschwindigkeit nunmehr die Gewindetiefe von $T = T_0$ bis $T = 0$ mathematisch gesehen zunimmt.

Die gleiche Steuerkurve oder Funktion $T(\varphi)$ wie in der Vorwärtsbewegung VB in den beiden Arbeitsphasen auch in der Rückwärtsbewegung RB in den beiden Reversierphasen zu verwenden, hat einerseits den Vorteil, dass sich das Werkzeug 2 positionsgenau oder bewegungsgenau steuern lässt und sich insbesondere beim Einfädeln in den Gewindegang 50 in der richtigen Stellung befindet, und derart die Kräfte beim Reversieren sehr gering gehalten werden können und/oder eine hohe Rückfahr- oder Ausfahrgeschwindigkeit ermöglicht wird.

In einer Ausführungsform einer Umsetzung der beschriebenen Abhängigkeiten oder Funktionen für $T(\varphi)$ werden die Werte der Eindringtiefe T als gemessene oder von der Steuerung oder Programmierung vorgegebene Eingabeparameter verwendet und ergeben sich die zugehörigen Werte des Drehwinkels $\varphi$ aus der Abhängigkeit mittels der zugeordneten Steigungsparameter P und $P_i$.

Es kann also ein CNC-Programm für Gewindebohren oder Gewindefurchen gewählt werden, insbesondere mit einer G33, insbesondere G331 und G332, Wegbedingung mit einzugebender Gewindesteigung, und es kann nun eine Folge oder Menge von Werten für die Eindringtiefe angegeben werden, bei denen auf einen neuen Gewindesteigungsparameter umgeschaltet wird, wobei der Gewindesteigungsparameter bis zum nächsten Wert der Eindringtiefe beibehalten wird.

Eine Abfolge wäre z.B.

Arbeitsbewegung:

- Bei der Eindringtiefe $T = 0$ wähle den Gewindesteigungsparameter P und behalte diesen bis $T = T_0$ bei. Es wird eine Drehzahl oder Drehgeschwindigkeit eingestellt.
- Bei $T = T_0$ wechsle auf den Gewindesteigungsparameter $P_1$ und behalte diesen bis $T = T_1$ bei.
- Bei $T = T_i$ wechsle auf den Gewindesteigungsparameter $P_{i+1}$ und behalte diesen bis $T = T_{i+1}$ bei für alle i mit $1 \leq i \leq n$.
- Reduziere die Drehgeschwindigkeit oder Drehzahl bis auf 0 bei $T = T_n$.

und vorzugsweise für die

Reversierbewegung:

- Bei $T = T_n$ reversiere die axiale Vorschubbewegung und die Drehbewegung mit einer eingestellten Drehzahl oder Drehgeschwindigkeit und starte wieder in jeweils umgekehrter Richtung mit dem Gewindesteigungsparameter $P_n$ und behalte diesen bis $T = T_{n-1}$ bei.
- Bei $T = T_j$ wechsle auf den Gewindesteigungsparameter $P_j$ und behalte diesen bis $T = T_{j-1}$ bei für alle j als absteigender Index mit $1 \leq j \leq n-1$.
- Bei $T = T_0$ wähle den Gewindesteigungsparameter P und behalte diesen bis $T = 0$ bei.

Auch wenn diese Ausführungsform der Arbeitsbewegung in der zweiten Arbeitsphase und/oder Reversierbewegung in der ersten Reversierphase, die insbesondere einer linearen Interpolation entspricht, aufgrund ihrer einfachen Implementierung in bestehende Maschinenprogramme Vorteile aufweist, können gemäß der Erfindung in allen Ausführungsformen auch andere Abhängigkeiten oder Funktionen oder Interpolationen in einzelnen Teilschritten oder Teilintervallen für die Beziehung zwischen T und $\varphi$ vorgesehen werden oder auch Kombinationen daraus.

Bei der beschriebenen linearen Interpolation, insbesondere gemäß FIG 19 und 20, werden die linearen Kurvenabschnitte oder Graphenabschnitte stetig aneinander angesetzt, d.h. die Anfangspunkte $(\varphi_i, T_i)$ jedes Intervalls entsprechen den Endpunkten des jeweils vorhergehenden Intervalls und beim ersten Intervall dem Endpunkt $(\varphi_0, T_0)$ des linearen Graphen der Gewindeerzeugung. Diese Verknüpfungspunkte werden auch als Stützstellen bezeichnet.

In allen Ausführungsformen oder Interpolationen können anstelle linearer Abschnitte auch Kurvenabschnitte oder Graphenabschnitte gewählt werden, die stetig differenzierbar aneinandergesetzt (oder: verknüpft, miteinander verbunden) werden. Das bedeutet, dass nicht nur der Anfangspunkt jedes Intervalls mit dem Endpunkt des vorhergehenden Intervalls übereinstimmt, also ein stetiger Übergang an den Verknüpfungspunkten zwischen den Intervallen erfolgt, sondern zusätzlich die Graphenabschnitte oder deren Funktionen auch in diesen Verknüpfungspunkten differenzierbar sind und ihre Ableitung den gleichen Wert aufweisen. Dadurch werden glatte oder stetig differenzierbare Übergänge zwischen den Graphen in den einzelnen Abbremsschritten oder Intervallen erreicht, was dem Bewegungsablauf förderlich ist. Auch der Übergang im Drehwinkel $\varphi_0$ von der Gewindeerzeugungsbewegung in der ersten Arbeitsphase zur Abbremsbewegung AB in der zweiten Arbeitsphase oder dann entsprechend vorzugsweise auch von der ersten Reversierphase zur zweiten Reversierphase ist vorzugsweise stetig differenzierbar oder mit derselben Steigung gewählt

Beispiele für Funktionen, die sich für einen solche stetig differenzierbare Interpolation eignen, sind Polynome höheren Grades als 1, insbesondere dritten Grades wie beispielsweise kubische Splines.

Hier kann eine Spline-Interpolation Anwendung finden. Durch eine Polynomfunktion 3. Grades als Splinefunktion

$$T(\varphi) = a_3\,\varphi^3 + a_2\,\varphi^2 + a_1\,\varphi + a_0$$

mit den bei Spline-Interpolation üblichen Randbedingungen lässt sich beispielsweise eine bis in die dritte Ableitung stetige Funktion erstellen.

Ferner kann auch eine durchgehende, insbesondere streng monoton oder auch monoton fallende Funktion für den Abbremsvorgang oder zumindest einen überwiegenden Teil der Abbremsschritte $S_i$, beispielsweise eine Exponentialfunktion oder logarithmische Funktion, verwendet werden

In einer weiteren Ausführungsform einer Umsetzung der beschriebenen Abhängigkeiten oder Funktionen für $T(\varphi)$ werden die Werte des Drehwinkels $\varphi$ als gemessene oder von der Steuerung oder Programmierung vorgegebene Eingabeparameter verwendet und ergeben sich die zugehörigen Werte der Eindringtiefe $T$

aus der Abhängigkeit mittels der Steigungsparameter $P$ und $P_i$.

Es kann in einer dritten Variante kann auch die Zeit als Eingabeparameter vorgegeben werden und ergeben sich die Werte des Drehwinkels $\varphi(t)$ und der Eindringtiefe $T(t)$ aus der Abhängigkeit von der Zeit $t$ und der Abhängigkeit voneinander mittels der Steigungsparameter $P$ und $P_i$.

Die Steuerung oder Synchronisierung kann in einer Ausführungsform in einem offenen Regel- oder Steuerkreis ohne Messung der Prozessgrößen Eindringtiefe und Drehwinkel erfolgen. Jedem Drehwinkelwert wird dabei mittels einer Wertetabelle oder durch Berechnung nach den hinterlegten Formeln ein Eindringtiefenwert zugeordnet und Drehantrieb und Axialantrieb werden entsprechend angesteuert.

In einer weiteren Ausführungsform kann auch eine Messung wenigstens einer der beiden Prozessgrößen Eindringtiefe und Drehwinkel erfolgen und können die Messwerte in die Steuerung rückgekoppelt werden, um eine Regelung, beispielsweise gemäß der in FIG 18 bis 20 gezeigten Sollkurve, in einem geschlossenen Regelkreis zu verwirklichen. Der Drehwinkel $\varphi$ wird in der Regel im Bereich des Antriebs, insbesondere der Antriebsspindel, mittels Drehwinkelsensoren oder Messung von mit dem Drehwinkel in eindeutiger Beziehung stehenden physikalischen Größen bestimmt. Es ist grundsätzlich aber auch möglich, den Drehwinkel direkt am Werkzeug 2 zu messen.

Die Eindringtiefe $T$ kann durch axiale Positionssensoren gemessen werden und auch hier wieder im Allgemeinen am Antrieb, insbesondere der Antriebsspindel, oder auch in einer besonderen Ausführungsform am Werkzeug oder Werkstück selbst.

In weiteren Ausführungsformen kann in der zweiten Arbeitsphase zusätzlich ein Egalisierungsschritt oder konstanter Umlaufschritt stattfinden, währenddessen die Eindringtiefe $T(\varphi)$ = const. ist oder zumindest keine weitere Vorschubbewegung in Vorwärtsrichtung ausgeführt wird. Der Drehsinn der Drehbewegung bleibt während des Egalisierungsschrittes vorzugsweise gleich, wird also nicht reversiert.

Solche Ausführungsformen werden im Folgenden anhand von Ausführungsbeispielen und den FIG 20 und FIG 21 erläutert.

In einer Ausführungsform, beispielsweise gemäß FIG 20, wird bei Erreichen der maximalen Eindringtiefe $\Delta T$ bei einem Drehwinkel $\varphi_{n-1}$ der entsprechende Wert $T(\varphi)$ für den darauffolgenden Schritt $S_n$ bis zu dem Drehwinkel $\varphi_n$ beim Umkehrpunkt UP konstant gehalten, d.h. $T(\varphi_{n-1}) = T_{n-1} = T_n = T(\varphi_n)$.

In einer weiteren Ausführungsform, beispielsweise gemäß FIG 21, wird die maximale Eindringtiefe $\Delta T$ schon bei einem Drehwinkel $\varphi_{n-2}$ mit dem entsprechenden Wert $T(\varphi_{n-2}) = T_{n-2}$ erreicht. Nun wird der Wert $T(\varphi)$ für den darauffolgenden Schritt $S_{n-1}$ bis zu dem Drehwinkel $\varphi_{n-1}$ wieder reduziert, d.h. die axiale Vorschubrichtung umgekehrt, und die Eindringtiefe auf den Wert

T($\varphi_{n-1}$) = $T_{n-1}$ < $T_{n-2}$ reduziert. In FIG 7 ist diese Reduzierung vergleichsweise klein.. Das Werkzeug läuft also mit einem leichten Reversiervorschub in der Umlaufnut. Diese definierte Bewegung in negativer T-Richtung vom Bohrungsgrund weg kann vorteilhaft sein, um den Freistich oder die Umfangsnut hinsichtlich Durchschraubbarkeit weiter zu verbessern. Ab dem Drehwinkel $\varphi_{n-1}$ wird auch in FIG 21 wieder der entsprechende Wert T($\varphi$) für den darauffolgenden Schritt $S_n$ bis zu dem Drehwinkel $\varphi_n$ beim Umkehrpunkt UP konstant gehalten, d.h. T($\varphi_{n-1}$) = $T_{n-1}$ = $T_n$ = T($\varphi_n$). Es kann aber, vor allem bei schon (weitgehend) erzeugter Umfangsnut auch eine relativ große und/oder schnelle Rückholbewegung und/oder auch eine axiale Hin- und Herbewegung des Werkzeuges beim Egalisieren erfolgen, die auch einen axialen Vorschub pro 360° aufweisen kann, der sogar größer als die Gewindesteigung P ist.

Das Werkzeug und seine Gewindezähne drehen somit im Schritt $S_n$ auf einer Kreisbahn oder zylindrischen Bahn steigungslos bzw. sogar im Schritt $S_{n-1}$ mit einer positiven Steigung wieder um einen kleinen Betrag nach außen in dem Werkstück.

Diese Bewegung dient insbesondere dazu, die Umfangsnut zu egalisieren und die Oberfläche des Werkstücks zu säubern, die erzeugte Gewindebohrung möglichst vollständig von Spanmaterial zu evakuieren und ggf. auch Verspannungen zwischen Werkstück und Werkzeug abzubauen, die durch die Bearbeitungskräfte vorher aufgebaut wurden. Der Schritt $S_n$ als letzter Schritt der Abbremsbewegung AB in FIG 20 und 7 sowie auch der vorletzte Schritt $S_{n-1}$ gemäß FIG 21 kann somit auch als Egalisierungsschritt bezeichnet werden.

Der gesamte Drehwinkel $\varphi_n$ - $\varphi_{n-1}$ des Egalisierungsschritts $S_n$ in FIG 20 bzw. $\varphi_n$-$\varphi_{n-2}$ des Egalisierungsschritts $S_n$ und $S_{n-1}$ in FIG 21 kann in weiten Grenzen frei gewählt werden, beispielsweise zwischen 180° und 2000°, und wird in der Regel größer gewählt werden, beispielsweise 3 mal größer, als der Drehwinkel $\varphi_{n-1}$ - $\varphi_0$ in FIG 20 bzw. $\varphi_{n-2}$ - $\varphi_0$ in FIG 21 des vorherigen monoton fallenden Abschnitts (Übergangsbereich).

Bei der Reversierbewegung RB kann in der ersten Reversierphase beispielsweise der Egalisierungsschritt gemäß FIG 20 oder 21 auch teilweise oder ganz wegfallen.

Durch die Maßnahmen gemäß der Erfindung können im Übergang in den Freischnitt (Umfangsnut) sowie im Freischnitt selbst vorteilhafte Bewegungsabläufe erzielt werden. Die Arbeitsgeschwindigkeit des Werkzeuges kann möglichst hoch und gleichbleibend (stetig) verlaufen. Die Maschine (inkl. Steuerung) kann die Bewegung hochdynamisch abbilden. Im Freischnitt oder der Umfangsnut kann außerdem eine durchschraubbare Geometrie erzeugt werden.

Sieht man sich die Verhältnisse an der Maschine an, so ist erkennbar, dass im System eine Massenträgheit sowie eine Trägheit in den Antrieben und im Steuerungssystem physikalisch vorhanden ist. Um die Geschwindigkeit aus dem Gewinde auch in dem Freistich, d.h. der Umfangsnut, hoch zu halten, wird insbesondere durch eine stetige Bewegungsbahn von z-Achse (Variable T) und Drehachse (Variable $\varphi$) die Maschine in die Lage versetzt, vorzugsweise mit einer hohen Bahngeschwindigkeit diese Bewegung zu realisieren. Dies wirkt sich dann in einer hohen und stetigen Geschwindigkeit der wirksamen Werkzeugzähne und -schneiden aus. Dies ist wiederum für eine gleichmäßige Zerspanung günstig.

Um die Maschine zu programmieren, können die theoretischen Bewegungsbahnen in entsprechende NC-Sätze übertragen werden. Hierbei können geringfügige Abweichungen oder Annäherungen (in Form von beispielsweise zusammengesetzten Helixbewegungen) vorkommen.

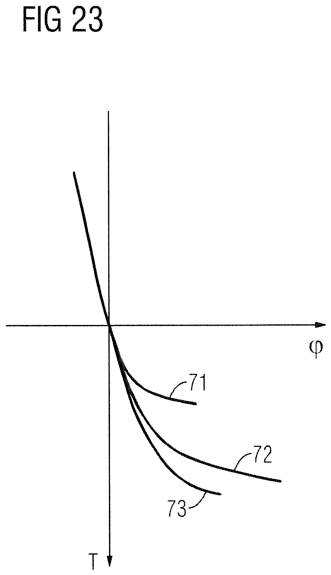

Die FIG 23 bis 25 zeigen Ausführungsbeispiele in einem Diagramm, in dem wieder die Eindringtiefe T über dem Drehwinkel $\varphi$ für die zweite Arbeitsphase (und ggf. erste Reversierphase) aufgetragen ist.

FIG 23 zeigt drei Ausführungsbeispiele mit Graphen oder Kurven 71 bis 73, bei denen eine konstante Bohrtiefe pro Steigung wie im Beispiel der FIG 19 für drei verschiedene Werte gewählt ist.

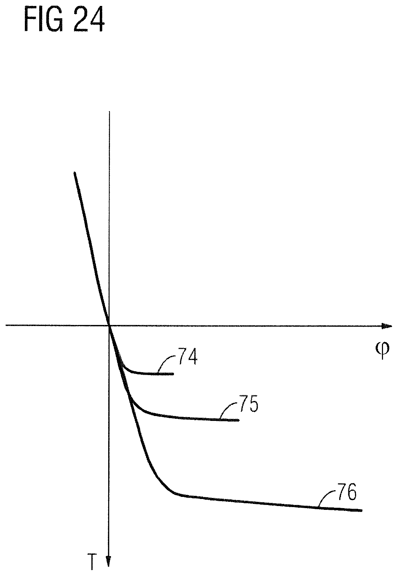

FIG 24 zeigt drei Ausführungsbeispiele mit Graphen oder Kurven 74 bis 76, bei denen ein konstanter Drehwinkel pro Steigung für drei verschiedene Werte gewählt ist.

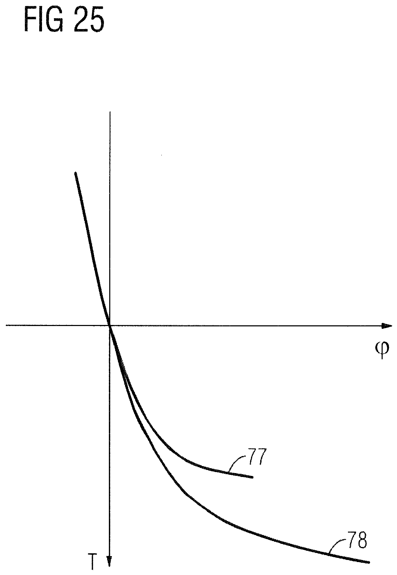

FIG 25 zeigt ein Ausführungsbeispiel mit einem Graphen oder einer Kurve 77, der bzw. die einer Exponentialfunktion entspricht, beispielsweise gemäß

$$T = -e^{\frac{-P}{\pi \cdot fd} \cdot x} + 1;$$

wobei fd der Flankendurchmesser ist und x eine fortlaufende natürliche Zahl.

Ferner zeigt FIG 25 ein Ausführungsbeispiel mit einem Graphen oder einer Kurve 78, der mittels einer kubischen Spline-Funktion erstellt ist.

Die beschriebenen theoretischen Kurven oder Funktionen können insbesondere durch eine entsprechende Anzahl von einzelnen NC-Steuerungsdatensätze abgebildet werden.

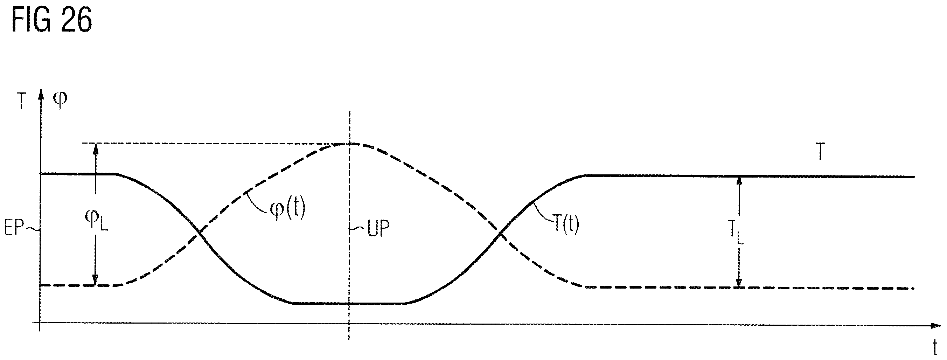

In FIG 26 ist nun ein Ausführungsbeispiel für die zeitliche Abhängigkeit oder Steuerung des Drehwinkels $\varphi$ = $\varphi(t)$ als Funktion der Zeit t über den gesamten Zyklus zwischen dem Eintrittspunkt EP und dem Umkehrpunkt UP und wieder zurück gezeigt. Die Eindringtiefe T(cp(t)) ergibt sich als Funktion der Zeit t aufgrund der gewählten Abhängigkeit T($\varphi$), die im dargestellten Ausführungsbeispiel einer linearen Interpolation wie in FIG 19 entspricht, aber natürlich auch einer anderen Abhängigkeit wie vorstehend beschrieben folgen kann.

**Bezugszeichenliste**

| | |
|---|---|
| 2 | Werkzeug |
| 3 | Bohrbereich |
| 4 | Gewindeerzeugungsbereich |
| 5 | Gewindeloch |
| 6 | Werkstück |
| 7 | Gewindezahn |
| 8 | Gewinde- und Räumzahn |
| 20 | Arbeitsbereich |
| 21 | Schaft |
| 25 | Trennnut |
| 31, 32 | Bohrhauptschneiden |
| 33 | Bohrspitze |
| 40, 41 | Gewindezahn |
| 50 | Gewindegang |
| 51, 52, 53 | Umfangsnut |
| 55 | Gewindeprofil |
| 60 | Werkstückoberfläche |
| 71, 72 | Flankenfreifläche |
| 73 | Zahnsteg |
| 74 | Freifläche |
| 75 | Gewindeschneide |
| 81, 82 | Zahnflanke |
| 83 | Zahnsteg |
| 84 | Anfurchfläche |
| 85 | Gewindeschneide |
| 86 | Räumschneide |
| 88 | Räumfläche |
| a | Nutlänge |
| A | Werkzeugachse |
| AB | Abbremsbewegung |
| b | Gewindelücke |
| BB | Beschleunigungsbewegung |
| c | Gewindeprofilbreite |
| d | Kernlochdurchmesser |
| D | Gewindelochdurchmesser |
| E, E1, E2 | Transversalebene |
| F1, F2 | Gewindezahnprofilflanke |
| G1, G2 | Gewindezahnflankeneinhüllende |
| GP, GP' | Gewindezahnprofil |
| K, K' | Gewindezahnprofilkopf |
| M | Gewindemittelachse |
| P | Gewindesteigung |
| $P_1$ bis $P_{10}$ | Steigungsparameter |
| RB | Rückwärtsbewegung |
| RF1, RF2 | Räumprofilflanke |
| RK | Räumprofilkopf |
| RP | Räumprofil |
| $\Delta A1$ | Gewindezahnprofilwirkfläche |
| $\Delta A2$ | Gewindezahnprofilwirkfläche |
| $\Delta A3$ | Gewindezahnprofilwirkfläche |
| $\Delta r1$ | Gewindezahnprofiltiefe |
| $\Delta r2$ | Gewindezahnprofiltiefe |
| $\Delta r3$ | Gewindezahnprofiltiefe |
| $S_1$ bis $S_{10}$ | Abbremsschritt |
| $S_{11}$ bis $S_{20}$ | Beschleunigungsschritt |
| T | Endringtiefe |
| $T_G$ | Gewindetiefe |

| | |
|---|---|
| $T_L$ | Gewindelochtiefe |
| $T_0$ bis $T_{10}$ | Tiefenwert |
| $T_i, T_n$ | Tiefenwert |
| $\Delta T$ | Eindringtiefenbereich |
| UP | Umkehrpunkt |
| VB | Vorwärtsbewegung |
| W | Windungssinn |
| $\alpha 1, \alpha 2$ | Flankenfreiwinkel |
| $\delta$ | Gewindesteigungswinkel |
| $\varepsilon$ | Öffnungswinkel |
| $\varphi$ | Summierter Drehwinkel |
| $\Delta\varphi$ | Drehwinkelbereich |
| $\varphi_0$ bis $\varphi_{20}$ | Drehwinkelwert |
| $\varphi_i, \varphi_n$ | Drehwinkelwert |

**Patentansprüche**

1. Werkzeug zum Erzeugen eines Gewindes, insbesondere Innengewindes,

a) wobei das Werkzeug um eine durch das Werkzeug verlaufende Werkzeugachse (A) drehbar und axial zur Werkzeugachse bewegbar ist,
b) wobei das Werkzeug wenigstens einen Gewindeerzeugungsbereich (4) umfasst,
c) wobei der Gewindeerzeugungsbereich (4) entlang einer Schraubenlinie (G1, G2) mit einem vorgegebenen Gewindesteigungswinkel ($\delta$) und einem vorgegebenen Windungssinn (W) des zu erzeugenden Gewindes (50) verläuft und ein Wirkprofil aufweist, das dem Gewindeprofil des zu erzeugenden Gewindes entspricht,
d) wobei der Gewindeerzeugungsbereich wenigstens einen Gewindezahn (7) aufweist, der

d1) ein Gewindezahnprofil (GP) mit einer vorderen Gewindezahnprofilflanke (F1) und einer hinteren Gewindezahnprofilflanke (F2) aufweist,
d2) eine sich unmittelbar an die vordere Gewindezahnprofilflanke (F1) anschließende vordere Flankenfreifläche (71) an einer vorderen Gewindezahnflanke aufweist und
d3) eine sich unmittelbar an die hintere Gewindezahnprofilflanke (F2) anschließende hintere Flankenfreifläche (72) an einer hinteren Gewindezahnflanke aufweist,

e) wobei die vordere Flankenfreifläche (71) gegenüber einer vorderen Gewindezahnflankeneinhüllenden (G1), die entlang der oder parallel zur Schraubenlinie und durch die vordere Gewindezahnprofilflanke (F1) verläuft, nach hinten freigestellt oder zurückversetzt ist,
f) wobei die hintere Flankenfreifläche (72) gegenüber einer hinteren Transversalebene (E2), die senkrecht zur Werkzeugachse (A) gerichtet ist und durch den hintersten Punkt des Gewindezahnprofils (GP) oder der hinteren Gewindezahnprofilflanke (F2) verläuft, nach vorne versetzt oder freigestellt ist,

g) wobei die Schraubenlinie (G1, G2) gegenüber der hinteren Transversalebene (E2) um den Gewindesteigungswinkel (δ) nach hinten geneigt ist **dadurch gekennzeichnet dass**,

h) die hintere Flankenfreifläche (72) gegenüber einer hinteren Gewindezahnflankeneinhüllenden (G2), die entlang der oder parallel zur Schraubenlinie verläuft, um einen hinteren Flankenfreiwinkel (α2) geneigt oder zurückversetzt ist, der größer ist als der Gewindesteigungswinkel (δ) und in einem Intervall zwischen dem Gewindesteigungswinkel (δ) und 6° liegt.

2. Werkzeug nach Anspruch 1, bei dem die vordere Flankenfreifläche (71) gegenüber der vorderen Gewindezahnflankeneinhüllenden (G1) um einen vorderen Flankenfreiwinkel (α1) geneigt oder zurückversetzt ist, der im Allgemeinen in einem Intervall zwischen 0° und 10°, insbesondere zwischen 0° und 2°, liegt.

3. Werkzeug nach Anspruch 1 oder Anspruch 2,

bei dem die hintere Flankenfreifläche (72) gegenüber der hinteren Transversalebene (E2) um einen Winkel (α2 - δ) geneigt oder zurückversetzt ist, der im Allgemeinen in einem Intervall zwischen 0° und 6°, insbesondere zwischen 2° und 5° liegt.
und/oder
bei dem der hintere Flankenfreiwinkel (α2) in einem Intervall zwischen 4° und 5° liegt.

4. Werkzeug nach einem der vorhergehenden Ansprüche,

bei dem das Gewindezahnprofil (GP) des Gewindezahnes (7) ein Zwischen- oder Vorprofil, beispielsweise ein Anschnitt- oder Anfurchprofil, ist, das sich insbesondere mit weiteren Gewindezahnprofilen weiterer Gewindezähne zu einem Gesamtwirkprofil überlagert,
und/oder
bei dem der Gewindezahn (7) wenigstens eine Gewindeschneide (75) umfasst und optional eine der Gewindeschneide (75) nachgeordnete Gewindefurchfläche umfasst.

5. Werkzeug nach einem der vorhergehenden Ansprüche, bei dem der Gewindezahn (7) auf seinem Zahnrücken an einen Gewindezahnprofilkopf (K) des Gewindezahnprofils (GP) entgegengesetzt zum Windungssinn anschließend eine Freifläche (74) auf, die sich vorzugsweise bis zu einem im Wesentlichen linienförmigen Zahnsteg (73) verjüngt.

6. Werkzeug zum Erzeugen eines Gewindes mit einem Gewindeprofil nach einem der vorhergehenden Ansprüche,

a) wobei der Gewindeerzeugungsbereich wenigstens einen Gewinde- und Räumzahn (7) aufweist, der
a1) in einem im Windungssinn gesehen vorderseitigen Bereich ein Gewindezahnelement (85, 84) mit einem Gewindezahnprofil (GP, GP') als Wirkprofil zum Erzeugen oder Nachbearbeiten des Gewindes aufweist,
d2) und in einem im Windungssinn gesehen rückwärtigen Bereich ein Räumelement (86, 88) zum Räumen des erzeugten Gewindes bei einer Reversierbewegung aufweist, wobei das Räumelement (86,88) ein Räumprofil (RP) als Wirkprofil aufweist, das dem Gewindeprofil des erzeugten Gewindes und/oder dem Gewindezahnprofil (GP, GP') an seinem vorderseitigen Bereich entspricht.

7. Werkzeug nach Anspruch 6, bei dem das Räumelement des Gewinde- und Räumzahnes (8) eine Räumschneide (86) aufweist, die ein Räumprofil (RP) aufweist, das zum Gewindezahnprofil (GP, GP') des Gewindezahnelements (85, 84) korrespondiert, insbesondere ein gleiches oder zumindest an Räumprofilflanken des Räumprofils gleiches Wirkprofil aufweist wie das Gewindezahnprofil (GP),

bei dem insbesondere das Räumelement eine entgegengesetzt zum Windungssinn gesehen der Räumschneide (86) nachgeordnete furchend arbeitende Räumfläche (88) aufweist, wobei sich die Wirkprofile der Räumschneide und der Räumfläche zu dem gesamten Räumprofil (RP') des Räumelements überlagern, wobei zweckmäßigerweise die Räumfläche (84) radial nach außen ansteigt und in einen Zahnsteg (83), der insbesondere ein konstantes Profil oder keine Freiflächen aufweist, übergeht, wobei insbesondere ein Räumprofilkopf (RK') der Räumfläche (88) und/oder des Zahnsteges (83) kleiner als ein Räumprofilkopf (RK) der Räumschneide (86) ist.

8. Werkzeug nach Anspruch 6 oder Anspruch 7, bei dem der Gewinde- und Räumzahn (8) in seinem im Windungssinn vorderseitigen Bereich oder im Gewindezahnelement eine Gewindeschneide (85) aufweist,
bei dem insbesondere der vorderseitige Bereich des Gewinde- und Räumzahnes (8) oder das Gewindezahnelement eine im Windungssinn gesehen der Gewindeschneide (75) nachgeordnete Gewindefurchfläche (84) aufweist, wobei sich die Wirkprofile der Gewindeschneide und der Gewindefurchfläche zu dem, vorzugsweise dem Gewindeprofil entsprechenden, Gewindezahnprofil an dem vorderseitigen Bereich überlagern, wobei zweckmäßigerweise die Gewindefurchfläche (84) radial nach au-βen ansteigt und vorzugsweise in einen oder in den Zahnsteg (83), der insbesondere als Kalibrierbereich dient und/oder ein konstantes Profil oder keine Freiflächen aufweist, übergeht, wobei insbesondere ein Gewindezahnprofilkopf (K') der Gewindefurchfläche (84) und/oder des Zahnsteges (83) kleiner als der Gewindezahnprofilkopf (K) der Gewindeschneide (85).

9. Werkzeug nach einem der Ansprüche 6 bis 8, bei dem die Zahnflanken (81, 82) des Gewinde- und Räumzahnes (8) zumindest überwiegend oder vollständig entlang zugehöriger vorderer Gewindezahnflankeneinhüllenden (G1) bzw. hinterer Gewindezahnflankeneinhüllenden (G2) oder ohne Freiflächen verlaufen.

10. Werkzeug nach einem der Ansprüche 6 bis 9 in Kombination mit einem der Ansprüche 1 bis 5, bei dem der Gewindeerzeugungsbereich (4) sowohl wenigstens einen Gewindezahn (7) gemäß einem der Ansprüche 1 bis 5 als auch wenigstens einen Gewinde- und Räumzahn (8) nach einem der Ansprüche 6 bis 9 aufweist, wobei der Gewinde- und Räumzahn (8) im Windungssinn gesehen der letzte Zahn des Gewindeerzeugungsbereiches (4) ist.

11. Werkzeug nach einem der vorhergehenden Ansprüche,

    a) umfassend ferner wenigstens einen Bohrbereich (3) zum Erzeugen eines Kernloches,
    b) wobei der Bohrbereich in einem weiter vorne, insbesondere an einem vorderen oder freien Ende, liegenden Bereich angeordnet ist als der Gewindeerzeugungsbereich,
    c) wobei der Bohrbereich und der Gewindeerzeugungsbereich miteinander starr bewegungsgekoppelt sind und/oder auf einem gemeinsamen Werkzeugträger oder Werkzeugschaft befestigt oder ausgebildet sind, c) wobei der Gewindeerzeugungsbereich radial zur Werkzeugachse weiter nach außen ragt als der Bohrbereich.

12. Verfahren zum Erzeugen eines Gewindes, insbesondere Innengewindes, mit einer vorgegebenen Gewindesteigung und mit einem vorgegebenen Gewindeprofil in einem Werkstück,

    a) bei dem ein Werkzeug nach einem der Ansprüche 1 bis 5 oder nach Anspruch 11 verwendet wird,
    b) bei dem das Werkzeug in einer Arbeitsbewegung während einer ersten Arbeitsphase in das Werkstück bewegt wird,
    c) wobei die Arbeitsbewegung eine Drehbewegung mit einem vorgegebenen Drehsinn um die Werkzeugachse des Werkzeugs und eine gemäß der Gewindesteigung mit der Drehbewegung synchronisierte axiale Vorschubbewegung des Werkzeugs in einer axialen Vorwärtsrichtung axial zur Werkzeugachse umfasst, derart, dass einer vollen Umdrehung des Werkzeugs um die Werkzeugachse ein axialer Vorschub des Werkzeugs um die vorgegebene Gewindesteigung entspricht,
    d) wobei während der Arbeitsbewegung der Gewindeerzeugungsbereich das Gewinde erzeugt,
    e) wobei das Werkzeug in einer an die Arbeitsbewegung anschließenden Abbremsbewegung während einer zweiten Arbeitsphase weiter in das Werkstück in derselben Vorwärtsrichtung wie bei der Arbeitsbewegung bis zu einem Umkehrpunkt bewegt wird,
    f) wobei der axiale Vorschub des Werkzeugs bezogen auf eine volle Umdrehung zumindest während eines Teils der Abbremsbewegung betragsmäßig kleiner als die Gewindesteigung ist und beim Umkehrpunkt Null ist,
    g) wobei der Gewindezahn (7), und im Falle eines Werkzeuges nach einem der Ansprüche 6 bis 10 auch der Gewinde- und Räumzahn (8), während der Abbremsbewegung wenigstens eine, insbesondere geschlossene oder ringförmige, Umlauf- oder Umfangsnut in dem Werkstück erzeugt,
    h) wobei eine Reibung des Gewindezahnes (7) an der Werkstückoberfläche sowohl an seiner vorderen Flankenfreifläche (71) als auch an seiner hinteren Flankenfreifläche (72) während der Arbeitsbewegung und auch während der Abbremsbewegung vermieden oder zumindest stark reduziert ist.

13. Verfahren nach Anspruch 12, bei dem der nach Erreichen des Umkehrpunktes eine Reversierbewegung des Werkzeuges eingeleitet wird, mit der das Werkzeug aus dem Werkstück bewegt wird,

    wobei die Reversierbewegung zunächst eine erste Reversierphase, mit der der Gewindeerzeugungsbereich des Werkzeugs zurück in den Gewindegang des erzeugten Gewindes geführt wird, und im Anschluss eine zweite Reversierphase, während der der Gewindeerzeugungsbereich durch den Gewindegang aus dem Werkstück nach außen geführt wird, umfasst,

wobei insbesondere eine Reibung des Gewindezahnes (7) an der Werkstückoberfläche sowohl an seiner vorderen Gewindezahnfreifläche (71) als auch an seiner hinteren Gewindezahnfreifläche (72) während der Reversierbewegung vermieden oder zumindest stark reduziert ist.

14. Verfahren zum Erzeugen eines Gewindes, insbesondere Innengewindes, mit einer vorgegebenen Gewindesteigung und mit einem vorgegebenen Gewindeprofil in einem Werkstück,

    a) bei dem ein Werkzeug nach einem der Ansprüche 6 bis 11 verwendet wird,
    b) bei dem das Werkzeug in einer Arbeitsbewegung während einer ersten Arbeitsphase in das Werkstück bewegt wird,
    c) wobei die Arbeitsbewegung eine Drehbewegung mit einem vorgegebenen Drehsinn um die Werkzeugachse des Werkzeugs und eine gemäß der Gewindesteigung mit der Drehbewegung synchronisierte axiale Vorschubbewegung des Werkzeugs in einer axialen Vorwärtsrichtung axial zur Werkzeugachse umfasst, derart, dass einer vollen Umdrehung des Werkzeugs um die Werkzeugachse ein axialer Vorschub des Werkzeugs um die vorgegebene Gewindesteigung entspricht,
    d) wobei während der Arbeitsbewegung der Gewindeerzeugungsbereich das Gewinde erzeugt,
    e) wobei das Werkzeug in einer an die Arbeitsbewegung anschließenden Abbremsbewegung während einer zweiten Arbeitsphase weiter in das Werkstück in derselben Vorwärtsrichtung wie bei der Arbeitsbewegung bis zu einem Umkehrpunkt bewegt wird,
    f) wobei insbesondere der axiale Vorschub des Werkzeugs bezogen auf eine volle Umdrehung zumindest während eines Teils der Abbremsbewegung betragsmäßig kleiner als die Gewindesteigung ist und beim Umkehrpunkt Null ist,
    g) wobei nach Erreichen des Umkehrpunktes eine Reversierbewegung des Werkzeuges eingeleitet wird, mit der das Werkzeug aus dem Werkstück bewegt wird,
    wobei die Reversierbewegung zunächst eine erste Reversierphase, mit der der Gewindeerzeugungsbereich des Werkzeugs zurück in den Gewindegang des erzeugten Gewindes geführt wird, und im Anschluss eine zweite Reversierphase, während der der Gewindeerzeugungsbereich durch den Gewindegang aus dem Werkstück nach außen geführt wird, umfasst,
    h) wobei der Gewinde- und Räumzahn (8) während der Reversierbewegung mit seinem Räumelement (86, 88) Fremdkörper, insbesondere Späne oder Spanwurzeln, vor oder aus dem Gewinde ausräumt und insbesondere auch die Werkstückoberfläche, insbesondere im Gewinde, glätten kann und/oder insbesondere keine Zwischenspalte bei dem Räumvorgang zur Gewindeganginnenwand entstehen lässt.

15. Verfahren nach einem der Ansprüche 13 bis 14, wobei während der Abbremsbewegung die axiale Vorschubbewegung abhängig vom Drehwinkel der Drehbewegung des Werkzeugs gemäß einer vorab gespeicherten eindeutigen Beziehung, insbesondere einer Funktion oder einer Abfolge von Funktionen, zwischen dem axialen Vorschub des Werkzeugs und dem Drehwinkel gesteuert wird,

    bei dem insbesondere während der Abbremsbewegung in mehreren aufeinanderfolgenden Abbremsschritten zueinander unterschiedliche Beziehungen, insbesondere Funktionen, zwischen dem axialen Vorschub des Werkzeugs und dem Drehwinkel gewählt oder eingestellt werden,
    wobei zweckmäßigerweise, während mehreren Abbremsschritten die axiale Eindringtiefe oder der axiale Vorschub eine lineare Funktion des Drehwinkels ist und/oder bei dem die Steigung, d.h. die Ableitung der axialen Eindringtiefe oder des axialen Vorschubs nach dem Drehwinkel, in jedem dieser Abbremsschritte konstant ist und betragsmäßig von einem Abbremsschritt zu einem darauffolgenden Abbremsschritt abnimmt.

## Claims

1. Tool for generating a thread, in particular an internal thread,

    a) wherein the tool is rotatable about a tool axis (A) extending through the tool and is axially movable relative to the tool axis,
    b) wherein the tool comprises at least one thread generating area (4),
    c) wherein the thread generating area (4) runs along a helix (G1, G2) with a predetermined thread pitch angle ($\delta$) and a predetermined winding direction (W) of the thread (50) to be generated and has an effective profile which corresponds to the thread profile of the thread to be generated,
    d) wherein the thread generating area has at least one threading tooth (7) which

        d1) has a threading tooth profile (GP) with a front threading tooth profile flank (F1) and a rear threading tooth profile flank (F2),
        d2) has a front flank free surface (71) directly adjoining the front threading tooth profile flank (F1) on a front threading tooth flank and

d3) has a rear flank free surface (72) directly adjoining the rear threading tooth profile flank (F2) on a rear threading tooth flank,

e) wherein the front flank free surface (71) is exposed or recessed rearwardly relative to a front threading tooth flank envelope (G1) extending along or parallel to the helix and through the front threading tooth profile flank (F1),

f) wherein the rear flank free surface (72) is forwardly offset or exposed with respect to a rear transverse plane (E2) which is directed perpendicularly to the tool axis (A) and passes through the rearmost point of the threading tooth profile (GP) or the rear threading tooth profile flank (F2),

g) wherein the helix (G1, G2) is inclined rearwardly relative to the rear transverse plane (E2) by the thread pitch angle ($\delta$),

**characterised in that**

h) the rear flank free surface (72) is inclined or set back relative to a rear threading tooth flank envelope (G2) extending along or parallel to the helix by a rear flank clearance angle ($\alpha$2) which is greater than the thread pitch angle ($\delta$) and lies in an interval between the thread pitch angle ($\delta$) and 6°.

2. Tool according to claim 1, in which the front flank free surface (71) is inclined or set back relative to the front threading tooth flank envelope (G1) by a front flank clearance angle ($\alpha$1) which generally lies in an interval between 0° and 10°, in particular between 0° and 2°.

3. Tool according to claim 1 or claim 2,

in which the rear flank free surface (72) is inclined or set back with respect to the rear transverse plane (E2) by an angle ($\alpha$2 -$\delta$) which generally lies in an interval between 0° and 6°, in particular between 2° and 5° and/or

where the rear flank clearance angle ($\alpha$2) is in an interval between 4° and 5°.

4. Tool according to any of the preceding claims,

in which the threading tooth profile (GP) of the threading tooth (7) is an intermediate or preliminary profile, for example a lead-in or lead-off profile, which is superimposed in particular with further threading tooth profiles of further thread teeth to form an overall knitted profile, and/or

in which the threading tooth (7) comprises at least one thread cutting edge (75) and optionally comprises a thread through surface downstream of the thread cutting edge (75).

5. Tool according to any of the preceding claims, in which the threading tooth (7) has a free surface (74) on its tooth back adjoining a threading tooth profile head (K) of the threading tooth profile (GP) in the opposite direction to the direction of winding, which free surface (74) preferably tapers to an essentially linear tooth web (73).

6. Tool for generating a thread with a thread profile according to any of the preceding claims,

a) wherein the thread generating area has at least one threading and broaching tooth (7) which

a1) has a threading tooth element (85, 84) with a threading tooth profile (GP, GP') as an active profile for generating or reworking the thread in a front region, as seen in the winding direction,

d2) and, in a rear region viewed in the winding direction, a broaching element (86, 88) for broaching the produced thread during a reversing movement, the broaching element (86, 88) having a broaching profile (RP) as an active profile which corresponds to the thread profile of the produced thread and/or to the threading tooth profile (GP, GP') on its front region.

7. Tool according to claim 6, in which the broaching element of the threading and broaching tooth (8) has a broaching cutting edge (86) which has a broaching profile (RP) which corresponds to the threading tooth profile (GP, GP') of the threading tooth element (85, 84), in particular has an active profile which is the same as the threading tooth profile (GP) or is the same at least on broaching profile flanks of the broaching profile, in which, in particular, the broaching element has a broaching surface (88) which, viewed in the opposite direction to the direction of winding, is arranged downstream of the broaching blade (86) in a furrowing manner, the effective profiles of the broaching blade and of the broaching surface being superimposed to form the overall broaching profile (RP') of the broaching element, wherein the broaching surface (84) expediently rises radially outwards and merges into a tooth web (83), which in particular has a constant profile or no free surfaces, wherein in particular a broaching profile head (RK') of the broaching surface (88) and/or of the tooth web (83) is smaller than a broaching profile head (RK) of the broaching cutting edge (86).

8. Tool according to claim 6 or claim 7, in which the threading and broaching tooth (8) has a thread cutting edge (85) in its front region in the winding direction or in the threading tooth element,

in which, in particular, the front region of the threading and broaching tooth (8) or the threading tooth element has a thread-forming surface (84) which, viewed in the direction of winding, is arranged downstream of the thread cutting edge (75), the effective profiles of the thread cutting edge and of the thread-forming surface overlapping to form the threading tooth profile, which preferably corresponds to the thread profile, on the front region,

wherein expediently the thread-forming surface (84) rises radially outwards and preferably merges into or into the tooth web (83), which in particular serves as a calibrating region and/or has a constant profile or no free surfaces, wherein in particular a threading tooth profile head (K') of the thread-forming surface (84) and/or of the tooth web (83) is smaller than the threading tooth profile head (K) of the thread cutting edge (85).

9. Tool according to any of claims 6 to 8, in which the tooth flanks (81, 82) of the threading and broaching tooth (8) run at least predominantly or completely along associated front threading tooth flank envelopes (G1) or rear threading tooth flank envelopes (G2) or without free surfaces.

10. Tool according to any of claims 6 to 9 in combination with any one of claims 1 to 5, wherein the thread generating area (4) comprises both at least one threading tooth (7) according to any of claims 1 to 5 and at least one threading and broaching tooth (8) according to any of claims 6 to 9, the threading and broaching tooth (8) being the last tooth of the thread generating area (4) as seen in the winding direction.

11. Tool according to any of the preceding claims,

a) further comprising at least one drilling area (3) for creating a core hole,
b) wherein the drilling area is located in an area further forward, in particular at a front or free end, than the thread generating area,
c) wherein the drilling area and the thread generating area are rigidly coupled to each other for movement and/or are fastened or formed on a common tool carrier or tool shank,
c) wherein the thread generating area projects radially outwards from the tool axis further than the drilling area.

12. Method for generating a thread, in particular an internal thread, with a predetermined thread pitch and with a predetermined thread profile in a workpiece,

a) in which a tool according to any of claims 1 to 5 or according to claim 11 is used,
b) in which the tool is moved into the workpiece in a working movement during a first working phase,
c) wherein the working movement comprises a rotary movement with a predetermined direction of rotation about the tool axis of the tool and an axial feed movement of the tool synchronised with the rotary movement according to the thread pitch in an axial forward direction axially to the tool axis in such a way that an axial feed of the tool by the predetermined thread pitch corresponds to a full rotation of the tool about the tool axis,
d) whereby during the working movement the thread generating area generates the thread,
e) wherein the tool is moved further into the workpiece in the same forward direction as during the working movement up to a reversal point in a braking movement following the working movement during a second working phase,
f) wherein the axial feed of the tool in relation to a full revolution is smaller in amount than the thread pitch at least during part of the braking movement and is zero at the reversal point,
g) wherein the threading tooth (7), and in the case of a tool according to any of claims 6 to 10 also the threading and broaching tooth (8), produces at least one, in particular closed or annular, circumferential or peripheral groove in the workpiece during the braking movement,
h) wherein friction of the threading tooth (7) on the workpiece surface both on its front flank free surface (71) and on its rear flank free surface (72) is avoided or at least greatly reduced during the working movement and also during the braking movement.

13. The method according to claim 12, in which, after reaching the reversal point, a reversing movement of the tool is initiated, with which the tool is moved out of the workpiece,

wherein the reversing movement first comprises a first reversing phase, with which the thread generating area of the tool is guided back into the thread flight of the produced thread, and subsequently a second reversing phase, during which the thread generating area is guided out of the workpiece through the thread flight, wherein, in particular, friction of the threading tooth (7) on the workpiece surface both on its front threading tooth free surface (71) and on its rear threading tooth free surface (72) is avoided or at least greatly reduced during the reversing movement.

14. Method for generating a thread, in particular an internal thread, with a predetermined thread pitch and with a predetermined thread profile in a workpiece,

a) in which a tool according to any of claims 6 to 11 is used,

b) in which the tool is moved into the workpiece in a working movement during a first working phase,

c) wherein the working movement comprises a rotary movement with a predetermined direction of rotation about the tool axis of the tool and an axial feed movement of the tool synchronised with the rotary movement according to the thread pitch in an axial forward direction axially to the tool axis in such a way that an axial feed of the tool by the predetermined thread pitch corresponds to a full rotation of the tool about the tool axis,

d) whereby during the working movement the thread generating area generates the thread,

e) wherein the tool is moved further into the workpiece in the same forward direction as during the working movement up to a reversal point in a braking movement following the working movement during a second working phase,

f) wherein in particular the axial feed of the tool in relation to a full revolution is smaller in amount than the thread pitch at least during part of the braking movement and is zero at the reversal point,

g) whereby after reaching the reversal point, a reversing movement of the tool is initiated, with which the tool is moved out of the workpiece, wherein the reversing movement first comprises a first reversing phase, with which the thread generating area of the tool is guided back into the thread flight of the produced thread, and subsequently a second reversing phase, during which the thread generating area is guided out of the workpiece through the thread flight,

h) wherein the threading and broaching tooth (8) during the reversing movement with its broaching element (86, 88) clears foreign bodies, in particular chips or chip roots, from in front of or out of the thread and in particular can also smooth the workpiece surface, in particular in the thread, and/or in particular does not allow any intermediate gaps to occur during the broaching process to the inner wall of the thread.

15. Method according to any of claims 13 to 14, wherein during the braking movement the axial feed movement is controlled depending on the angle of rotation of the rotary movement of the tool according to a pre-stored unique relationship, in particular a function or a sequence of functions, between the axial feed of the tool and the angle of rotation,

in which different relationships, in particular functions, between the axial feed of the tool and the angle of rotation are selected or set, in particular during the braking movement in several successive braking steps,

wherein expediently, during a plurality of deceleration steps, the axial penetration or axial advance is a linear function of the angle of rotation and/or wherein the slope, i.e. the derivative of the axial penetration or axial advance with respect to the angle of rotation, is constant in each of said deceleration steps and decreases in magnitude from one deceleration step to a subsequent deceleration step.

## Revendications

1. Outil pour la réalisation d'un filetage, en particulier d'un filetage intérieur,

a) l'outil pouvant tourner autour d'un axe d'outil (A) passant par l'outil et pouvant se déplacer axialement par rapport à l'axe d'outil,

b) dans lequel l'outil comprend au moins une zone de génération de filetage (4),

c) la zone de production de filet (4) s'étendant le long d'une hélice (G1, G2) avec un angle de pas de filet ($\delta$) prédéterminé et un sens d'enroulement (W) prédéterminé du filet (50) à produire et présentant un profil d'action qui correspond au profil de filet du filet à produire,

d) la zone de production de filet comprenant au moins une dent de filet (7) qui est

d1) présente un profil de denture filetée (GP) avec un flanc de profil de denture filetée avant (F1) et un flanc de profil de denture filetée arrière (F2),

d2) présente une surface de dépouille de flanc avant (71) se raccordant directement au flanc de profil de dent fileté avant (F1) sur un flanc de dent fileté avant et

d3) présente une surface de dépouille de flanc arrière (72) se raccordant directement au flanc de profil de dent fileté arrière (F2) sur un flanc de dent fileté arrière,

e) dans lequel la surface de dépouille de flanc avant (71) est dégagée vers l'arrière ou en retrait par rapport à une enveloppe de flanc de dent filetée avant (G1) qui s'étend le long de la ligne de vis ou parallèlement à celle-ci et à travers le flanc de profil de dent filetée avant (F1),

f) la surface de dépouille de flanc arrière (72) étant décalée vers l'avant ou dégagée par rapport à un plan transversal arrière (E2) qui est dirigé perpendiculairement à l'axe de l'outil (A) et qui passe par le point le plus arrière du profil de dent filetée (GP) ou du flanc de profil de dent filetée arrière (F2),

g) l'hélice (G1, G2) étant inclinée vers l'arrière par rapport au plan transversal arrière (E2) de l'angle d'inclinaison du filetage (δ), **caractérisé en ce que**

h) dans lequel la surface de dépouille de flanc arrière (72) est inclinée ou en retrait par rapport à une enveloppe de flanc de dent de filet arrière (G2) qui s'étend le long de la ligne de vis ou parallèlement à celle-ci, d'un angle de dépouille de flanc arrière (α 2) qui est supérieur à l'angle d'inclinaison de filet (δ) et qui se situe dans un intervalle compris entre l'angle d'inclinaison de filet (δ) et 6°.

2. Outil selon la revendication 1, dans lequel la surface de dépouille de flanc avant (71) est inclinée ou en retrait par rapport à l'enveloppe de flanc de dent filetée avant (G1) d'un angle de dépouille de flanc avant (α 1) qui est généralement compris dans un intervalle entre 0° et 10°, en particulier entre 0° et 2°.

3. Outil selon la revendication 1 ou la revendication 2,

dans lequel la surface de dépouille de flanc arrière (72) est inclinée ou en retrait par rapport au plan transversal arrière (E2) d'un angle (α 2-δ) généralement compris dans un intervalle entre 0° et 6°, en particulier entre 2° et 5°. et/ou

pour lequel l'angle de dépouille du flanc arrière (α 2) se situe dans un intervalle compris entre 4° et 5°.

4. Outil selon l'une des revendications précédentes,

dans lequel le profil de denture filetée (GP) de la denture filetée (7) est un profil intermédiaire ou préliminaire, par exemple un profil d'entame ou de début d'entaille, qui se superpose en particulier à d'autres profils de denture filetée d'autres dents filetées pour former un profil actif global, et/ou

dans lequel la dent de filetage (7) comprend au moins un tranchant de filetage (75) et comprend en option une surface de passage de filetage disposée en aval du tranchant de filetage (75).

5. Outil selon l'une des revendications précédentes, dans lequel le La dent filetée (7) présente sur son dos de dent une surface libre (74) se raccordant à une tête de profil de dent filetée (K) du profil de dent filetée (GP) dans le sens opposé au sens d'enroulement, qui se rétrécit de préférence jusqu'à une nervure de dent (73) essentiellement linéaire.

6. Outil pour réaliser un filetage avec un profil de filetage selon l'une des revendications précédentes,

a) dans lequel la zone de génération de filet comprend au moins une dent de filetage et de brochage (7) qui a1) dans une zone située à l'avant, vu dans le sens de l'enroulement, un élément denté fileté (85, 84) avec un profil denté fileté (GP, GP') comme profil actif pour la réalisation ou le réusinage du filetage, d2) et, dans une zone arrière vue dans le sens de l'enroulement, un élément de dégagement (86, 88) pour le dégagement du filet produit lors d'un mouvement d'inversion, l'élément de dégagement (86, 88) présentant un profil de dégagement (RP) comme profil actif, qui correspond au profil de filet du filet produit et/ou au profil de dent de filet (GP, GP') sur sa zone avant.

7. Outil selon la revendication 6, dans lequel l'élément de brochage de la dent de filetage et de brochage (8) présente une lame de brochage (86) qui présente un profil de brochage (RP) qui correspond au profil de dent de filetage (GP, GP') de l'élément de dent de filetage (85, 84), en particulier qui présente un profil actif identique ou au moins identique sur les flancs du profil de brochage que le profil de dent de filetage (GP), dans lequel, en particulier, l'élément de brochage présente une surface de brochage (88) travaillant par rainage, disposée en aval du tranchant de brochage (86), vu dans le sens opposé au sens d'enroulement, les profils d'action du tranchant de brochage et de la surface de brochage se superposant pour former le profil de brochage (RP') global de l'élément de brochage, la surface de brochage (84) augmentant de manière appropriée radialement vers l'extérieur et se transformant en une barrette dentée (83) qui présente en particulier un profil constant ou aucune surface libre, une tête de profil de brochage (RK') de la surface de brochage (88) et/ou de la barrette dentée (83) étant en particulier plus petite qu'une tête de profil de brochage (RK) de la lame de brochage (86).

8. Outil selon la revendication 6 ou la revendication 7, dans lequel la dent de filetage et de brochage (8) présente un tranchant de filetage (85) dans sa zone située à l'avant dans le sens de l'enroulement ou dans l'élément de dent de filetage,

dans lequel en particulier la zone avant de la dent de filetage et de brochage (8) ou l'élément de dent de filetage présente une surface de passage de filetage (84) disposée en aval de l'arête de filetage (75), vu dans le sens de l'enroulement, les profils d'action de l'arête de filetage et de la surface de passage de filetage se superposant pour former le profil de dent de filetage, correspondant de préférence au profil de filetage, sur la zone avant,

la surface de passage du filet (84) augmentant de manière appropriée radialement vers l'extérieur et se transformant de préférence en une ou en la barrette dentée (83), qui sert en particulier de zone de calibrage et/ou présente un profil constant ou aucune surface libre, une tête de profil de dent de filet (K') de la surface de passage du filet (84) et/ou de la barrette dentée (83) étant en particulier plus petite que la tête de profil de dent de filet (K) de l'arête de filet (85).

9. Outil selon l'une des revendications 6 à 8, dans lequel les flancs de dent (81, 82) de la dent de filetage et de brochage (8) s'étendent au moins principalement ou complètement le long d'enveloppes de flancs de dent de filetage avant (G1) ou d'enveloppes de flancs de dent de filetage arrière (G2) correspondantes ou sans surfaces libres.

10. Outil selon l'une quelconque des revendications 6 à 9, en combinaison avec l'une quelconque des revendications 1 à 5, dans lequel la zone de génération de filet (4) comprend à la fois au moins une dent de filetage (7) selon l'une quelconque des revendications 1 à 5 et au moins une dent de filetage et de brochage (8) selon l'une quelconque des revendications 6 à 9, la dent de filetage et de brochage (8) étant la dernière dent de la zone de génération de filet (4), vue dans le sens d'enroulement.

11. Outil selon l'une des revendications précédentes,

a) comprenant en outre au moins une zone de perçage (3) pour créer un trou de carotte,
b) la zone de perçage étant située dans une zone plus en avant, en particulier à une extrémité avant ou libre, que la zone de génération de filet,
c) la zone de perçage et la zone de production de filet étant couplées rigidement en mouvement l'une à l'autre et/ou étant fixées ou formées sur un porte-outil ou une tige d'outil commun,
c) la zone de production de filet dépassant radialement vers l'extérieur par rapport à l'axe de l'outil plus loin que la zone de perçage.

12. Procédé de réalisation d'un filetage, en particulier d'un filetage intérieur, avec un pas de filetage prédéterminé et avec un profil de filetage prédéterminé dans une pièce,

a) dans lequel on utilise un outil selon l'une des revendications 1 à 5 ou selon la revendication 11,
b) dans lequel l'outil est déplacé dans la pièce à usiner dans un mouvement de travail pendant une première phase de travail,
c) le mouvement de travail comprenant un mouvement de rotation avec un sens de rotation prédéterminé autour de l'axe d'outil de l'outil et un mouvement d'avance axial de l'outil dans une direction axiale vers l'avant axialement par rapport à l'axe d'outil synchronisé avec le mouvement de rotation selon le pas de filetage, de telle sorte qu'à une rotation complète de l'outil autour de l'axe d'outil correspond une avance axiale de l'outil selon le pas de filetage prédéterminé,
d) dans lequel, pendant le mouvement de travail, la zone de production de filet produit le filet,
e) l'outil continuant à être déplacé, dans un mouvement de freinage faisant suite au mouvement de travail, pendant une deuxième phase de travail, dans la pièce à usiner dans la même direction vers l'avant que lors du mouvement de travail jusqu'à un point d'inversion,
f) l'avance axiale de l'outil par rapport à un tour complet étant, au moins pendant une partie du mouvement de freinage, inférieure en valeur absolue au pas de filetage et étant nulle au point d'inversion,
g) la dent de filetage (7), et dans le cas d'un outil selon l'une des revendications 6 à 10, également la dent de filetage et de brochage (8), produisant pendant le mouvement de freinage au moins une rainure circulaire ou circonférentielle, en particulier fermée ou annulaire, dans la pièce à usiner,
h) un frottement de la dent filetée (7) sur la surface de la pièce à usiner étant évité ou au moins fortement réduit aussi bien sur sa surface libre de flanc avant (71) que sur sa surface libre de flanc arrière (72) pendant le mouvement de travail et également pendant le mouvement de freinage.

13. Procédé selon la revendication 12, dans lequel, après avoir atteint le point d'inversion, un mouvement d'inversion de l'outil est amorcé, avec lequel l'outil est déplacé hors de la pièce à usiner,

le mouvement d'inversion comprenant d'abord une première phase d'inversion, avec laquelle la zone de production de filet de l'outil est ramenée dans le pas de vis du filet produit, et ensuite une deuxième phase d'inversion, pendant laquelle la zone de production de filet est guidée vers l'extérieur de la pièce à usiner à travers le pas de vis,
un frottement de la dent filetée (7) sur la surface de la pièce à usiner étant en particulier évité ou au moins fortement réduit pendant le mouvement d'inversion, aussi bien sur sa surface avant de dégagement de la dent filetée (71) que sur sa surface arrière de dégagement de la dent filetée (72).

14. Procédé de réalisation d'un filetage, en particulier d'un filetage intérieur, avec un pas de filetage prédéterminé et avec un profil de filetage prédéterminé dans une pièce à usiner,

> a) dans lequel on utilise un outil selon l'une des revendications 6 à 11,
> b) dans lequel l'outil est déplacé dans la pièce à usiner dans un mouvement de travail pendant une première phase de travail,
> c) le mouvement de travail comprenant un mouvement de rotation avec un sens de rotation prédéterminé autour de l'axe d'outil de l'outil et un mouvement d'avance axial de l'outil dans une direction axiale vers l'avant axialement par rapport à l'axe d'outil, synchronisé avec le mouvement de rotation selon le pas de filetage, de telle sorte qu'à une rotation complète de l'outil autour de l'axe d'outil correspond une avance axiale de l'outil selon le pas de filetage prédéterminé,
> d) dans lequel, pendant le mouvement de travail, la zone de production de filet produit le filet,
> e) l'outil continuant à être déplacé, dans un mouvement de freinage faisant suite au mouvement de travail, pendant une deuxième phase de travail, dans la pièce à usiner dans la même direction vers l'avant que lors du mouvement de travail jusqu'à un point d'inversion,
> f) l'avance axiale de l'outil par rapport à un tour complet étant notamment inférieure en valeur absolue au pas de filetage au moins pendant une partie du mouvement de freinage et étant nulle au point d'inversion,
> g) un mouvement d'inversion de l'outil étant amorcé après avoir atteint le point d'inversion, avec lequel l'outil est déplacé hors de la pièce à usiner,
> le mouvement d'inversion comprenant d'abord une première phase d'inversion, avec laquelle la zone de production de filet de l'outil est ramenée dans le pas de vis du filet produit, et ensuite une deuxième phase d'inversion, pendant laquelle la zone de production de filet est guidée vers l'extérieur de la pièce à usiner à travers le pas de vis,
> h) la dent de filetage et de brochage (8) évacuant pendant le mouvement d'inversion avec son élément de brochage (86, 88) des corps étrangers, en particulier des copeaux ou des racines de copeaux, devant ou hors du filetage et pouvant en particulier également lisser la surface de la pièce à usiner, en particulier dans le filetage, et/ou en particulier ne laissant pas apparaître d'interstices lors du processus de brochage par rapport à la paroi intérieure du pas de vis.

15. Procédé selon l'une des revendications 13 à 14, dans lequel, pendant le mouvement de freinage, le mouvement d'avance axiale est commandé en fonction de l'angle de rotation du mouvement de rotation de l'outil selon une relation univoque préenregistrée, notamment une fonction ou une séquence de fonctions, entre l'avance axiale de l'outil et l'angle de rotation,

> dans lequel, en particulier pendant le mouvement de freinage en plusieurs étapes de freinage successives, des relations, en particulier des fonctions, différentes les unes des autres sont choisies ou réglées entre l'avance axiale de l'outil et l'angle de rotation,
> dans lequel, de manière appropriée, pendant plusieurs étapes de freinage, la profondeur de pénétration axiale ou l'avance axiale est une fonction linéaire de l'angle de rotation et/ou dans lequel la pente, c'est-à-dire la dérivée de la profondeur de pénétration axiale ou de l'avance axiale par rapport à l'angle de rotation, est constante dans chacune de ces étapes de freinage et diminue en valeur absolue d'une étape de freinage à une étape de freinage suivante.

FIG 1

# FIG 2

FIG 3

FIG 4

FIG 5

FIG 6

FIG 7

EP 3 710 194 B1

FIG 8

37

FIG 9

FIG 10

FIG 11

FIG 12

FIG 13

FIG 14

**FIG 15**

**FIG 16**

**FIG 17**

FIG 18

FIG 19

FIG 20

FIG 21

FIG 22

FIG 23

FIG 24

FIG 25

# FIG 26

EP 3 710 194 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005022503 A1
- DE 102016008478 A1

- US 20100221077 A

**In der Beschreibung aufgeführte Nicht-Patentliteratur**

- Handbuch der Gewindetechnik und Frästechnik. Verlag: Publicis Corporate Publishing, 2004
- EMUGE-Handbuch. 181-298
- EMUGE-Handbuch. 325-372
- EMUGE-Handbuch. 373-404
- EMUGE-Handbuch. 250, , 251, , 284, , 285
- EMUGE-Handbuch. 322
- MUGE-Handbuch. 255
- EMUGE-Handbuch. 299-324
- EMUGE-Handbuch. 308, , 309
- EMUGE-Handbuch. 310
- EMUGE-Handbuch. 281
- EMUGE-Handbuch. 357-359
- EMUGE-Handbuch. 161-179
- EMUGE-Handbuch. 354
- EMUGE-Handbuch. 355